(19) **Europäisches Patentamt**

**European Patent Office**

**Office européen des brevets**

(11) **EP 1 662 447 A1**

(12) **EUROPEAN PATENT APPLICATION**

(43) Date of publication:
31.05.2006 Bulletin 2006/22

(51) Int Cl.:
*G07F 17/32* (2006.01)

(21) Application number: **05257272.4**

(22) Date of filing: **25.11.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU** | (71) Applicant: **Aruze Corp.**<br>**Tokyo (JP)** |
| (30) Priority: **29.11.2004 JP 2004344320**<br>**29.11.2004 JP 2004344321**<br>**29.11.2004 JP 2004344322** | (72) Inventor: **Okada, Kazuo,**<br>**c/o Aruze Corporation**<br>**Tokyo 135-0063 (JP)**<br><br>(74) Representative: **Nicholls, Michael John**<br>**J.A. Kemp & Co.**<br>**14 South Square**<br>**Gray's Inn**<br>**GB-London WC1R 5JJ (GB)** |

(54) **Gaming machine**

(57) There is provided a gaming machine which can provide an image and/or sound in relation to an object to be read at a predetermined timing. For example, the predetermined timing may comprise timing when a base game state is shifted to a special gaming state. If the player plays the game as one of figures 13A through 13C is placed on a slot machine 1, the slot machine 1 reads a type of the figure from an IC tag buried therein and an effect image is specified based on the read type of the figure as the image corresponds to an appearance of the figure. When the game state is shifted to the bonus game or when the game state is shifted to the high probability mode, notification effect may be performed to notify the player.

Fig. 4A

**Description**

The present invention relates to a gaming machine with which a game is played in a plurality of game states including a base game state and a special game state, and more particularly relates to a gaming machine with which an image corresponding to an object to be read is displayed when the game state is shifted to the special game state where more advantageous condition is provided to a player such that the player is given a greater sense of expectation to the game and that the game with a variety of features can be realized. Further, the present invention relates to a gaming machine with which various sounds corresponding to various game states may be generated at predetermined timing in the game, and in particular a gaming machine which outputs a sound associated with the object to be read. And the present invention relates to a gaming machine comprising display control means for displaying an image based on the game state, and in particular a gaming machine which can display an image to be changed so as to correspond to the object to be read in accordance with a variable parameter to vary based on a play history of the object to be read.

Conventionally, a gaming machine such as a slot machine and a card game machine may start to perform a game as a player inserts game media such as medals into the gaming machine and the game result is subsequently displayed on the basis of a result of internal lottery conducted inside the gaming machine (for example, in the slot machine, predetermined symbols are stopped and displayed along a winning line, and in a card game machine, the type of drawn card is displayed). Then, the game is configured such that game media are paid out in a predetermined amount on the basis of the game result.

In the above-described gaming machine, it is generally made that the game is composed of a plurality of game states so that the game does not become monotonous and the game states may be frequently changed at a predetermined timing. For example, the slot machine shown in Japanese Unexamined Patent Publication No. 2002-53787 is provided with a bonus game state which is started when a predetermined symbol is stopped and displayed in a predetermined place, in addition to a base game state. In general, such a bonus game is set to be in a game state which is more advantageous to a player than usual and the player is able to obtain more game media. Then, after shifting to the bonus game, certain images and music are outputted in order to notify the player of such shift.

It is also generally made that various effects are provided according to the game state. For example, Japanese Unexamined Patent Publication No. 2004-57221 has disclosed a gaming machine which can add effects of sound and illumination by a lighting system to the game state if there is a chance to get a when the last reel is stopped while a plurality of rotating reels are stopped in a predetermined order. Therefore, it may be possible to provide more attractive aspect of the game to the player.

However, in the slot machine disclosed in the above-described Japanese Unexamined Patent Publication Nos. 2002-53787 or 2004-57221, contents of the effects to notify in advance that the game state will be changed or that the game state has been changed are originally set for each gaming machine. To be more specific, even when the game state is about to shift to the bonus game such as a game state more advantageous to the player, the gaming machine only provides an image or a sound effect independent from an actual action by the player such that the player may not feel excitements of the game or lose interest to the game.

Meanwhile, in some of the conventional gaming machines, the player buy cards and figures separately beforehand and plays the game with such cards -or figures as a means by which the player is allowed to participate in the game. These gaming machines are only designed to conduct the game by allowing the information previously stored in each card or figure to be uniformly reflected in parameters and others of characters and items which appear on the display.

However, in the future, it will be desired that cards, figures and others are not only used for allowing the player to participate in the game, but also that the game is more diversified so that these cards, figures and others are not simply reflected only on characters, items and others of the game.

In the present invention, the form of notifying the game result may be changed according to an object to be read, which is used by the player. Therefore, the gaming machine may provide a new effect based on contents of the information which is related to an actual action by the player. The gaming machine also provides to the player a feeling that the object to be read affects the game result. Therefore, according to the present invention, the object to be read may provide the gaming machine with a variety of game. For example, it is possible to make the outputted sound corresponding to the object to be read based on the game state. Also, the effect may be made with gradually varying images corresponding to the number of times the object has been used.

In order to achieve the above described object, according to the present invention, there is provided a gaming machine (for example, a slot machine 1) comprising: image display means (for example, a lower liquid crystal display 4) for displaying an image; game control means for conducting a game with a plurality of game states including a base game state and a special game state which provides conditions more advantageous to a player than a base game state; and display control means for controlling the display of the image display means on the basis of the game state conducted by the game control means, wherein the gaming machine comprises: an object to be read which stores predetermined identification information (for example, figure ID) and reading means (for example, IC tag reader/writer 107) which reads the identification information stored in the object to be read, and wherein the display control means controls the image display means on the basis of the identification information read by the reading means in such a way that an image (for example, the effect images 130-133) corresponding to the object to be read can be displayed, upon shifting from the base game state to the special game state.

Further, there is provided a gaming machine (for example, a slot machine 1) comprising: image display means (for example, a lower liquid crystal display 4) for displaying an image; and display control means for controlling the display of the image display means on the basis of the game state, wherein the gaming machine further comprises: an object to be read (for example, IC tag 93) which stores predetermined identification information (for example, figure ID) and reading means (for example, IC tag reader / writer 107) which reads the identification information stored in the object to be read; history storing means (for example, IC tag 93) for storing play history of the object to be read; renewal means for renewing the play history stored in the history storing means according to the progress of a game, parameter storing means for storing variable parameters corresponding to the object to be read; and parameter varying means for varying the variable parameters at a plurality of levels on the basis of the play history renewed by the renewal means, wherein the display control means controls the image display means so as to display an image (for example, preliminary notice effect images 320-325) corresponding to the object to be read and the variable parameters at a predetermined timing on the basis of the identification information read by the reading means and the variable parameters stored in the variable parameter storing means.

Further, in this instance, the special game state which provides conditions advantageous to the player includes a "free game state" which allows the player to conduct the game without inserting game media such as medals and a "high probability mode state" in which there is provided a higher probability to obtain a winning combination than in usual or normal state. Then, the conditions to shift the game state from the base game state to the special game state include a case where a predetermined symbol is stopped and displayed at a predetermined place in a slot machine, a case where JP (jackpot) is obtained, a case where the payout ratio has become lower than a predetermined value (for example, 80%), and a case where a predetermined time has passed since the start of a game. Further, the conditions which allow the special game state once transited to return to the base game state include a case where a predetermined symbol is stopped and displayed in a slot machine, a case where the payout ratio exceeds a predetermined value (for example, 90%), a case where a predetermined period of time has elapsed since the beginning of the high probability mode, and a case where a predetermined number of credits have been paid out since the beginning of the high probability mode.

In this instance, the "variable parameter" described in the present specification is defined as a character level in the following embodiments and the character level is to change (or grow) step by step from level 1 to level 4 on the basis of the play history.

(1) A gaming machine (for example, slot machine 1) comprising: image display means (for example, lower liquid crystal display 4) for displaying an image; game control means for conducting a game with a plurality of game states including a base game state and a special game state where more advantageous condition is provided to a player than in the base game state; display control means for controlling the image displayed on the image display means depending on one of the game states in which the game is conducted by the game control means; an object to be read which stores predetermined identification information; and reading means (for example, IC tag reader / writer 107)for reading the identification information stored in the object to be read, wherein the display control means controls the image display means in such a way that the displayed image corresponds to the object to be read based on the identification information read by the reading means as the game state is shifted from the base game state to the special game state.

(2) The gaming machine according to (1), further comprising: image storing means (for example, image ROM)for storing a plurality of images corresponding to various types of objects wherein the various types of objects are used as the object to be read; image information selection means for selecting among the plurality of images the image being composed of image information and corresponding to the identification information stored in the object and read by the reading means among the plurality of images, wherein the display control means controls the image display means so as to display the image being composed of the image information having been selected by the image information selection means.

(3) The gaming machine according to (1) or (2), further comprising: variable display means (for example, variable display windows 21-25) being composed of a plurality of arrays, on which a plurality of symbols are variably displayed, stop control means for controlling the variable display means to display stopped symbols in the arrays and awarding means for providing an award to the player when the symbols stopped in the arrays of the variable display means by the stop control means are in a predetermined combination of winning symbols, wherein a probability of displaying the predetermined combination of winning symbols being stopped by the stop control means in the special game state is higher than a probability thereof in the base game state.

(4) A gaming machine comprising: image display means (for example, lower liquid crystal display 4) for displaying an image; display control means for controlling the image display means based on a game state; an object to be read which stores predetermined identification information, reading means (for example, IC tag reader / writer 107)

for reading the identification information stored in the object to be read; history storing means for storing a play history of the object to be read; renewal means for renewing the play history stored in the history storing means based on a game progress; parameter storing means for storing a variable parameter corresponding to the object to be read; and parameter varying means for varying the variable parameter in response to each of a plurality of levels based on the play history renewed by the renewal means, wherein the display control means controls the image display means in such a way that the image (for example, notification effect images 320-325)corresponding to the object to be read and the variable parameter stored in the variable parameter storing means is displayed at a predetermined timing based on the identification information read by the reading means.

(5) The gaming machine according to claim 4, wherein the object to be read comprises a plurality of types; wherein the image (for example, notification effect images 320-325) corresponding to the object to be read and the variable parameter comprises various kinds corresponding to each of the plurality of types; and wherein the display control means displays one of the various kinds corresponding to the object to be read which stores the identification information read by the reading means (for example, IC tag reader / writer 107).

(6) The gaming machine according to (4) or (5), wherein the variable parameter to vary based on the play history has a different variable pattern for the type of the object to be read.

(7) The gaming machine according to any one from (4) to (6), further comprising lottery means for drawing a lottery of the game, wherein the image (for example, notification effect images 320-325) corresponding to the object to be read and the variable parameter comprises various kinds in response to various levels of the variable parameter, and wherein the display control means displays the image corresponding to the object to be read and the variable parameter based on the lottery result of the lottery means comprising predetermined probabilities set for the plurality of kinds.

(8) The gaming machine according to any one from (4) to (7), further comprising: variable display means (for example, variable display windows 21-25) for displaying variably a plurality of symbols in a plurality of arrays, stop control means for controlling the variable display means to display symbols stopped in response to the lottery result of the lottery means; and awarding means for providing an award to the player when the symbols being stopped by stop control means and appearing in the plurality of arrays of the variable display means are in a predetermined combination of winning symbols, wherein the display control means controls the image display means (for example, lower liquid display 4) in such a way that the image corresponding to the object to be read and the variable parameter is displayed while the symbols are varyingly displayed in the plurality of arrays.

(9) The gaming machine comprising: a sound output means (for example, speakers 5L, 5R) for outputting a sound; sound output control means for controlling the sound output means in response to a game state; an object to be read which stores predetermined identification information (for example, figure ID); reading means (for example, IC tag reader / writer 107) for reading the identification information stored in the object to be read; history storing means for storing the play history of the object to be read; renewal means for renewing the play history stored in the history storing means in response to the progress of a game; parameter storing means for storing a variable parameter corresponding to the object to be read; and parameter varying means for varying the variable parameters in a plurality of levels based on the play history renewed by the renewal means, wherein the sound output control means controls the sound output means in such a way that the sound corresponding to the object to be read and the variable parameter is output at a predetermined timing based on the identification information read by the reading means and the variable parameter stored by the variable parameter storing means.

(10) The gaming machine according to (9), wherein the object to be read comprises a plurality of types, wherein the sound corresponding to the object to be read and the variable parameter comprises various sorts corresponding to each of the plurality of types, and wherein the sound output control means outputs one of the various sorts corresponding to the object to be read which stores the identification information read by the reading means (for example, IC tag reader / writer 107).

(11) The gaming machine according to (9) or (10), wherein the variable parameter to vary in response to the play history has a different variable pattern corresponding to each type of the objects to be read.

(12) The gaming machine according to any one from (9) to (11), further comprising: lottery means for drawing a lottery of the game, wherein the sound corresponding to the object to be read and the variable parameter comprises a plurality of sorts in response to levels of the variable parameter, and wherein the sound output control means outputs the sound corresponding to the object to be read and the variable parameter at a predetermined probability which is set for each of the plurality of sorts based on a lottery result of the lottery means.

(13) The gaming machine according (for example, slot machine 1) to any one from (9) to (12), further comprising: variable display means (for example, variable display windows 21-25) for displaying variably a plurality of symbols in a plurality of arrays; stop control means for controlling the variable display means to display the stopped symbols based on a lottery result of the lottery means; awarding means for providing an award to the player when the stopped symbols appearing in the plurality of arrays of the variable display means by the stop control means are in a predetermined combination of winning symbols, wherein the sound output control means controls the sound output means (for example, speakers 5L, 5R) in such a way that the sound corresponding to the object to be read (for example, IC tag 93) and the variable parameter is output while the symbols are varyingly displayed in the plurality of arrays.

(14) A gaming machine comprising: sound storing means (for example, ROM 51) for storing sound information; sound output means (for example, speakers 5L, 5R) for outputting a sound for a player at a predetermined timing based on the sound information stored in the sound storing means; sound control means for controlling the sound outputted by the sound output means based on a game state; an object to be read which stores predetermined identification information (for example, figure ID); and reading means (for example, IC tag reader / writer 107) for reading the identification information stored in the object to be read, wherein the sound control means controls the sound output means in such a way that the sound output means outputs the sound corresponding to the object to be read in response to the identification information read by the reading means.

(15) The gaming machine according to (14), wherein the object to be read comprises a plurality of types, wherein the sound storing means (for example, ROM 51) stores sound information corresponding to each of the plurality of types; and wherein the sound control means selects a piece of the sound information stored in the sound storing means corresponding to the object to be read which stores the identification information read by the reading means.

(16) The gaming machine according to (14) or (15), further comprising: lottery means for drawing a lottery of the game, wherein the sound control means outputs the sound corresponding to the object to be read based on a lottery result of the lottery means.

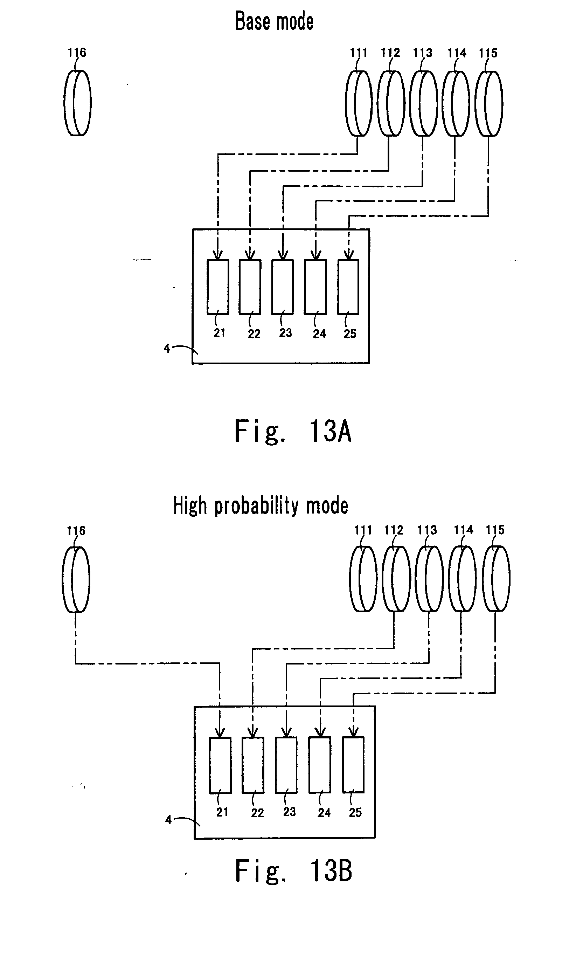

(17) The gaming machine according to any one from (14) to (15), wherein the object to be read comprises a storage medium attached to a member (for example, figures 13A-13C) expressing a predetermined character (for example, warrior man, witch and female fortune teller) and wherein the sound corresponding to the object to be read is a sound associated with an appearance of the character.

(18) The gaming machine according to (17), wherein the sound control means controls the sound output means (for example, speakers 5L, 5R) in such a way that help information (for example, hint for selecting options in a bonus game) to assist the player with the game is provided by outputting the sound.

(19) A gaming machine performing a game including a base game state and a special game state in which more advantageous condition is provided to a player based on identification information, the gaming machine comprising: a reading device for reading the identification information from an object to be read which stores the identification information; a display device for displaying an image concerning the game, wherein the identification information corresponds to an appearance of the object to be read; wherein the image corresponding to the identification information is displayed on the display device when the base game state is shifted to the special state.

(20) The gaming machine according to (19), further comprising: a storage device for storing image information of the image corresponding to the identification information, wherein the image of the image information is displayed as the image information is extracted in response to the identification information.

(21) The gaming machine according to (19) or (20), wherein the display device comprises a variable display devices including a plurality of arrays, wherein in the game an award is provided to the player based on a combination of symbols appearing when the variable display device is stopped in each array in the base game state and the special game state, wherein the game is controlled in such a way that a probability to provide the award in the special game state is higher than a probability to provide the award in the base state.

(22) The gaming machine according to any one from (19) to (21), further comprising: a sound output device, wherein the sound output device outputs a sound corresponding to the identification information, which is synchronized with displaying the image.

(23) The gaming machine according to any one from (19) to (22), wherein the outputted sound is associated with an appearance of the object to be read and includes help information to assist the player in the game.

(24) The gaming machine according to any one from (19) to (23), wherein the object to be read stores a variable parameter, wherein the reading device reads the variable parameter, wherein the image display device displays the image corresponding to the identification information and the variable parameter, which varies independently from the appearance of the object to be read.

(25) The gaming machine according to any one from (19) to (24), wherein the variable parameter is renewed as the game is terminated, and wherein the reading device writes the renewed variable parameter into the object to be read.

(26) A gaming system comprising: a gaming machine performing a game including a base game state and a special state where more advantageous condition is provided to a player; and an object to be read which provides predetermined condition to the game by being set on the gaming machine, wherein the object to be read stores identification information corresponding to an appearance of the object and history information about how the object has been used in the game, wherein the gaming machine comprising: a reading device for reading the identification information and the history information from the object to be read; a display device for displaying an image concerning the game; a sound generating device for generating a sound concerning the game; and a writing device for writing the history information on the object to be read, the history information having been renewed at a timing of termination of the game, wherein the image and the sound corresponding to the identification information are respectively displayed on the display device and generated from the sound generating device when the base game state is shifted to the special state; and wherein the history information is renewed independently from the appearance of the object to be read.

Further, the gaming machine comprising the variable display means include a slot machine comprising a mechanical reel as well as a slot machine comprising a video reel which will be explained as the following embodiment.

In the game machine according to (1), it may be possible for the player to recognize that the game state has been shifted to the special game state since the image display means displays the image corresponding to the object to be read based on the identification information read by the reading means as the game state is shifted from the base game state to the special game state. Therefore, the player may feel that the shift to the special game state is obtained by using the object to be read. And it may be possible to increase the opportunities for the player to use the object to be read and the player may feel more expectation so as to have more desired to play the game. Further, a variety of effects corresponding to the object to be read are provided to the player such that the player may not be bored with the game.

In the game machine according to (2), it may be possible for the player to play the game by referring to a notification image of the special game state corresponding to the object to be read since the image information corresponding to the object to be read storing the identification information is selected by the image information selection means based on the identification information read by the reading means while the object to be read comprises a plurality of types of objects. Also the player can play the game with a variety of game states in which varying notification images may be displayed as the game is played with another type of object to be read such that the gaming machine can prevent the player from being bored. The notification image further can be selected directly by choosing the object to be read by the player, thereby making it possible to provide the game with high gaming excitement which can satisfy various players.

In the game machine according to (4), it may be possible for the player to play the game with effects of various images corresponding to the object to be read since the image display means displays the image corresponding to the object to be read and the variable parameter stored in the variable parameter storing means at a predetermined timing based on the identification information read by the reading means as the variable parameter is varied in response to each of a plurality of levels in the game progress based on the play history renewed by the renewal means. The player is able to play the game with effects of various images corresponding to the object to be read which is used in the game so as not to be bored with the game due to a-diversified game variety.

In the game machine according to (5), it may be possible for the player to play the game with effects of various images corresponding to the object to be read since the object to be read comprises a plurality of types of objects and the display control means displays one of the plurality of kinds corresponding to the object to be read which stores the identification information read by the reading means. It may be possible for the player to play the game with a variety of game states as the contents of the effects may vary at each time when the game is conducted with a plurality of objects to be read.

In the game machine according to (6), it may be possible for the player to select a variable pattern of variable parameter from many kinds of patterns since the variable parameter to vary based on the play history has different variable patterns for the types of the objects to be read. Therefore, it may be possible to provide the game with high gaming excitement which can satisfy various players.

In the game machine according to (7), it may be possible for the player to have expectation to have more advantageous game result at this time by referring to the image corresponding to the object to be read since a plurality of kinds of respective images corresponding to respective objects to be read and respective variable parameters are displayed based on the lottery results of the lottery means wherein respective probabilities are set for the plurality of kinds of respective images. Also it may be possible to provide a variety of games.

In the game machine according to (8), it may be possible for the player to have expectation that the combination of symbols stopped and displayed at this time may be a predetermined combination advantageous to the player since the image corresponding to the object to be read and the variable parameter is displayed while the symbols are varyingly displayed in the plurality of arrays of the so-called slot machine. Therefore, it may be possible for the player to play the game according to various image effects corresponding to the object to be read which is used in the game. Then, it may be possible to prevent the player from being bored since the game has more variety.

In the game machine according to (9), it may be possible for the player to play the game according to various sound effects corresponding to the object to be read which is used in the game since the sound corresponding to the object to be read and the variable parameter is outputted at a predetermined timing based on the identification information read by the reading means and the variable parameter as the variable parameter is varied according to the plurality of levels corresponding to the object to be read based on the play history that is renewed according to the game progress by the renewal means. Then, it may be possible to prevent the player from being bored since the game has more variety.

In the game machine according to (9), it may be possible for the player to play the game according to various sound effects corresponding to the object to be read which is used in the game since the object to be read comprises a plurality of sorts and one of the various sorts of sounds is outputted wherein the one corresponds to the object to be read which stores the identification information read by the reading means. Also, the player can play games with a variety of game states such that the type of sound in each game may vary as a plurality of types of objects to be read are used. Therefore, the player may not be bored.

In the game machine according to (11), it may be possible for the player to select a variable pattern of variable parameters among various kinds of patterns with his hand since the variable parameter to vary in response to the play history has a different variable pattern corresponding to each type of the objects to be read. Therefore, it may be possible to provide the game with high gaming excitement which can satisfy various players.

Also, in the game machine according to (12), it may be possible for the player to have expectation that the game result may be advantageous at this time by referring to the outputted sound since the sound corresponding to the object to be read and the variable parameter is outputted at a predetermined probability which is set for each of the plurality of sorts of sounds based on the lottery result of the lottery means. Therefore, it may be possible for the gaming machine to provide a variety of game.

Also, in the game machine according to (13), it may be possible for the player to have expectation that this combination of symbols stopped and displayed may be a combination advantageous to the player since the sound corresponding to the object to be read and the variable parameter is outputted while the symbols are varyingly displayed in the plurality of arrays with the so-called slot machine displaying a plurality of symbols variably. Then, it may be possible to prevent the player from being bored since the game has more variety.

In the game machine according to (14), it may be possible for the player to recognize the game state of the gaming machine by referring to the sound corresponding to the object to be read since the sound output means outputs the sound corresponding to the object to be read in response to the identification information read by the reading means. Therefore, the player is able to play the game in a new game aspect in which the player can listen to a sound corresponding to the object to be read which is used by the player himself. Also, a variety of effects may be conducted corresponding to the object to be read so that the player may not be bored.

In the game machine according to (15), it may be possible for the player to play the game, listening to a sound corresponding to the object to be read since the object to be read comprises a plurality of types of the objects and the sound is outputted by selecting the sound information thereof among a plurality of types of sound information corresponding to the object to be read among the plurality of types of objects to be read based on the identification information read by the reading means. Also, the player can play games with a variety of game states such that the type of sound in each game may vary as a plurality of types of objects to be read are used. Therefore, the player may not be bored. Further, it may be possible for the player to select the type of sound as the player chooses the object by himself such that it may be possible to provide the game with high gaming excitement which can satisfy various players.

In the game machine according to (15), it may be possible for the player to recognize the transition of the game state which becomes more advantageous to the player by referring to the image corresponding to the object to be read in the slot machine since the image corresponding to the object to be read is displayed based on the identification information of the object to be read which is read by the reading means as the game state is shifted to a game state where the probability that the combination of winning symbols are stopped and displayed is higher than in the base state with the so-called slot machine, in which a plurality of symbols can be variably displayed. Therefore, the player can feel that the game state advantageous to the player with the slot machine is obtained by using the object to be read such that it may be possible for the player to use the object to be read more often and the player may have higher expectation and more desire to play the game. Also it may be possible to prevent the player from being bored by providing a variety of effects corresponding to the objects to be read.

Also, in the game machine according to (16), it may be possible for the player to recognize the lottery result of the game from the sound corresponding to the object to be read which is used in the game since the sound corresponding to the object to be read is outputted based on the lottery result of the lottery means. Then, it may be possible to prevent the player from being bored since a variety of effects corresponding to the object to be read are made.

Also, in the game machine according to (17), it may be possible to provide a new effect as if the character were speaking to the player since the sound output means outputs sound (or voice) associated with an appearance of the character wherein the object to be read comprises a storage medium attached to the member expressing a predetermined character. Further, the character can be changed directly with the hand of the player, thereby making it possible for the player to select effects (image, sound, voice, etc. (audio and visual effects)) which are used in the game. Therefore, it may be possible to provide the game with high gaming excitement which can satisfy various players.

Also, in the game machine according to (17), it may be possible for the player to play the game more comfortably as compared with a case where no object to be read is used and more likely to obtain larger amount of payout since help information to assist the player with the game is provided in the sound. Therefore, it may be possible for the player to use the object to be read more often and the player may have higher expectation and more desire to play the game.

The invention will be further described by way of example with reference to the accompanying drawings, in which:-

Fig. 1 is a perspective view showing the appearance of the slot machine of Embodiment 1.

Fig. 2 is a front view showing variable display windows of the slot machine of Embodiment 1.

Fig. 3 is a front view showing an operation table of the slot machine of Embodiment 1.

Figs. 4A and 4B are front views showing figures used in the slot machine of Embodiment 1.

Fig. 5 is a schematic diagram showing a storage area of an IC tag built in the figure of Embodiment 1.

Fig. 6 is an exploded perspective view of an authentication unit 7 provided in the slot machine of Embodiment 1.

Fig. 7 is a front view showing the authentication unit 7 with the figure installed.

Figs. 8A to 8E are schematic diagrams showing streaks of symbols being variably displayed on the variable display windows of first to fifth reel bands.

Fig. 9 is a block diagram showing schematically a control system of the slot machine of Embodiment 1.

Fig. 10 is a block diagram showing schematically a liquid crystal driving circuit of the liquid crystal display.

Fig. 11 is a drawing showing each storage area of a ROM used in Embodiment 1.

Fig. 12 is a table of winning combinations and payout thereof.

Fig. 13A is a schematic diagram showing reel bands respectively varying and stopped to appear in the variable display windows in a base mode.

Fig. 13B is a schematic diagram showing reel bands respectively varying and stopped to appear in the variable display windows in a High probability mode.

Fig. 14 is a schematic diagram showing a streak of symbols of the sixth reel band variably displayed in the variable display windows.

Fig. 15A is a schematic diagram showing a bonus game image displayed on a lower liquid crystal display in a bonus game.

Fig. 15B is a schematic diagram showing a bonus game image displayed on the lower liquid crystal display after selection of options in the bonus game.

Fig. 16 is a drawing showing each payouts in the bonus game.

Fig. 17 is a drawing showing a pattern of hint voice outputted in the bonus game.

Fig. 18 is a drawing showing a pattern of effects provided as shifting to High probability mode.

Fig. 19 is a drawing showing a pattern of effects provided as shifting to a bonus game.

Fig. 20 is a flow chart of the main processing program used in the slot machine of Embodiment 1.

Fig. 21 is a flow chart of the start acceptance processing program used in the slot machine of Embodiment 1.

Fig. 22 is a flow chart of the lottery processing program used in the slot machine of Embodiment 1.

Fig. 23 is a flow chart of the base game processing program used in the slot machine of Embodiment 1.

Fig. 24 is a flow chart of the bonus game processing program used in the slot machine of Embodiment 1.

Fig. 25 is a flow chart of the processing program for switching High probability mode used in the slot machine of Embodiment 1.

Fig. 26 is a front view showing an image displayed on the lower liquid crystal display in effect-processing for the bonus game start.

Fig. 27 is a front view showing an image displayed on the lower liquid crystal display in effect-processing for the bonus game start.

Fig. 28 is a front view showing an image displayed on the lower liquid crystal display in effect-processing for High probability mode notification.

Fig. 29 is a front view showing an image displayed on the lower liquid crystal display in effect-processing for High probability mode notification.

Fig. 30 is a flow chart of the lottery processing program used in the slot machine of Embodiment 2.

Fig. 31 is a drawing showing a winning combination lottery table used in the base mode of Embodiment 2.

Fig. 32 is a drawing showing a winning combination lottery table used in High probability mode of Embodiment 2.

Fig. 33 is a schematic diagram showing a storage area of an IC tag built in the figure of Embodiment 3.

Fig. 34 is a drawing showing each storage area of a ROM used in Embodiment 3.

Fig. 35 is a drawing showing a table of winning combinations and payouts thereof.

Fig. 36 is an explanatory drawing showing a growing pattern of a character level by the number of times the character has been used.

Fig. 37 is a drawing showing a selection table of notification effects of Embodiment 3.

Fig. 38 is a drawing showing a determination table of notification effects of Embodiment 3.

Fig. 39 is a drawing showing a reliability table of notification effects.

Fig. 40 is a flow chart of the main processing program used in the slot machine of Embodiment 3.

Fig. 41 is a flow chart of the start acceptance processing program used in the slot machine of Embodiment 1.

Fig. 42 is a flow chart of the base game processing program used in the slot machine of Embodiment 3.

Fig. 43 is a flow chart of effect-processing program used in the slot machine of Embodiment 3.

Fig. 44 is a flow chart of a bonus game processing program used in the slot machine of Embodiment 3.

Fig. 45 is a flow chart of a history renewal processing program used in the slot machine of Embodiment 3.

Fig. 46 is a front view showing an image displayed on the lower liquid crystal display in notification effects of the bonus game in a state that a figure of "warrior man" of character level 1 is used.

Fig. 47 is a front view showing an image displayed on the lower liquid crystal display in notification effects of the bonus game in a state that a figure of "warrior man" of character level 2 is used.

Fig. 48 is a front view showing an image displayed on the lower liquid crystal display in notification effects of the bonus game in a state that a figure of "witch" of character level 1 is used.

Fig. 49 is a front view showing an image displayed on the lower liquid crystal display in notification effects of the bonus game in a state that a figure of "witch" of character level 2 is used.

Fig. 50 is a front view showing an image displayed on the lower liquid crystal display in notification effects of the bonus game in a state that a figure of "witch" of character level 3 is used.

Fig. 51 is a front view showing an image displayed on the lower liquid crystal display in notification effects of the bonus game in a state of no figure.

Fig. 52 is a drawing showing a lottery table of winning combinations of Embodiment 4.

Hereinafter, a detailed explanation will be made for the gaming machine of the present invention by referring to the drawings based on Embodiment s from 1 to 4 of a slot machine in which the present invention is embodied.

However, the present invention is not limited to the embodiments, and various modifications and changes in symbol can be made without departing from the scope of the present invention.

(Embodiment 1)

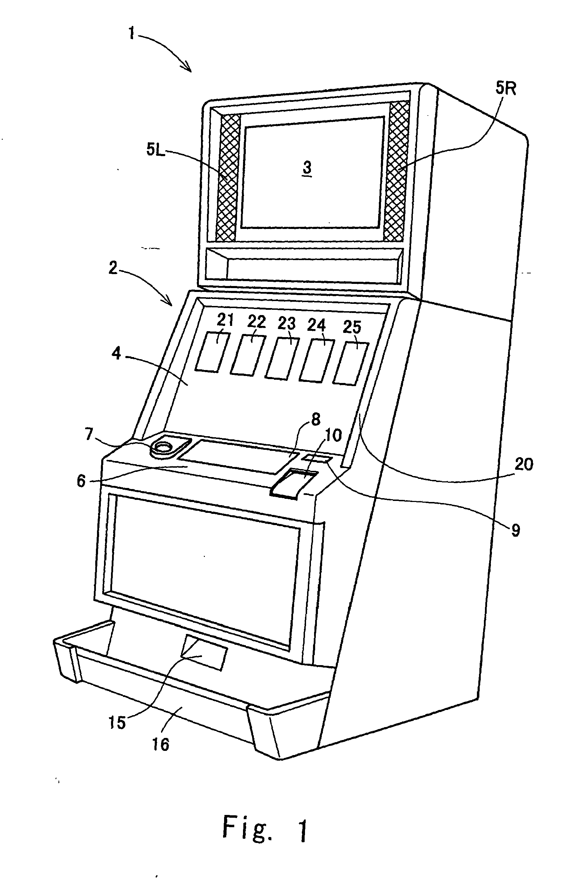

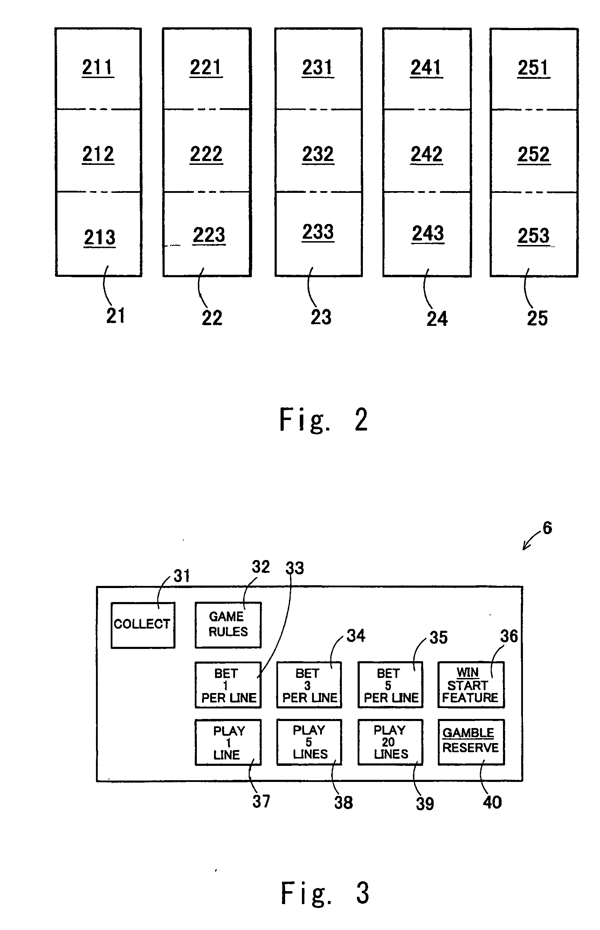

In this instance, the slot machine of Embodiment 1 is a slot machine having a so-called video reel, in which a figure separately bought by a player is placed at a predetermined place of the slot machine, thereby making it possible to conduct a game by providing an effect (or effect rendition) corresponding to the placed figure. First, an explanation will be made for a general configuration of the slot machine of Embodiment 1 by referring to Figs. 1 to 3. Fig. 1 is a perspective view of the slot machine of Embodiment 1. Fig. 2 is a front view showing a variable display part of the slot machine of Embodiment 1. The variable display part may comprise a plurality of variable display windows. Fig. 3 is a front view showing an operation panel of the slot machine of Embodiment 1.

As shown in Fig. 1, the slot machine 1 is provided with a cabinet 2 constituting an outer structure. An upper liquid crystal display 3 is disposed at the front upper part of the cabinet 2, and a lower liquid crystal display 4 is disposed on an device front panel 20 fixed at the front center of the cabinet 2. These upper liquid crystal display 3 and lower liquid crystal display 4 are composed of generally and commercially available liquid crystal displays.

A pair of speakers 5L and 5R are provided on both sides of the upper liquid crystal display 3, outputting certain BGM, sounds, sound effects and others to the player on the basis of the game aspect of the slot machine 1. Further, the lower liquid crystal display 4 is provided at the lower part with an operation table 6 which is projected forward. The operation table 6 is provided with an authentication unit 7 for placing the figure 13 to be explained later, an operation panel 8 on which various buttons are arrayed, a coin insertion part 9 for inserting game media such as coins and a bill insertion part 10 for inserting bills respectively from the left side in sequence.

Further, a detailed explanation will be made later for the figure 13 and the authentication unit 7.

The upper-liquid crystal display 3 is provided with the information on the game process, types and payouts of winning combination, various effects of the game concerned and the like. Further, on the lower liquid crystal display 4, the number of credits that the player has at present as deposits and various effect images are displayed and also five variable display windows, 21, 22, 23, 24 and 25 are displayed at a place close to the center. Then, various types of symbols to be explained later are varied and displayed on these variable display windows 21 through 25, while scrolling from the upper to the lower direction, and also stopped and displayed in a combination of predetermined symbols after elapsing of a predetermined time.

Therefore, the slot machine 1 of Embodiment 1 is so-called video slot machine in which a video reel is realized by displaying symbols, symbols, or the like through each of variable display windows 21 to 25 of the lower liquid crystal display 4 such that the machine can conduct a slot game (comprising two types of game aspects, namely, base game and bonus game). In the slot game of Embodiment 1, the base game is conducted by symbols (three symbols for each, 15 symbols in total) stopped and displayed on the respective variable display windows 21 through 25, while the bonus game is conducted by selecting options displayed on the lower liquid crystal display 4.

As shown in Fig. 2, the variable display windows 21 through 25 are separated to the first stop-and-display areas 211, 221, 231, 241 and 251, the second stop-and-display areas 212, 222, 232, 242 and 252 and the third stop-and-display areas 213, 223, 233, 243 and 253, and predetermined symbols are stopped and displayed on each stop-and-display areas, namely, 211 through 213, 221 through 223, 231 through 233, 241 through 243 and 251 through 253 on the basis of lottery results of the internal lottery which will be explained later.

In the base game of this slot game, there are provided 20 winning lines which are formed with five of the respective stop-and-display areas of 211 through 213, 221 through 223, 231 through 233, 241 through 243 and 251 through 253. In these winning lines, if activated, a payout is made when the symbols are respectively stopped and displayed and when predetermined symbols are arranged. Here, an explanation will be made for each winning line.

The first winning line L1, is formed with the second stop-and-display areas, 212, 222, 232, 242 and 252. The second winning line L2, is formed with the first stop-and-display areas 211, 221, 231, 241 and 251. The third winning line L3, is formed with the third stop-and-display areas 213, 223 233, 243 and 253. In a similar way, the other winning lines from the fourth winning line L4, through the twentieth winning line L20, are formed respectively with the stop-and-display area, 211 through 213, 221 through 223, 231 through 233, 241 through 243 and 251 through 253.

Further, in this instance, of the above-described 20 winning lines, winning lines activated by operating each bet button (BET 1 PER LINE button 33; BET 3-PER LINE button 34; BET 5 PER LINE button 35) to be explained later are called "activated winning lines."

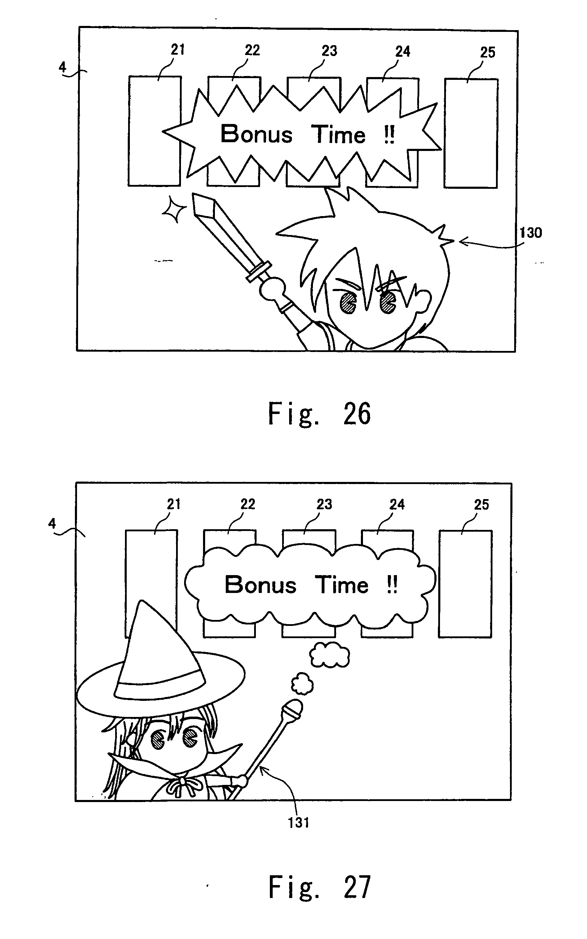

Further, when a predetermined trigger symbol is stopped on an activated winning line to shift the game state to a bonus game, letters of "Bonus Time !!" are displayed at the display area of the lower liquid crystal display 4. When the figure 13 is placed on the authentication unit 7, an image corresponding to an appearance of the character of the figure 13 is displayed for a predetermined time (three seconds in Embodiment 1) and a sound corresponding to the appearance of the character is outputted from the speakers 5L and 5R, by which the player is notified of the shift to the bonus game (refer to Figs. 26 and 27).

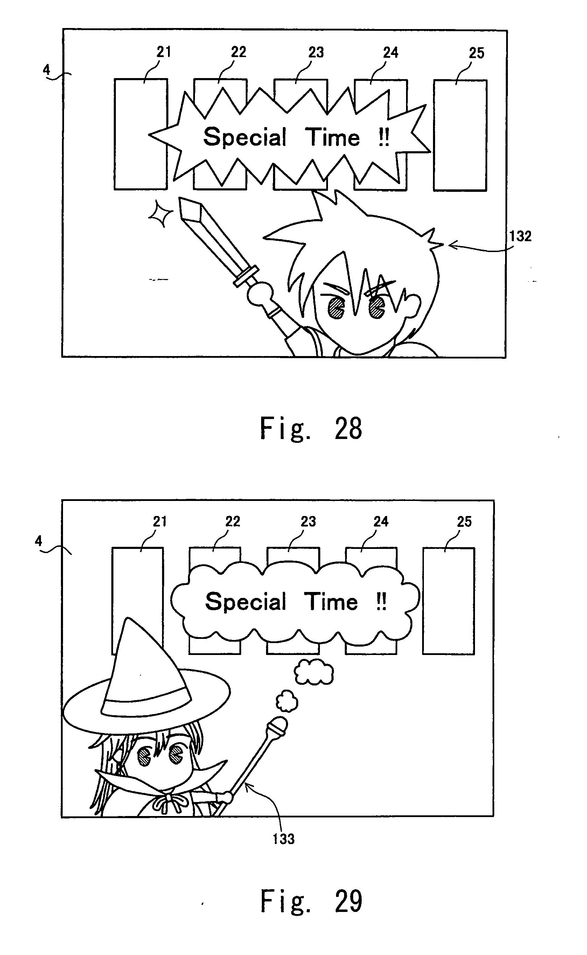

In addition, when the game is moved to a high probability mode at which a probability of obtaining the winning combination to be explained later is further increased than usual, letters of "Special Time !!" are displayed at the display area of the lower liquid crystal display 4. When the figure 13 is placed on the authentication unit 7, an image corresponding to an appearance of the character of the figure 13 is displayed for a predetermined time (three seconds in Embodiment 1) and a sound corresponding to the appearance of the character is output from speakers 5L and 5R, by which the player is notified of movement to the high probability mode (refer to Figs. 28 and 29).

A method for notifying a player of transition to the bonus game or the high probability mode shall not be limited to the above method, and may include, for example, a method of displaying an image corresponding to the figure 13 on the upper liquid crystal display 3.

Further, various operation buttons are disposed on the operation panel 8 installed on the operation table 6. A detailed explanation will be made for each operation button by referring to Fig. 3. A "COLLECT" button 31 and a "GAME RULES" button 32 are disposed in sequence at the upper part of the operation panel 8 from the leftmost side. A "BET 1 PER LINE" button 33, a "BET 3 PER LINE" button 34, a "BET 5 PER LINE" button 35 and a "WIN START FEATURE" button 36 are disposed in sequence at the middle part thereof from the leftmost side. A "PLAY 1 LINE" button 37, a "PLAY 5 LINES" button 38, a "PLAY 20 LINES" button 39 and a "GAMBLE RESERVE" button 40 are disposed in sequence at the lower part thereof from the leftmost side.

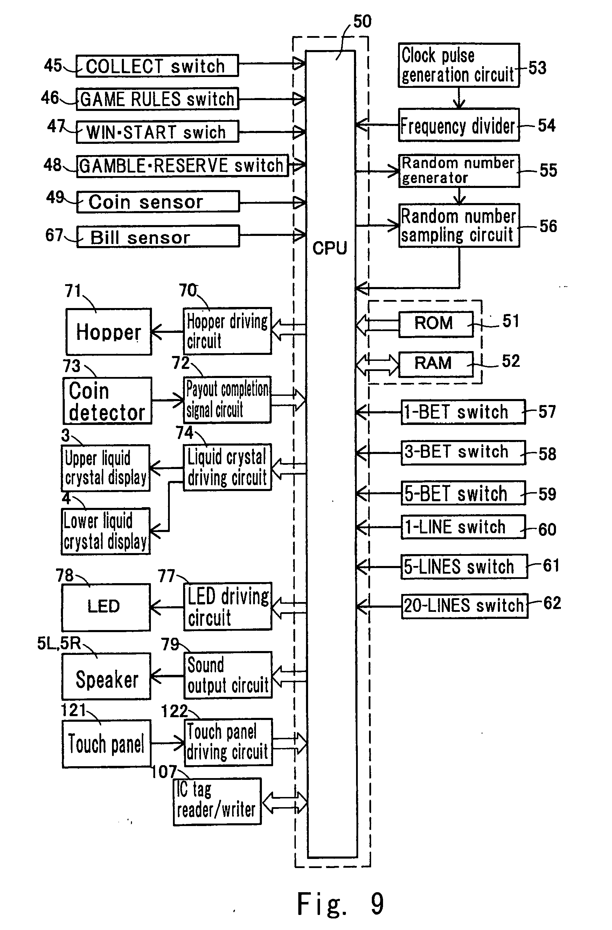

In this instance, the COLLECT button 31 is a button usually depressed at completion of the game. When the COLLECT button 31 is depressed, coins equivalent in value to the number of credits obtained in the game are paid back to a coin receiver 16 from a coin payout opening 15 to be explained later via a hopper (not illustrated) installed inside the slot machine 1. A COLLECT switch 45 is provided on the COLLECT button 31, and switch signals are outputted to the CPU 50 by depressing the COLLECT button 31 (refer to Fig. 9).

The GAME RULES button 32 is a button to be depressed when the player is not sure the operation method of the game and the like. When the GAME RULES button 32 is depressed, various help information is displayed on the upper liquid crystal display 3 and the lower liquid crystal display 4. A game rules switch 46 is provided on the GAME RULES button 32, and switch signals are transmitted from the game rules switch 46 to the CPU 50 when the GAME RULES button 32 is depressed (refer to Fig. 9).

The BET 1 PER LINE button 33 is a button in which credits currently owned by the player are bet one by one to each activated winning line for every depression. A 1-BET switch 57 is provided on the BET 1 PER LINE button 33, and switch signals are transmitted from the 1-BET switch 57 to the CPU 50 by the depression of the BET 1 PER LINE button 33 (refer to Fig. 9).

The BET 3 PER LINE button 34 is a button to start the game with 3 bets for each activated winning line as the BET 3 PER LINE button 34 is depressed. A 3-BET switch 58 is provided on the BET 3 PER LINE button 35, and switch signals are transmitted from the 3-BET switch 58 to the CPU 50 on depression (refer to Fig. 9).

Further, the BET 5 PER LINE button 35 is a button to start the game with 5 bets for each activated winning line as the BET 5 PER LINE button 35 is depressed. A 5-BET switch 59 is provided on the BET 5 PER LINE button 35, and switch signals are transmitted from the 5-BET switch 59 to the CPU 50 based on depression (refer to Fig. 9).

Therefore, depression of the BET 1 PER LINE button 33, the BET 3 PER LINE button 34 or the BET 5 PER LINE button 35 will decide the number of bets to be bet for each line of the activated winning line.

Further, the WIN START FEATURE button 36 is a button to start a bonus game, which will be explained later, and to add the payouts obtained in the bonus game to the current credits. A WIN-START switch 47 is provided on the WIN START FEATURE button 36 and switch signals are transmitted from the WIN-START switch 47 to the CPU 50 on depression (refer to Fig. 9).

The PLAY 1 LINE button 37 is a button to start the game with one activated winning line upon the depression of the button as the number of the activated winning line is set "1". A 1-LINE switch 60 is provided on the PLAY 1 LINE button 37, and switch signals are transmitted from the line switch 60 to the CPU 50 based on depression (refer to Fig. 9).

The PLAY 5 LINES 38 button is a button to start the game with five activated winning line upon the depression of the button as the number of the activated winning lines is set "5". A 5-LINES switch 61 is provided on the PLAY 5 LINES button 38, and switch signals are transmitted from the 5-LINES switch 61 to the CPU 50 based on depression (refer to Fig. 9).

The PLAY 20 LINES button 39 is a button to start the game with twenty activated winning lines upon the depression of the button as the number of the activated winning lines is set "20". A 20-LINES switch 62 is provided on the PLAY 20 LINES button 39, and switch signals are transmitted from the 20-LINES switch 62 to the CPU 50 based on depression (refer to Fig. 9).

Therefore, depression of the PLAY 1 LINE button 37, the PLAY 5 LINES button 38 or the PLAY 20 LINES button 39 will determine the number of the activated winning lines.

In this instance, when the PLAY 1 LINE button 37 is depressed, the previously described first winning line L1 is activated. Further, when the PLAY 5 LINES button 38 is depressed, the winning lines from the first winning line L1 through the fifth winning line L5 are all activated. In addition, when the PLAY 20 LINES button 39 is depressed, the winning lines from the first winning line L1 through twentieth winning line L20 are all activated.

The PLAY 1 LINE button 37, the PLAY 5 LINES button 38 or the 20 LINES button 39 also operates as a start button by which each symbol is start to move to be displayed variably at variable display windows 21 through 25 on the lower liquid crystal display 4 in order to start the game with the present number of bets and the present number of the activated winning lines concerned, once one of these buttons are depressed.

The GAMBLE RESERVE button 40 is a button to be depressed when the player leaves his or her seat or when the game to be shifted to a double down game after completion of the bonus game. In this instance, the double down game is a game the player may play by using the player's credits obtained in the bonus game, detailed explanation of which are omitted here.

A GAMBLE-RESERVE switch 48 is provided on the GAMBLE RESERVE button 40, and switch signals are transmitted from the GAMBLE-RESERVE switch 48 to the CPU 50 based on depression (refer to Fig. 9).

A coin sensor 49 is disposed on the coin insertion part 9, and when coins are inserted into the coin insertion part 9, coin detection signals are transmitted to the CPU 50 from the coin sensor 49 (refer to Fig. 9) such that the credits equivalent to the thus inserted coins are added. Further, a bill sensor 67 is disposed on a bill insertion part 10, and when a bill is inserted into the bill insertion part 10 (or bill insertion slot), a bill detection signal is transmitted to the CPU 50 from the bill sensor 67 (refer to Fig. 9), thereby adding the credits equivalent to the thus inserted bill.

The cabinet 2 is provided at the lower part with a coin payout opening 15 and also with a coin receiver 16 for receiving coins paid out from the coin payout opening 15. A hopper 71 capable of discharging coins one by one and a coin detection part 73 to be described later which is composed of a sensor and others are disposed inside the coin payout opening 15 (refer to Fig. 9) and the coin detection part 73 detects the number of coins paid from the coin payout opening 15. Further, instead of paying out the coins from the coin payout opening 15, the gaming machine can be configured to issue a certificate note formed like a receipt which specifies the number of coins (or the value) to be paid out. In this instance, the player is able to bring the issued certificate note to a counter of the game shop to exchange prizes or gifts for the issued certificate note.

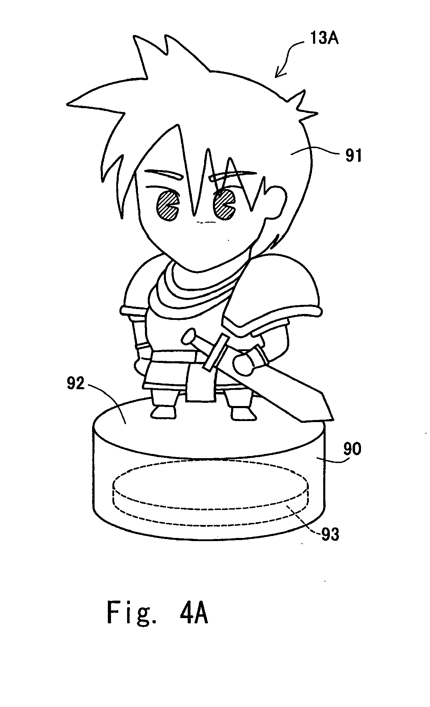

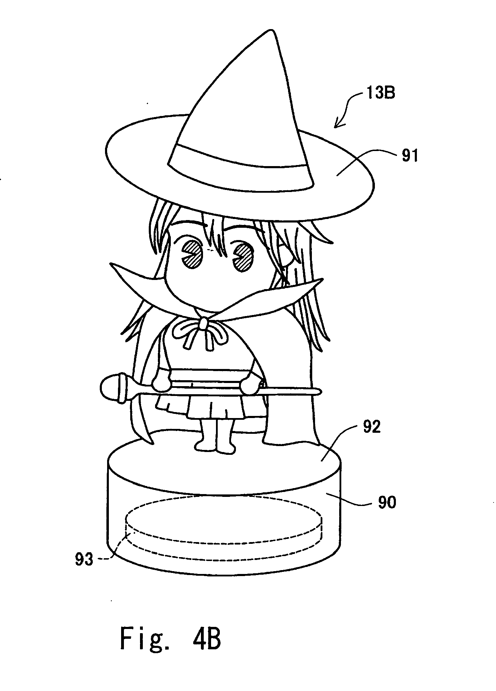

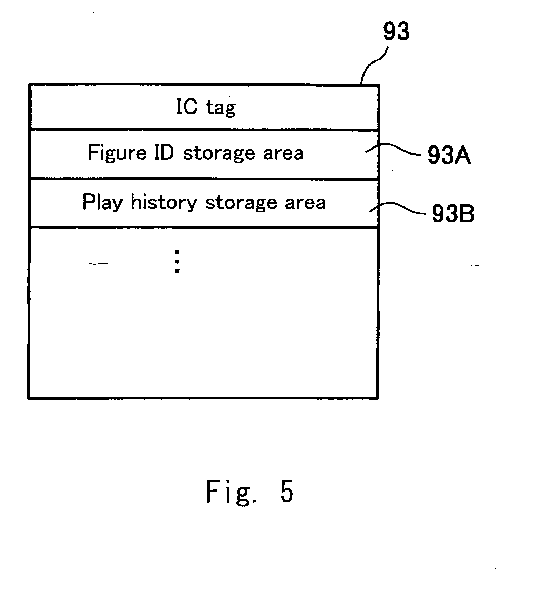

Next, an explanation will be made for the figure 13 used in the game of the slot machine 1 according to Embodiment 1 and the authentication unit 7 which reads and writes information of an IC tag built in the figure 13 installed and placed on the slot machine 1 by referring to Figs. 4A, 4B and 5.

First, an explanation will be made for the figure 13 of Embodiment 1 by referring to Figs. 4A, 4B and 5. Figs. 4A and 4B show front views showing respective figures of Embodiment 1. Fig. 5 is a schematic diagram showing a memory area of the IC tag built in each figure of

Embodiment 1.

As shown in Figs. 4A and 4B, each of the figures 13A and 13B of Embodiment 1 is basically composed of a base portion 90 and a figure main body 91.

The base portion 90 is provided with a diameter corresponding to the authentication unit 7 to be explained later, and formed on a hollow thick circular plate. Further, a figure main body 91 is fixed to the upper surface 92 of the base portion 90 and an IC tag is fitted and fixed into a bottom recess disposed on the bottom of the base portion 90. The IC tag 93 may be a commercially available IC tag and is composed of an IC chip comprising a memory and a transmitting-and-receiving part, and an antenna connected to the IC chip, and is shaped like a coin. Further, the IC tag 93 used in the slot machine 1 of Embodiment 1 is a read / write type of IC tag on which information is particularly able to be rewritten. Then, as explained later, the IC tag 93 stores the figure ID which is unique to a character corresponding to the figure main body 91, the number of times in which the figure 13 has been used with the slot machine 1 and so on (refer to Fig. 5).

The figure main body 91 is formed with synthetic resin or the like in a shape of a doll depicting a specific character. In this instance, the figure 13 used in the slot machine 1 of Embodiment 1 is available in three types of characters, namely, figures 13A through 13C, which are "warrior man," "witch" and "female fortune teller." The figure main body 91 for each of these figures 13A through 13C is fixed upright in relation to the base portion 90. In the figure 13A of warrior man, a doll depicting a male warrior is fixed to the base portion 90 as a figure main body 91 (refer to Fig. 4A). Further, in the figure 13B of witch, a doll depicting a witch is fixed to the base portion 90 as a figure main body 91 (refer to Fig. 4B). In addition, in the figure 13C of female fortune teller, a doll depicting a female fortune teller is fixed to the base portion 90 as a figure main body 91 (not illustrated)'. Figs. 4A and 4B illustrate only figures of the warrior man 13A and the witch 13B among these three types of figures.

Each of these figures 13A through 13C is put in a capsule with a predetermined size and distributed by a special vending machine installed separately from the slot machine 1.

Then, the player is able to distinguish these figures 13A through 13C by referring to the figure main body 91, and the slot machine 1 is able to distinguish these figures 13A through 13C by reading the figure ID which is stored in the IC tag 93 of each figure.

Here, an explanation will be made for each storage area provided in the IC tag 93 built in each of the figures 13A to 13C. Fig. 5 is a schematic diagram showing each storage area of the IC tag.

As shown in Fig. 5, the IC tag 93 is provided with a figure ID storage area 93A in which a figure ID or a unique value for each of the figures 13A through 13C (for example, 0001 for the figure 13A (warrior man), 0002 for the figure 13B (witch) and 0003 for the figure 13C (female fortune teller)) is stored in advance and a play history storage area 93B in which information is stored and renewed for each game wherein the information is about how many times the IC tag 93 built-in figure 13 is used in the slot machine 1 to play the game (in this instance, one game is a series of actions in which bet operations are performed on the basis of the presently available credits so that symbols are moved (or varied) and stopped to appear the variable display windows and other various operations (bonus game process, payout process, etc.) are conducted according to the combination of the appearing symbols).

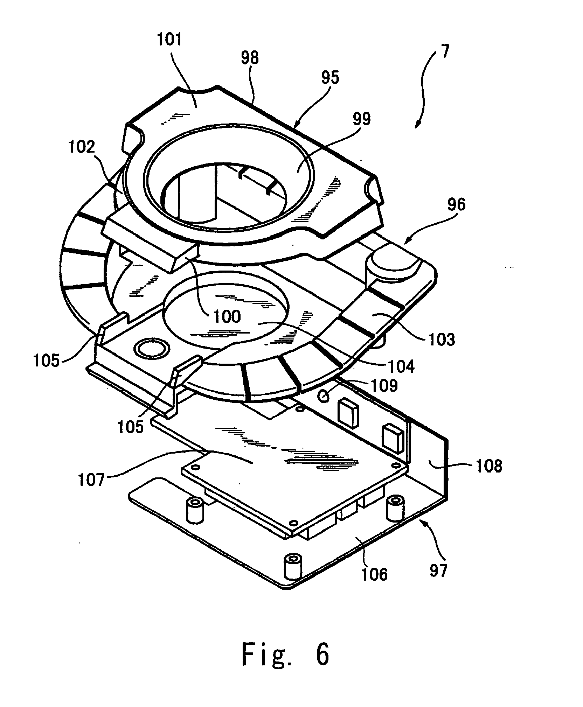

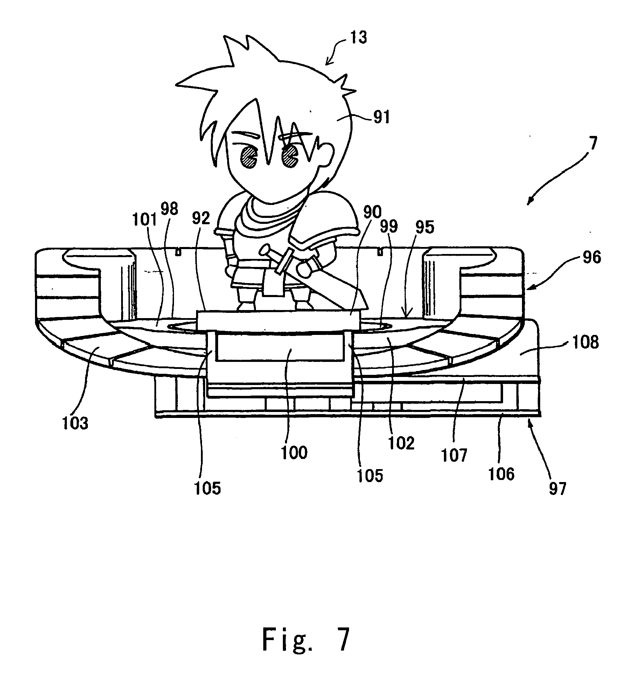

Next, an explanation will be made for the authentication unit 7 provided on the slot machine 1 of Embodiment 1 by referring to Figs. 6 and 7. Fig. 6 is an exploded perspective view showing the authentication unit 7 provided on the slot machine of Embodiment 1. Fig. 7 is a front view showing the authentication unit 7 in which a figure 13 is placed.

As shown in Fig. 6, the authentication unit 7 of Embodiment 1 is basically composed of a guide member 95, a support frame 96 and a substrate 97.

The guide member 95 is provided with a main body 98 made with a transparent urethane which is a thick plate transparent resin, and a tapered guide hole 99 which is hollowed in a truncated cone is formed at the center of the main body 98. The guide hole 99 is wider in area at the upper opening than at the lower opening and has a conically slant circular wall. The lower opening area is approximately equal to the area at the lower surface of the base portion 90 of the figure 13.

The guide member 95 is also provided at the front edge with a protrusion 100. The protrusion 100 is disposed in front of the main body 98 and formed in an integrated form with the main body 98. Further, a thin sheet-like light shielding member 101 is adhered around the guide hole 99 on the upper surface of the main body 98 of the guide member 95.

The light shielding member 101 is painted black on the surface so as to perform as a shield of the light from a full color LED 109, to be explained later, which is provided therein. A notification part 102 which is indicated by turning on and off the notification light is provided at a part further outside the light shielding member 101 of the main body 98. The notification part 102 emits light in response to the game state of the slot machine 1, thereby notifying the player of the present game state of the slot machine 1.

The support frame 96 formed in an approximately trapezoidal shape is a support member which keeps the shape by fitting the guide member 95 therein. Then, the support frame is provided with a frame member 103 which covers around the main body 98 when the guide member 95 is fitted. Further, a seat part 104, to which the base portion 90 of the figure 13 is fitted and fixed, is provided at the bottom center of the frame member 103.

The seat part 104 is formed with a cylindrical space and made slightly larger in diameter than the base portion 90 of the figure 13 and also slightly larger in depth than the height of the base portion 90 in such a way that the base portion 90 of the figure 13 has some clearance and that the base portion 90 can be fitted and fixed into the seat part 104, with a certain positional relationship kept between them. Then, as shown in Fig. 7, the base portion 90 is set at the seat part 104, thereby preventing the figure 13 from falling down.

A protrusion guide member 105 is also provided in front of the frame member 103. The protrusion guide member 105 is formed in such a position and dimension that covers the surface of the protrusion 100 when the main body 98 of the guide member 95 is fitted into the support frame 96.

Further, a substrate 97 located below the support frame 96 is composed of a substrate main body 106 and an IC tag reader/writer 107 installed on the substrate main body 106. The IC tag reader/writer 107 is composed of a controller, a data transmitting / receiving part and an antenna. In particular, the antenna part which communicates with the IC tag 93 is disposed so as to be located immediately under the seat part 104 of the support frame 96, thereby securing data communications with the IC tag 93 built in the base portion 90 of the figure 13 placed on the seat part 104.

Then, the above-configured IC tag reader / writer 107 is connected to the CPU 50, which is explained later, and controlled by the CPU 50, thereby performing reading and writing processes from and to the IC tag 93. In Embodiment 1, data communications are made by a non-contact type, but as a matter of course they can be made by a contact type.

The substrate 97 is also provided with a back plate 108 which is formed in an upright position at the back, and the back plate 108 is provided with a full color LED 109. Then, the full color LED 109 emits light by a predetermined luminescence aspect in response to the game state of the slot machine 1 and notifies the player of the present game state of the slot machine 1 from the notification part 102.

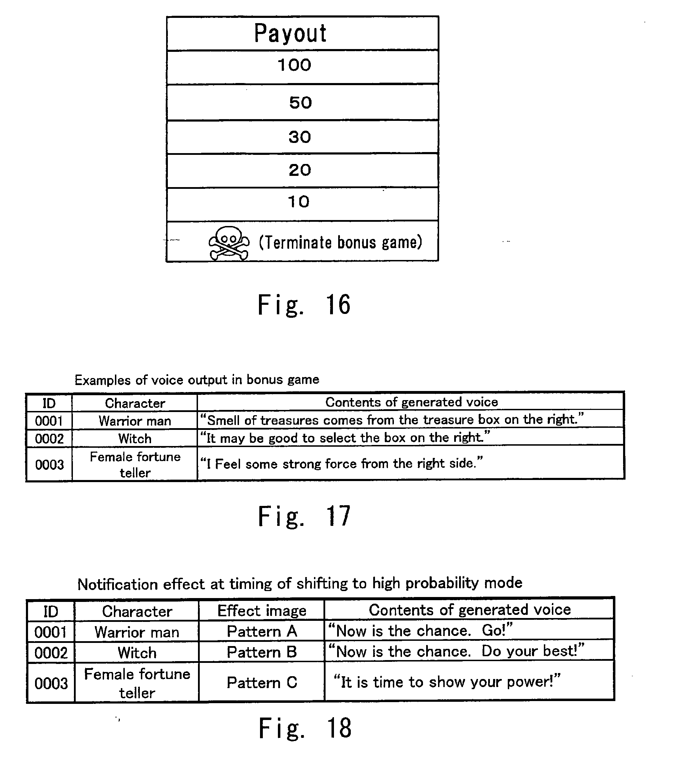

In the slot machine 1 of Embodiment 1 in which the above configured authentication unit 7 is installed, the CPU 50 determines using the IC tag reader / writer 107 about whether any one of the figures 13A through 13C is placed on the authentication unit 7 or not, when the player inserts coins through the coin insertion part 9 to complete the acceptance of bets thereafter. As a result, when any one of the figures 13A through 13C is determined to be placed, an image and sound-based effect corresponding to an appearance of the character of each figure is provided in a transition period from the original mode to a high probability mode to be explained later or in a transition period from the base game to the bonus game (refer to Figs. 26 through 29). During the bonus game, a hint may be provided in helping the player to conduct the game by outputting the hint in a sound corresponding to an appearance of the character (refer to Fig. 17). The details will be explained later.

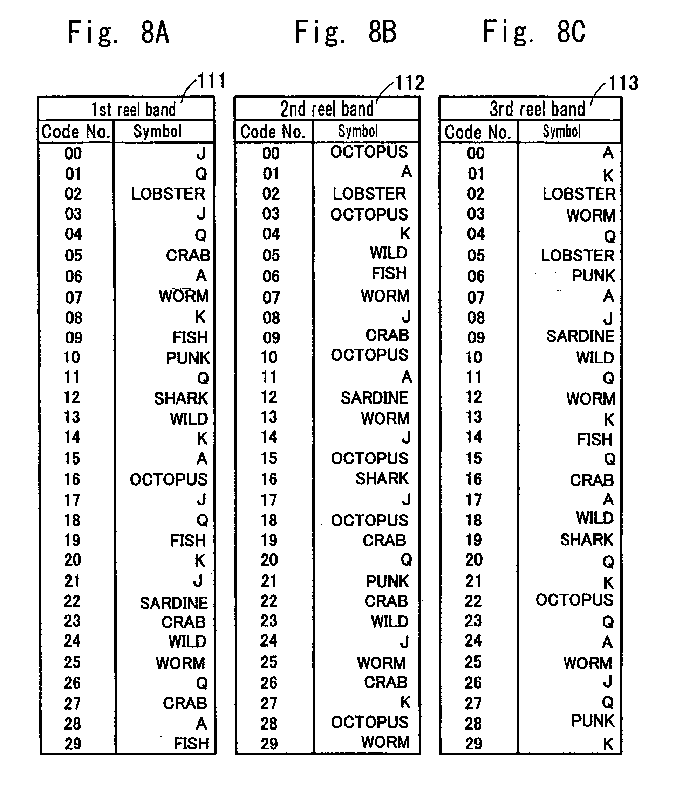

Next, an explanation will be made by referring to Figs. 8A to 8E for symbol examples varied and displayed at the variable display windows 21 through 25 on the lower liquid crystal display 4, as the symbols are varyingly displayed by scrolling in the base game and the bonus game. In Figs. 8A to 8E, the array of symbols indicated by the first reel band 111 is an array of symbols to be displayed varyingly at the variable display window 21, the array of symbols indicated by the second reel band 112 is an array of symbols to be displayed varyingly at the variable display window 22, the array of symbols indicated by the third reel band 113 is an array of symbols to be displayed varyingly at the variable display window 23, the array of symbols indicated by the fourth reel band 114 is an array of symbols to be displayed varyingly at the variable display window 24, and the array of symbols indicated by the fifth reel band 115 is an array of symbols to be displayed varyingly at the variable display window 25.

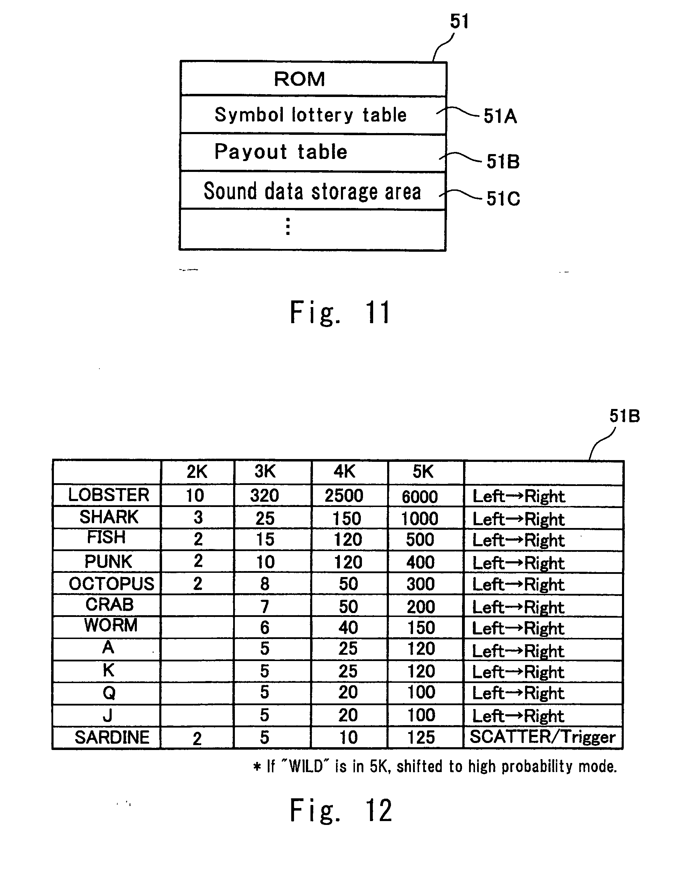

Dot data for forming the arrays of symbols from the first reel band 111 through the fifth reel band 115 are stored in an image ROM 82 (refer to Fig. 11).

In this instance, the arrays of symbols indicated by the first reel band 111 through the fifth reel band 115 are provided with mutually different symbol arrangements and these arrays of symbols are composed of appropriate combinations of thirteen symbols such as "LOBSTER," " SHARK," "FISH," "PUNK," "OCTOPUS," "CRAB," "WORM," "A," " K," " Q," " J," "WILD" and "SARDINE."

Here, "LOBSTER" means a symbol which depicts a lobster. "SHARK," "FISH," "PUNK," "OCTOPUS," "CRAB," "WORM" and "SARDINE" means symbols which respectively depict shark, fish, man with a guitar, octopus, crab, worm and sardine. Further, "A," "K," "Q," "J" and "WILD" are symbols of alphabetic letters.

Then, when "LOBSTER," "SHARK," "FISH," "PUNK," "OCTOPUS," " CRAB," "WORM," "A," "K," "Q" and "J" are stopped and displayed in a predetermined number from the leftmost side along the first to the twentieth winning line, L1 through L20, a predetermined number of credits are added as credits earned by the player (refer to Fig. 12).

Further, "SARDINE" is a so-called scatter symbol, and when two or more of these are stopped and displayed in total of the variable display windows 21 through 25, a predetermined number of credits are added as credits earned by the player, irrespective of an activated winning line (refer to Fig. 12). As will be explained later, "SARDINE" is a bonus game shifting symbol for shifting the game to the bonus game, and when the symbol of "SARDINE" is stopped and displayed in four or more places in total in the variable display windows 21 through 25, the game can be shifted to the bonus game, irrespective of the activated winning lines.

In addition, "WILD" is a so-called wild symbol which is used in place of any symbols other than "SARDINE" (scatter symbol).

When any one of the PLAY 1 LINE button 37, the PLAY 5 LINES button 38 or the PLAY 20 LINES button 39 is depressed to start the game, arrays of symbols indicated by the first reel band 111 through the fifth reel band 115 are scrolled and displayed from upward to downward at each variable display windows 21 through 25 and three symbols are stopped and displayed at each variable display window after elapsing of a predetermined period of time.

Further, based on a plurality of types of combinations of the above-described symbols, winning combinations are beforehand set for each symbol (refer to Fig. 12). When a combination of symbols corresponding to one of the winning combinations is stopped on an activated winning line, a payout amount corresponding to the winning combination is added to the existing credits. When "SARDINE" is stopped and displayed in four or more places at the same time, the game is shifted to the bonus game, irrespective of the winning line.

When "WILD" is stopped in five or more places along the activated winning line, the game mode is shifted to the high probability mode in which there is an increased probability to obtain a winning combination on the winning line from the next game. The high probability mode will be explained later.

Next, an explanation will be made for a mechanism related to the control system of the slot machine 1 by referring to Fig. 9. Fig. 9 is a block diagram showing the control system of the slot machine.

In Fig. 9, the control system of the slot machine 1 is basically composed of the CPU 50 which is a core component, and the CPU 50 is connected with a ROM 51 and a RAM 52. The ROM 51 stores a main processing program to be explained later, a base game processing program, a bonus game processing program, a symbol lottery table for drawing stopped-and-displayed symbols, a winning combination based on the combinations of stopped-and-displayed symbols, a payout table for setting credit paid based on the winning combination (refer to Fig. 12), sound data corresponding to characters of figures 13A through 13C and other various programs and data tables necessary for controlling the slot machine 1. Further, the RAM 52 is a memory for temporarily storing various data calculated by the CPU 50.

The CPU 50 is connected with a clock pulse generating circuit 53 for generating a reference clock pulse and a frequency divider 54, and also connected with a random number generator 55 for generating random numbers and a random number sampling circuit 56. Random numbers sampled via the random number sampling circuit 56 are used for various lotteries such as winning combinations. Further, the CPU 50 is connected with a COLLECT switch 45 provided with a COLLECT button 31, a GAME-RULES switch 46 provided with a GAME RULES button 32, a 1-BET switch 57 provided with a BET 1 PER LINE button 33, a 3-BET switch 58 provided with a BET 3 PER LINE button 34, a 5-BET switch 59 provided with a BET 5 PER LINE button 35, a WIN-START switch 47 provided with a WIN START FEATURE button 36, a 1-LINE switch 60 provided with a PLAY 1 LINE button 37, a 5-LINES switch 61, a 20-LINES switch 62 provided with a PLAY 5 LINES button 38, and a GAMBLE RESERVE switch 48 provided with a PLAY 20 LINES button 39 and to a GAMBLE RESERVE button 40 respectively. The CPU 50 will control all the actions corresponding to each of the buttons based on switch signals output, when these buttons are depressed.

Further, the CPU 50 is connected with a coin sensor 49 disposed on a coin insertion part 9 and a bill sensor 67 disposed on a bill insertion part 10, respectively. The coin sensor 49 detects coins inserted from the coin insertion part 9, and the CPU 50 calculates the number of inserted coins on the basis of coin detection signals outputted from the coin sensor 49. The bill sensor 67 detects types and amounts of bills inserted from the bill insertion part 10, and the CPU 50 calculates the number of credits equivalent in value to the bills on the basis of bill detection signals outputted from the bill sensor 67.

A hopper 71 is connected via a hopper driving circuit 70 to the CPU 50. When driving signals are transmitted from the CPU 50 to the hopper driving circuit 70, the hopper 71 pays out a predetermined number of coins from the coin payout opening 15.

Further, the coin detection part 73 is connected via a payout completion signal circuit 72 to the CPU 50. The coin detection part 73 is disposed inside the coin payout opening 15. When it is detected that a predetermined number of coins are paid out from the coin payout opening 15, coin payout detection signals are outputted from the coin detection part 73 to the payout completion signal circuit 72. Then, the payout completion signal circuit 72 outputs payout completion signals to the CPU 50. In addition, the CPU 50 is connected with the upper liquid crystal display 3 and the lower liquid crystal display 4 via the liquid crystal driving circuit 74 so that the CPU 50 controls the upper liquid crystal display 3 and the lower liquid crystal display 4.

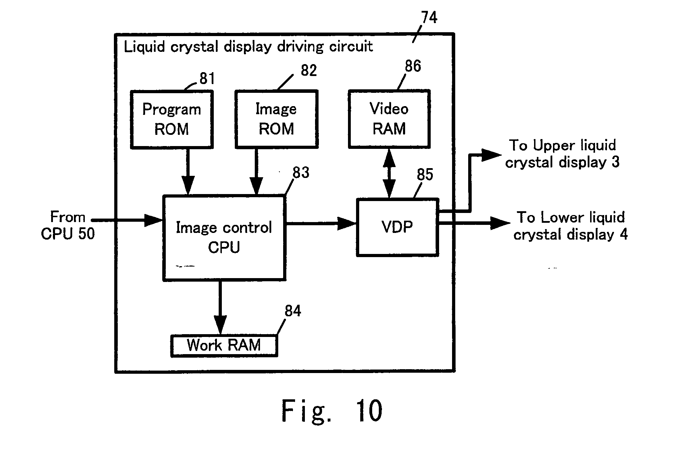

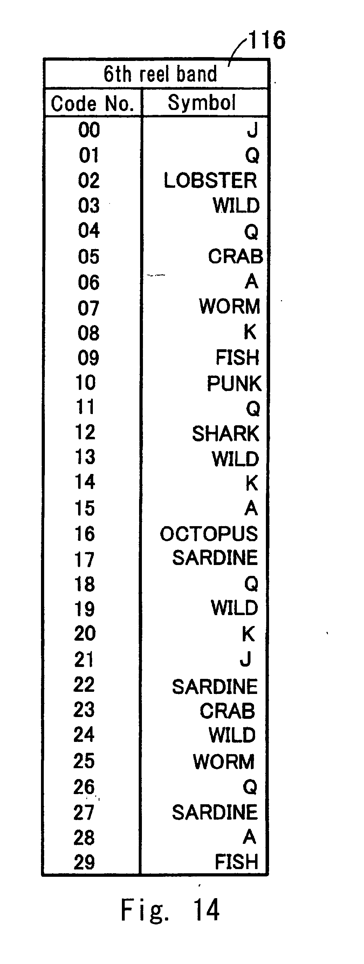

In this instance, as shown in Fig. 10, the liquid crystal driving circuit 74 is composed of a program ROM 81, an image ROM 82, an image controlling CPU 83, a work RAM 84, a VDP (video/display/processor) 85, a video RAM 86 and others. Then, the program ROM 81 stores an image controlling program about displaying of the upper liquid crystal display 3 and the lower liquid crystal display 4, together with other various selection tables. The image ROM 82 also stores, for example, image-forming dot data such as effect images (refer to Figs. 26 to 29) respectively corresponding to figures 13A through 13C, symbol examples of the first reel band 111 through the fifth reel band 115 in Figs. 8A to 8E, an array of symbols on the sixth reel band 116 in Fig. 14, which are displayed on the lower liquid crystal display 4 (or the variable display windows 21 through 25).

The image controlling CPU 83 determines an image to be displayed on the upper liquid crystal display 3 or the lower liquid crystal display 4 from the dot data previously stored in the image ROM 82 based on parameters set by the CPU 50 according to the image controlling program previously stored inside the program ROM 81. Further, the work RAM 84 is configured as a temporary storage means when the image controlling program is executed by the image controlling CPU 83. The VDP 85 forms an image corresponding to display contents determined by the image controlling CPU 83 and outputs it on the upper liquid crystal display 3 and the lower liquid crystal display 4. Therefore, for example, arrays of symbols displayed in the reel bands 111 through 115 are scrolled and displayed on the lower liquid crystal display 4 (or the variable display windows 21 through 25). Further, the video RAM 86 is configured as a temporary storage means when an image is formed by the VDP 85.

An LED 78 is also connected to the CPU 50 via a LED driving circuit 77. The LED 78 is provided in front of the slot machine 1 and controlled in lighting by the LED driving circuit 77 on the basis of driving signals from the CPU 50, when various effects are rendered. In the slot machine 1 of Embodiment 1 in particular, the LED 78 is turned on to improve the effects in the high probability mode to be explained later.

Further, a sound output circuit 79 and speakers 5L and 5R are connected to the CPU 50, and the speakers 5L and 5R produce various sound effects when various effects are rendered on the basis of output signals from the sound output circuit 79. In the slot machine 1 of Embodiment 1 in particular, when the game is shifted to the high probability mode, with any one of the figures 13A through 13C being placed on the authentication unit 7, and when the game is shifted to the bonus game, a sound corresponding to each character of the figures 13A through 13C (warrior man, witch, and female fortune teller) can provide a new effect as if the figure placed on the gaming machine among the figures 13A through 13C spoke to the player.

As shown in Fig. 11, the ROM 51 stores a symbol lottery table 51A to determine the symbols to be stopped and displayed on the respective stop-and-display areas 211 through 213, 221 through 223, 231 through 233, 241 through 243 and 251 through 253 at variable display windows 21 through 25 (refer to Fig. 2) on the basis of random number values, a payout table 51B of storing winning combinations of the stopped and displayed symbols at each of the stop-and-display areas and payouts, and a sound data storage area 51C of storing data related to sounds corresponding to each character of the figures 13A through 13C (warrior man, witch, and female fortune teller).

Next, an explanation will be made for a symbol lottery table 51A which is stored in the ROM 51 and used in determining the symbols stopped and displayed on each of the stop-and-display areas 211 through 213, 221 through 223, 231 through 233, 241 through 243 and 251 through 253 (refer to Fig. 2), when five variable display windows 21 through 25 are used in the slot machine 1 to conduct the base game and the bonus game.

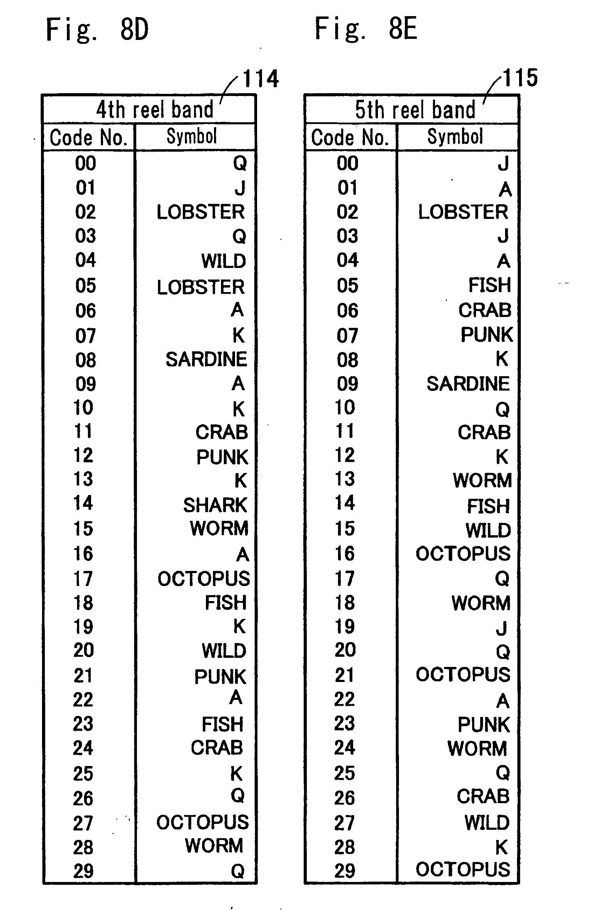

The symbol lottery table 51A is a lottery table in which the symbols stopped along the first winning line L1 corresponding to the second stop-and-display areas 212, 222, 232, 242 and 252 are determined on the basis of random number values sampled by the random number sampling circuit 56. Then, the symbols are stopped and displayed on the first stop-and-display areas 211, 221, 231, 241 and 21, and the third stop-and-display areas 213, 223, 233, 243, and 253 are determined based on the results of the second stop-and-display areas because the order of symbols in each array of at each reel band is fixed (refer to Fig. 8). To be more specific, each symbol having each code number smaller by one than the code number determined by the random number value is stopped and displayed on the first stop-and-display area 211, 221, 231, 241 and 251, whereas each symbol having each code number greater by one than the code number determined by the random number value is stopped and displayed on the third stop-and-display area 213, 223, 233, 243 and 253.

In the slot machine 1 of Embodiment 1, symbols stopped and displayed along the first winning line L1 are determined for each of the variable display windows 21 through 25. The symbol lottery table 51A allocates the code numbers of "00" through "29" in sequence from the top of the array of symbols displayed in each of the reel bands from the first reel band 111 to the fifth reel band 115 of Fig. 8 and the sixth reel band 116 of Fig. 14, as explained later, and the lottery table 51A also sets random number values corresponding to each code number.

Then, the CPU 50 samples five random number values via the random number sampling circuit 56 so as to correspond to each of the variable display windows 21 through 25 at the time of starting a game, and decides a symbol which stops on the second stop-and-display areas 212, 222, 232, 242 and 252 at each of the variable display windows 21 through 25 (for example, in a case where the sampled random number value is "9," a symbol of "FISH" allocated to the code number of "09" is stopped and displayed at the second stop-and-display area).

Next, an explanation will be made for a winning combination and its payout when five variable display windows 21 through 25 are used in the slot machine 1 to conduct the base game and the bonus game by referring to Fig. 12. Fig. 12 is a payout table 51B showing a winning combination and its payout when five variable display windows are used to conduct the game, and showing the payout when the number of bets is "1." Therefore, when the number of bets is "1," values of the payout shown in Fig. 12 are added to the credits. However, when the number of bets is "2" or more, values shown in Fig. 12 are multiplied by the number of bets to obtain the values of the payout and the payout values are added to the credits.

In this instance, a concrete explanation will be made for a winning combination and its payout when the base game is conducted. As shown in Fig. 12, when a symbol of "LOBSTER" is stopped and displayed in a row on an activated winning line at the variable display windows 21 through 22 (in the case of "2K" in which the symbol appears in two consecutive places from the left end), a payout of "10" is obtained. When the symbol is stopped and displayed in a row on an activated winning line at the variable display windows 21 through 23 (in the case of "3K" in which the symbol appears in three consecutive places from the left end), a payout of "320" is obtained. Further, when the symbol is stopped and displayed in a row on an activated winning line at the variable display windows 21 through 24 (in the case of "4K" in which the symbol appears in four consecutive places from the left end), a payout of "2500" is obtained. In addition, when the symbol is stopped and displayed in a row on an activated winning line at the variable display windows 21 through 25 and at the variable display windows 21 through 25 (in the case of "5K" in which the symbol appears in five consecutive places from the left end), a payout of "6000" is obtained.

When the symbol of "SHARK" is also stopped and displayed in a row on an activated winning line at the variable display windows 21 through 22 (in the case of "2K" in which the symbol appears in two places from the left end), a payout of "3" is obtained. When the symbol is stopped and displayed in a row on an activated winning line at the variable display windows 21 through 23 (in the case of "3K" in which the symbol appears in three consecutive places from the left end), a payout of "25" is obtained. Further, when the symbol is stopped and displayed in a row on an activated winning line at the variable display windows 21 through 24 (in the case of "4K" in which the symbol appears in four consecutive places from the left end), a payout of "150" is obtained. In addition, when the symbol is stopped and displayed in a row on an activated winning line at the variable display windows 21 through 25 (in the case of "5K" in which the symbol appears in five consecutive places from the left end), a payout of "1000" is obtained.

Hereinafter, similar payouts are given respectively to the symbol (fish) of "FISH," the symbol (man with guitar) of "PUNK," the symbol (octopus) of "OCTOPUS," the symbol (crab) of "CRAB," the symbol (worm) of "WORM," the symbol (alphabetic letter A) of "A," the symbol (alphabetic letter K) of "K," the symbol (alphabetic letter Q) of "Q" and the symbol (alphabetic letter J) of "J" as shown in Fig. 12. When these symbols appear on the activated winning lines, the total number of the payouts is added to the credits. On the other hand, as to the symbol (sardine) of "SARDINE", it is a scatter symbol. In the case of "2K" in which the symbol appears (or is stopped and displayed) in two places in the variable display windows 21 through 25, a payout of "2" is obtained, irrespective of the activated winning line. In the case of "3K" in which the symbol appears (or is stopped and displayed) in three places, a payout of "5" is obtained. In the case of "4K" in which the symbol appears (or is stopped and displayed) in four places, a payout of "10" is obtained. In the case of "5K" in which the symbol appears (or is stopped and displayed) in five places, a payout of "125" is obtained. Only for the payout by the symbol of "SARDINE," the number obtained by multiplying the value of the payouts shown in Fig. 12 with the total number of bets (product of the number of bets with the number of activated winning lines) is added to the credits. When there is any payout other than that caused by the symbol of "SARDINE," such payout is also added to the credits.

Further, the symbol of "SARDINE" is a trigger symbol to shift the game state to the bonus game and the player can move to the bonus game as well as obtain the above payout when the symbol appears (or is stopped and displayed) in four places at the same time in the variable display windows 21 through 25, irrespective of the activated winning line.

Further, in the slot machine 1 of Embodiment 1, the game will shift to the high probability mode from the base game when predetermined conditions are met. The predetermined conditions specified in Embodiment 1 include a case where the symbol of "WILD" is stopped in five places along an activated winning line during the base game, and when such conditions are met, the game will shifts to the high probability mode in which the winning combination (Fig. 12) is obtained at a higher probability from the next game (in this instance, one game covers a series of actions when a bet operation is performed on the basis of the currently owned credits so that the symbols are varied, stopped and displayed and the predetermined payout is made according to the combination of the stopped and displayed symbols) until a predetermined completion condition is met.

To be more specific, the high probability mode may be performed by replacing the first reel band 111 with a new sixth reel band 116 among the reel bands from the first reel band 111 through the fifth reel band 115, which are used to show the variable display in the variable display windows 21 to 25. Fig. 13A is a schematic diagram showing the reel band to be variably displayed and stopped and appearing at the variable display windows 21 through 25 in the base mode. Fig. 13B is a schematic diagram showing the reel band in the high probability mode. Fig. 14 is a schematic diagram showing the array of symbols on the sixth reel band to be displayed varyingly at the variable display window.

As shown in Fig. 13A, in the base mode, the five reel bands from the first reel band 111 to the fifth reel band 115 are used to perform the game, whereas in the high probability mode, as shown in Fig. 13B, the reel band which is displayed at the variable display window 21 is changed from the first reel band 111 to the sixth reel band 116.

As shown-in Fig. 14, the sixth reel band 116 contains the symbol (alphabet) of "WILD" and the symbol of "SARDINE" in a greater number than the first reel band 111. To be more specific, the symbol of "WILD" is available in two at the first reel band 111, whereas it is available in four at the Sixth reel band 116. Further, in the first reel band 111, the symbol of "SARDINE" is available in one, whereas in the sixth reel band 116, it is available in three. In this instance, as explained previously, the symbol of "WILD" is a wild symbol which is used in place of symbols ("LOBSTER," "SHARK," "FISH," "PUNK," "OCTOPUS," "CRAB," "WORM," "A," "K," "Q" and "J") other than the symbol of "SARDINE." In the high probability mode, an increase in the wild symbol will increase the probability of having any one of the winning combinations shown in Fig. 12. In a similar way, the symbol of "SARDINE" is a scatter symbol by which a payout of credits can be obtained when the symbol is stopped and displayed in two or more places in total of the variable display windows 21 through 25, irrespective of the activated winning line. In the high probability mode, the probability will be increased at which the symbol of "SARDINE" is stopped in two or more. Further, "SARDINE" is a bonus game transition symbol for shifting the game to the bonus game. An increased number of symbols of "SARDINE" will also elevate a probability to shift the game to the bonus game. Therefore, the shift to the high probability mode enables the player to obtain a greater number of payouts with the same number of bets than in the base mode (increase in payout ratio).

Then, the high probability mode will be ended when the number of games exceeds 20 after shifting to the high probability mode.

Conditions of starting and ending the high probability mode shall not be limited to the above-described condition. The conditions of starting the high probability mode may include, for example, a case of obtaining JP (jackpot), a case where a payout ratio is lower than a predetermined value (for example, 80%) and a case where a certain time has passed since start of the game. Further, the conditions of closing the high probability mode may include a case where the symbol of "WILD" is stopped again in five on an activated winning line, a case where a payout ratio is higher than a predetermined rate (for example, 90%), a case where a certain time has passed since start of the high probability mode, and a case where a predetermined number of credits are paid out from start of the high probability mode.

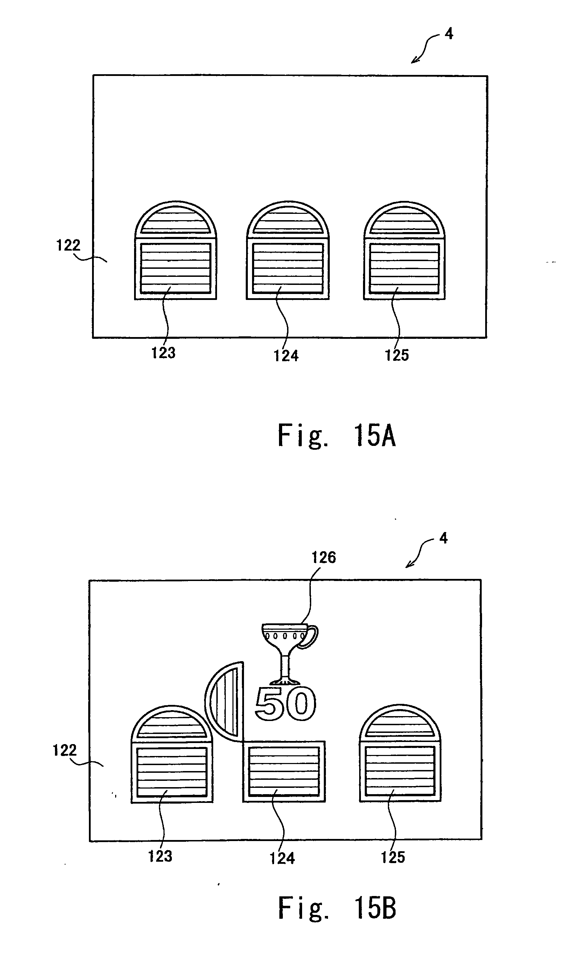

Next, an explanation will be made for the bonus game. In this instance, the bonus game is a special game to which the game is shifted in a case where the symbol of "SARDINE" appears (or is stopped and displayed) in four places at the same time, irrespective of the activated winning line, during the base game, as explained above. During the bonus game, the game will proceed according to an image displayed on the whole of the lower liquid crystal display 4 while the variable display windows 21 through 25 are not displayed on the lower liquid crystal display 4. Figs. 15A and 15B illustrate schematic diagrams showing the image displayed on the lower liquid crystal display 4 during the bonus game.

Here, the bonus game conducted in the slot machine 1 of Embodiment 1 is a selective type bonus game by which selection is made from a plurality of options displayed on the screen to add a payout. In this bonus game, as shown in Fig. 15A, a bonus game image 122 is displayed, in which a plurality of touch button areas 123 through 125 (treasure box shape) (three in Embodiment 1) are displayed as an option. Then, when any one of these a plurality of touch button areas 123 through 125 is touched by the firtger of the player, as shown in Fig. 15B, a treasure box will open the lid corresponding to the thus touched button area at the lower liquid crystal display 4, from which an item 126 appears, while gradually moving upward.

In this instance, a predetermined payout is set and allocated to each of the touch button areas 123 through 125 by the lottery process performed in the transition to the respective bonus games. As the result of appearance of the item 126, among payouts ("100," "50," "30," "20," "10" and "skull mark (end of bonus game)," any one of the allocated three payouts may be obtained (however, the skull mark is always allocated in one of them) refer to Fig. 16). For example, in Fig. 15B, when a payout of "50" is set in a touch button area 124, such results are shown that a treasure box of the touch button area 124 is selected and "grail" newly appears immediately on the touch button area 124 as an item 126, and further, the number of "50" is displayed, by which it is recognized that the player has obtained the payout of "50" credit.

Then, in a series of these bonus games, the game can be conducted continuously until a "skull mark (end of bonus game)" which is allocated to one of the selectable touch button areas 123 through 125 is picked while selecting the touch button areas 123 through 125 which imitate the treasure box at the lower liquid crystal display 4. The player may obtain as a payout of the bonus game all the payouts displayed until then on the lower liquid crystal display 4.

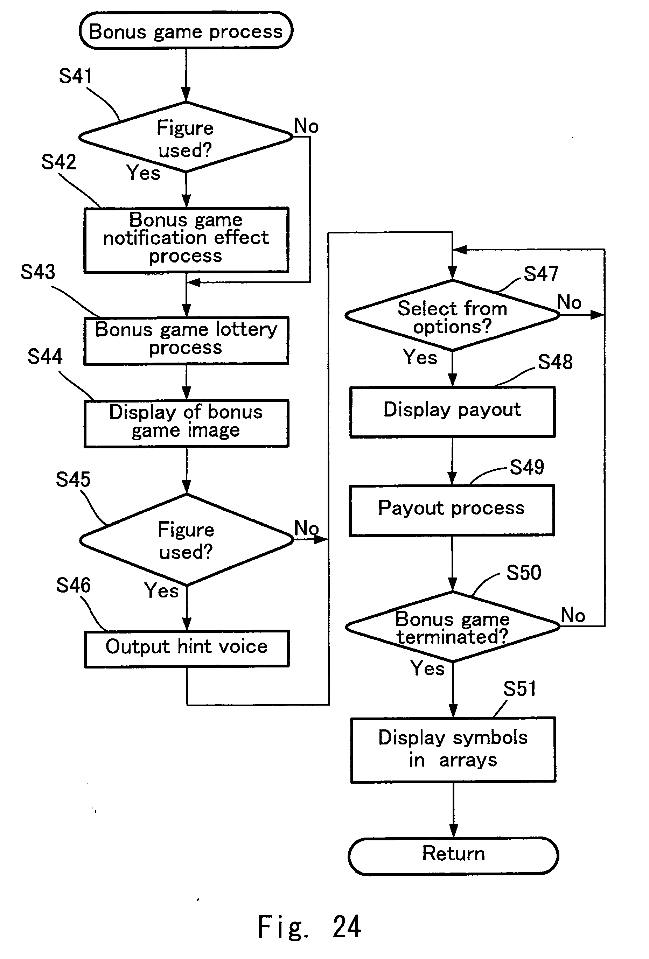

Further, in the slot machine 1 of Embodiment 1, when the game is shifted to the bonus game particularly in a state where one of the figures 13A through 13C (the figure 13A is "warrior man," the figure 13B is "witch" and the figure 13C is "female fortune teller") is placed on the authentication unit 7, the player is notified of an option having the highest payout among the touch button areas 123 through 125 by a hint in a voice related to the character of the one figure being placed on the authentication unit 7. The notification is given immediately after the bonus game image 122 is displayed (refer to S46 in Fig. 24).

For example, where, among the touch button areas 123 through 125, a payout of "10," a payout of "skull mark" and a payout of "50" are respectively allocated to the touch button area 123, the touch button area 124 and the touch button area 125, as a result of the lottery process, the touch button area 125 disposed on the right side of the lower liquid crystal display 4 is an option which provides the highest in payout. In this instance, Fig. 17 shows a list of sounds outputted from the speakers 5L and 5R, when the game is conducted, with the respective figures 13A through 13C placed.

As shown in Fig. 17, when the figure 13A (warrior man) is used to conduct the game, a male voice is generated, saying that "smell of treasures comes from the treasure box on the right." When the figure 13B (witch) is used to conduct the game, a female voice is generated, saying that "it may be good to select the box on the right." When the figure 13C (female fortune teller) is used to conduct the game, a female voice is generated, saying that "feel some strong force from the right side."

The player playing the bonus game is able to sense which of the touch button areas 123 through 125 is allocated with the highest payout by the sound outputted immediately after the bonus game image 122. Therefore, the player is more likely to obtain a greater number of payouts in the bonus game than a case where none of the figures 13A through 13C is used, thereby making it possible to provide more opportunities to the player by using the object to be read. Further, the player may feel greater sense of expectation to the game and an increased desire to play the game.

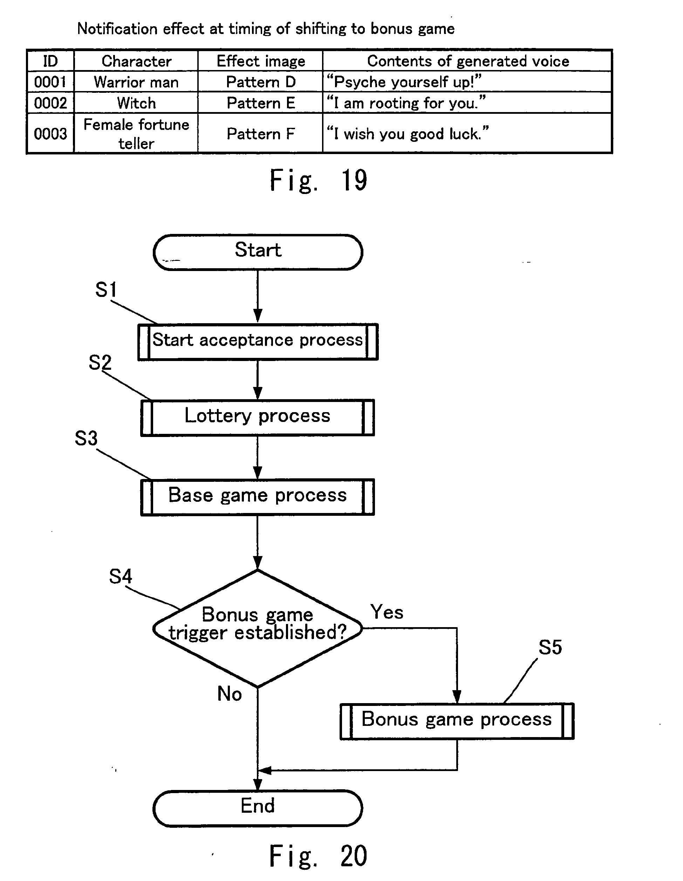

Next, an explanation will be made for the notification effect provided when the game is in transition state to the high probability mode or to the bonus game in the slot machine 1 by referring to Figs. 18 and 19. In this instance, in the slot machine of Embodiment 1, the image or the sound corresponding to any one character of the figures 13A through 13C is used to notify the player of the details of the game, when any one of the figures 13A through 13C (refer to Figs. 4A and 4B) is placed on the authentication unit 7 to shift the game to the high probability mode or to the bonus game.

First, an explanation will be made for the notification effect provided in transition state to the high probability mode by referring to Fig. 18. When the figure 13A is placed, the effect image 132 of a pattern A in which the character of "warrior man" is used (refer to Fig. 29) is displayed for a predetermined time (three seconds in Embodiment 1) on the lower liquid crystal display 4. At the same time, a male voice is generated from the speakers 5L and 5R, saying that "now is the chance. go!"

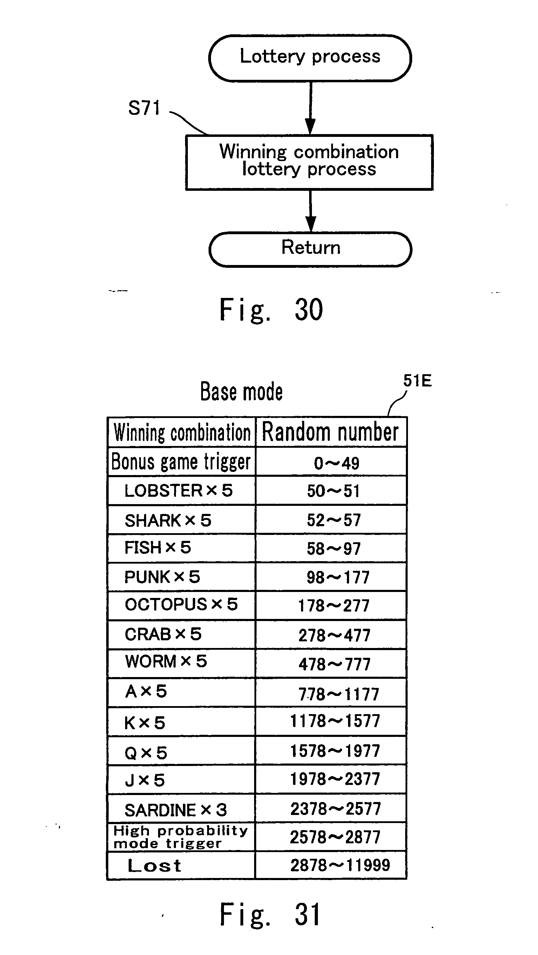

When the figure 13B is placed, the effect image 133 of a pattern B in which the character of "witch" is used (refer to Fig. 30) is displayed for a predetermined time (three seconds in Embodiment 1) on the lower liquid crystal display 4. At the same time, a female voice is generated from the speakers 5L and 5R, saying that "now is the chance. do your best!"

Further, when the figure 13C is placed, the effect image of a pattern C in which the character of "female fortune teller" is used (not illustrated) is displayed for a predetermined time (three seconds in Embodiment 1) on the lower liquid crystal display 4. At the same time, a female voice is generated from the speakers 5L and 5R, saying that "it is time to show your power!"

Next, an explanation will be made for the notification effect provided in the transition state to the bonus game by referring to Fig. 19. When the figure 13A is placed, the rendition image 130 of a pattern D in which the character of "warrior man" is used (refer to Fig. 26) is displayed for a predetermined time (three seconds in Embodiment 1) on the lower liquid crystal display 4. At the same time, a male voice is generated from the speakers 5L and 5R, saying to "psyche yourself up!"

When the figure 13B is placed, the effect image 131 of a pattern E in which the character of "witch" is used (refer to Fig. 27) is displayed for a predetermined time (three seconds in Embodiment 1) on the lower liquid crystal display 4. At the same time, a female voice is generated from the speakers 5L and 5R, saying that "I am rooting for you."

Further, when the figure 13C is placed, the effect image of a pattern F in which the character of "female fortune teller" is used (not illustrated) is displayed for a predetermined time (three seconds in Embodiment 1) on the lower liquid crystal display 4. At the same time, a female voice is generated from the speakers 5L and 5R, saying that "I wish you good luck..."

Therefore, providing the above effect notifies the player who is playing the game in the transition state to the bonus game and the high probability mode, and also the player gets a sense as if he or she had obtained the bonus game this time owing to placing the figures 13A through 3C, thereby increasing desire for the game. Further, providing various effects corresponding to figures 13A through 13C will prevent the player from being bored. It is also possible to provide a new effect as if the character actually spoke to the player by providing a voice corresponding to one of the thus placed figures 13A through 13C.

Next, an explanation will be made for the main processing program in the slot machine 1 of Embodiment 1 having the above constitution by referring to Fig. 20. Fig. 20 is a flow chart of the main processing program in the slot machine of Embodiment 1. Programs shown following flow charts of Figs. 20 through 25 are stored in the ROM 51 and the RAM 52 provided in the slot machine 1 and executed by the CPU 50.

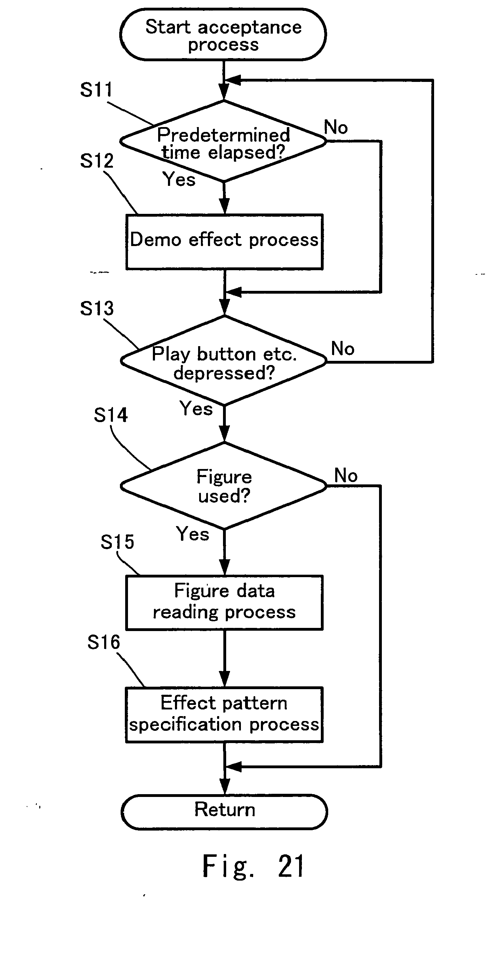

In Fig. 20, first, a start acceptance process of Fig. 21 to be explained later is conducted in the step (hereinafter abbreviated as "S") 1. This is a process of accepting switch signals outputted from 1-BET switch 57, 3-BET switch 58, 5-BET switch 59, 1-LINE switch 60, 5-LINES switch 61 and 20-LINES switch 62 on the basis of the operation of BET 1 PER LINE button 33, that of BET 3 PER LINE button 34, that of BET 5 PER LINE button 35, that of PLAY 1 LINE button 37, that of PLAY 5 LINES button 38 and that of PLAY 20 LINES button 39. The game will be started at the time of accepting the switch signals outputted from these switches.

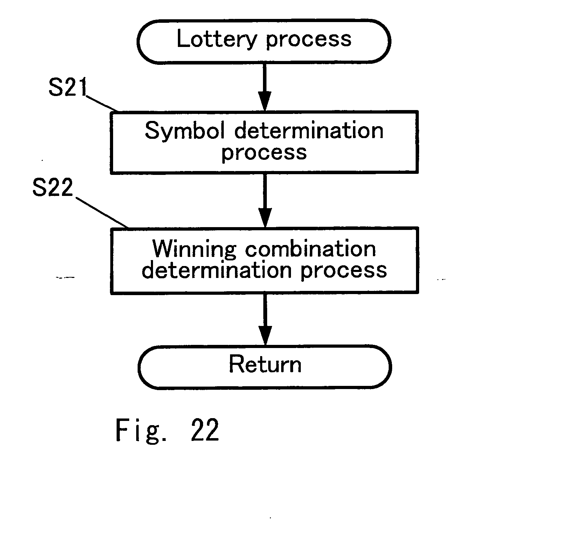

Then, the lottery process of Fig. 22 to be explained later is conducted in the S2 on the basis of the switch signals output from the 1-LINE switch 60, the 5-LINES switch 61 and the 20-LINES switch 62. In this instance, when the bonus game is obtained (the symbol of "SARDINE" is stopped and displayed in four places at the same time, irrespective of the activated winning line in the variable display windows 21 through 25), the bonus game is conducted after completion of the base game (refer to Fig. 24).

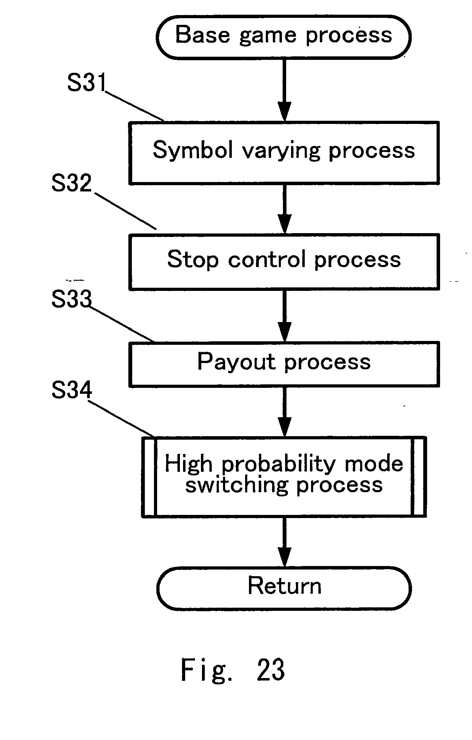

In the S3, the base game process of Fig. 23 to be explained later is conducted. Thereafter, the game proceeds to the S4, when it is determined whether the bonus game is won or not. To be more specific, when in the S2 lottery process, the symbol of "SARDINE" is stopped and displayed in four or more places in total, irrespective of the activated winning line in the variable display windows 21 through 25, the bonus game is obtained (S4 :YES). Therefore, the game proceeds to the S5 to complete the main processing program after the bonus game process of Fig. 24 to be explained later is conducted.

In contrast, in the S2 lottery process, when the symbol of "SARDINE" is not stopped and displayed in four or more places in total, irrespective of the activated winning line in the variable display windows 21 through 25, the bonus game is not obtained (S4: NO) and the main processing program is completed.

Next, an explanation will be made for the start acceptance process conducted at the S1 in the slot machine 1 of Embodiment 1 by referring to Fig. 21. Fig. 21 is a flow chart of the start acceptance processing program in the slot machine of Embodiment 1.

In the start acceptance process, first, the CPU 50 determines whether a predetermined time (for example, 15 seconds) has elapsed in the S11 or not. When it is determined that the predetermined time has not passed (S11: NO), the, game proceeds to the S13, with no action taken. When it is determined that the predetermined time has elapsed (S11 :YES), the game proceeds to the S13 after a demonstration effect is provided on the upper liquid crystal display 3 or the lower liquid crystal display 4 in the S12.

Then, it is determined in the S13 whether the operation of the PLAY 1 LINE button 37, the PLAY 5 LINES button 38 or the PLAY 20 LINES button 39 is conducted or not. In this instance, when it is determined that the operation of the PLAY 1 LINE button 37 or the others are not conducted (S13: NO), the game returns to the S11 and repeats the above-described processes. In contrast, when it is determined that the operation of the PLAY 1 LINE button 37 or others is conducted (S13: YES), the game proceeds to the S14, a figure placement determination process, even when the demonstration effect is in progress.

The determination in the S13 may be made by referring to other input signals, in addition to these operation signals.

It is determined in the S14 whether the figures 13A through 13C (refer to Figs. 4A and 4B) are placed on the authentication unit 7 or not. To be more specific, an IC tag reader / writer 107 is used to determine whether data communications can be made with the IC tag 93 built in the base portion 90 of each of the figures 13A through 13C. When it is determined that none of the figures 13A through 13C is placed (S14: NO), the game completes the start acceptance process and proceeds to the lottery process (S2).

In contrast, when it is determined that any one of the figures 13A through 13C is placed on the authentication unit 7 (S14: YES), the IC tag reader / writer 107 is used to read data of the IC tag 93 built in the thus placed figure (S15). Data read in this instance includes the figure ID unique to each of the figures 13A through 13C.

Then, in the S16, effect patterns given in the transition state to the high probability mode and the bonus game are specified on the basis of the figure ID read at the above 515. The specified effect patterns include effect images (patterns A through F) corresponding to each character displayed on the lower liquid crystal display 4 and sounds corresponding to each character outputted from the speakers 5L and 5R (refer to Figs. 17 through 19). After the setting for the game is changed, the start acceptance process is completed and proceeds to the lottery process (S2).

Next, an explanation will be made for the lottery process conducted in the S2 with the slot machine 1 of Embodiment 1 in referring to Fig. 22. Fig. 22 is a flow chart of the lottery process program in the slot machine of Embodiment 1.

In the lottery process, first, a symbol determination process is conducted in the S21. In this instance, the symbol stopped and displayed on the first winning line L1 in the base game is determined for each of the variable display windows 21 through 25. More particularly, as explained previously, five random number values corresponding to each of the variable display windows 21 through 25 are sampled by the random number sampling circuit 56 to determine the code numbers from the symbol lottery table 51A. Further, among the code numbers and the first reel band 111 through the sixth reel band 116, a symbol to be stopped and displayed is determined for each of the variable display windows 21 through 25 on the basis of the five reel bands used according to the present game setting. In this instance, the first reel band 111 is used in the base mode as the symbol is stopped and displayed in the variable display window 21, whereas the sixth reel band 116 is, used in place of the first reel band 111 in the high probability mode to determine the symbol to be stopped and displayed in the variable display window 21.

When the symbols to be stopped and displayed on the activated winning line are determined, a winning combination determining process is conducted in the S22, and then the process returns to the main processing program, proceeding to the base game process in the S3. Further, in the combination determining process, to be more specific, a combination and its payout are determined, for example, on the basis of the symbol determined in the S21 and the payout table 51B of Fig. 12.

Further, when the slot machine 1 is still in the high probability mode, as described previously, the sixth reel band 116 (refer to Fig. 14) is used in place of the first reel band 111 to vary, stop and display the symbols in the variable display window 21. Then, since the sixth reel band 116 is symboled so as to contain a greater number of symbols of "WILD" and "SARDINE" than the first reel band 111, there is higher probability to obtain any one of winning combinations (a higher payout ratio).

Next, an explanation will be made for the base game process conducted at the S3 in the slot machine 1 of Embodiment 1 by referring to Fig. 23. Fig. 23 is a flow chart of the base game processing program of the slot machine of Embodiment 1.

In the base game process, first, in the S31, each of the symbols are scrolled in the variable display windows 21 through 25 on the basis of switch signals outputted from the 1-LINE switch 60, the 5-LINES switch 61, and the 20-LINES switch 62 accepted in the start acceptance process (S1).

Then, in the S32, each of the symbols are stopped for scrolling at the variable display windows 21 through 25 in which the symbols are scrolled.

Further, in the S33, the credits and others corresponding to the payouts determined on the basis of the payout table 51B of Fig. 12 are paid out according to the symbol combination stopped and displayed at the variable display windows 21 through 25 in the S32.

Thereafter, in the S34, the changing mode process between the high probability mode and the base mode (including a game state other than the high probability mode such as the base game and the bonus game) is conducted. The changing mode process will be explained later. After the process in the S34, the game returns to the main processing program and proceeds to the determination process of the S4.

Next, an explanation will be made for the bonus game processing program conducted in the slot machine 1 by referring to Fig. 24. Fig. 24 is a flow chart of the bonus game processing program. In the slot machine 1 of the present embodiment, the process concerned is conducted when it is determined that the trigger of the bonus game is established in the S4 of the main processing program.

First, it is determined whether any one of the figures 13A through 13C is placed or not on the authentication unit 7 according to the determination result in the step S14. Then, the game proceeds to the S43 when it is determined that none of the figures 13A through 13C is placed (S41: NO).

On the other hand, when it is determined that any one of the figures 13A through 13C is placed (S41: YES), a bonus game notification effect process is conducted to notify the player of the bonus game to be started (S42). In the bonus game notification effect process, the placed figure is specified from the figures 13A through 13C by referring to data of the IC tag 93 read in the figure reading process of the S16 to provide effects corresponding to an appearance of each character of these

To be more specific, when it is determined that the figure 13A is placed, as shown in Fig. 26, the effect image 130 using letters of "Bonus Time!" and the character of "warrior man" is displayed on the lower liquid crystal display 4, and at the same time, a male voice is generated from the speakers 5L and 5R, saying to "psyche yourself up!"

When it is determined that the figure 13B is placed, as shown in Fig. 27, the effect image 131 using letters of "Bonus Time!" and the character of "witch" is displayed on the lower liquid crystal display 4, and at the same time, a female voice is generated from the speakers 5L and 5R, saying that "I am rooting for you!"

Further, when it is determined that the figure 13C is placed, the effect image (not illustrated here) using letters of "Bonus Time!" and the character of "female fortune teller" is displayed on the lower liquid crystal display 4, and at the same time, a female voice is generated from the speakers 5L and 5R, saying that "I wish you good luck..."

Therefore, providing the above effect notifies the player who is playing the game of the transition state to the bonus game, and also the player feels a sense as if the player had obtained the bonus game this time owing to placing one of the figures 13A through 13C, thereby increasing the desire for the game. Further, providing various effects corresponding to figures 13A through 13C will prevent the player form being bored. It is also possible to provide a new effect as if the character of each of the thus placed figures 13A through 13C actually spoke to the player by providing a voice corresponding to each character.

Thereafter, a lottery process of the bonus game is conducted (S43). The lottery process is to allocate predetermined payouts ("100," "50," "30," "20," "10" and "skull mark (end of bonus game)") to the touch button areas 123 through 125 which act as options in the bonus game.

In the slot machine 1 of the present embodiment, as explained previously, the bonus game makes it possible to obtain any one of the payouts shown in Fig. 16 ("100," "50," "30," "20," "10" and "skull mark (end of bonus game)") (refer to Fig. 15) by selecting any one of the touch button areas 123 through 125 which are shaped like a treasure box, thereby allowing the item 126 to appear.

In the lottery process of the bonus game concerned, random number values sampled by the random number sampling circuit 119 are used to allocate any one of the payouts ("100," "50," "30," "20," "10" and "skull mark (end of bonus game)") respectively to the touch button areas 123 through 125. However, in this lottery, a payout of "skull mark (end of bonus game)" is allocated inevitably at least to one of the touch button areas 123 through 125.

The lottery process of the S43 may be conducted immediately after proceeding to the bonus game process.

Then, in the S44, images related to the bonus game are displayed (refer to Fig. 15A). In the bonus game, as described previously, the touch button areas 123 through 125 which are shaped like a treasure box are respectively displayed. Thereafter, the game proceeds to the S45.

In the step S45, it is determined whether any one of the figures 13A through 13C is placed on the authentication unit 7 on the basis of the determination result in the step S14. Then, the game proceeds to the step S47 when it is determined that none of the figures 13A through 13C is placed (S45: NO).

On the other hand, when it is determined that any one of the figures 13A through 13C is placed (S45: YES), the player is notified as shown in Fig. 17 of an option to which the highest payout is allocated among the touch button areas 123 through 125, on the basis of the lottery result of the step S43 by a voice corresponding to each of characters of the figures 13A through 13C ("warrior man" for the figure 13A, "witch" for the figure 13B and "female fortune teller" for the figure 13C) (S46).

The player who is playing the bonus game is able to recognize an option having the highest payout which is allocated to any one of the touch button areas 123 through 125 by referring to the sound output immediately after display of the bonus game image 122. Therefore, the player is more likely to have a greater number of payouts than a case where he or she does not use any one of the figures 13A through 13C in the bonus game, thereby providing to the player an increased number of opportunities to use the object to be read. The player is also feels a greater sense of expectation to the game and an increased desire to play the game.

Then, in the step S47, it is determined whether any one of the touch button areas 123 through 125 is selected or not. To be more specific, it is determined whether any one of the touch button areas 123 through 125 displayed on the lower liquid crystal display 4 is touched by the finger of the player or not.

When it is determined that none of the touch button areas is selected (S47: NO), the process returns to the S47 and continues to display the touch button areas 123 through 125 which are shaped like a treasure box on the lower liquid crystal display 4. On the other hand, when it is determined that one of the areas is selected (S47: YES), the game proceeds to the step S48.

In the step S48, any one of the payouts ("100," "50," "30," "20," "10" or "skull mark (end of bonus game)") allocated to areas of the lower liquid crystal display 4 corresponding to the selected touch button areas 123 through 125 is displayed (refer to Fig. 15B).

Further, it is displayed that these selected touch button areas 123 through 125 have already been selected. To be more specific, for example, as shown in Figs. 15A and 15B, when an option group is composed of treasure boxes, the selected treasure box is displayed in such an aspect as the box is opened, by which the player knows the box has been selected. However, the thus selected treasure box may be displayed to have been already selected by erasing it or superimposing letters or symbols such as "checked of" or "X " thereon.

Then, in the step S49, a payout process is conducted. In this payout process, the payout allocated to the above selected touch button areas 123 through 125 is added to the credits.

Further, in the S50, it is determined whether the bonus game is completed or not. To be more specific, it is determined whether the player picks a "skull mark (end of bonus game)", which is allocated to one of the touch button areas 123 through 125 selected in the S47 or not. In this instance, when it is determined that the bonus game is not yet completed (S50: NO), the game returns to the above described step S47 to repeat the processes in the steps S48 and S49. On the other hand, when it is determined that the bonus game has been completed (S50: YES), the game proceeds to the step S51.

In the step S51, a display of the lower liquid crystal display 4 is returned to a screen of the base game (in a state that arrays of symbols are displayed at the variable display windows 21 through 25) from a screen of the bonus game 122. Then, the arrays of symbols are varied, stopped and displayed at the displayed variable display windows 21 through 25, thereby conducting the base game for the next game. Thereafter, the process returns to the main processing program.

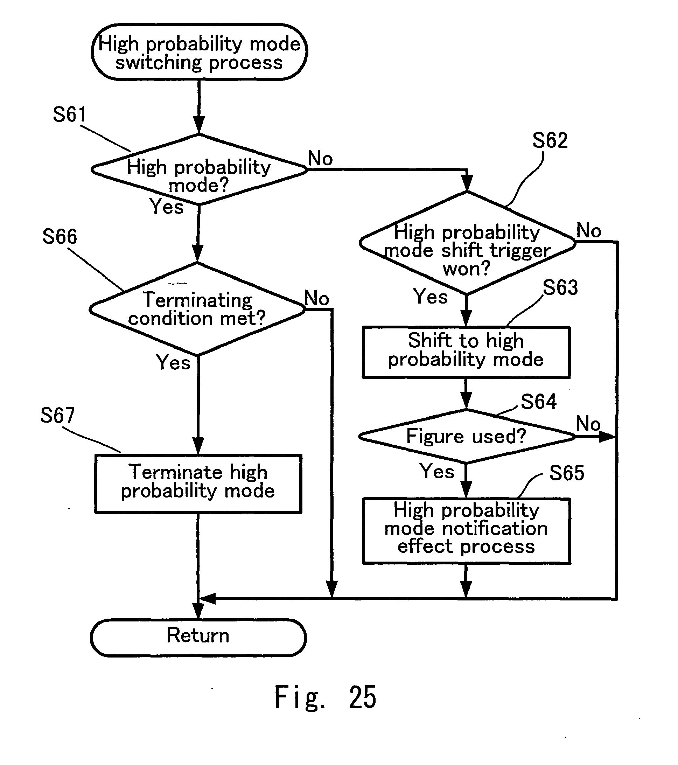

Next, an explanation will be made for the changing mode process to the high probability mode to be conducted in the step S34 by referring to Fig. 25. Fig. 25 is a flow chart of the high probability mode change-over processing program of the slot machine of Embodiment 1.

In the high probability mode change-over process, first, the CPU 50 determines whether the present slot machine 1 is in the high probability mode or not in the-step S61. The slot machine 1 is provided with two game aspects, namely, the above described base game and bonus game, and the base game is further separated into two game aspects, the high probability mode and the base mode (a game state other than the high probability mode). These modes are changed over when predetermined conditions are met.

When the slot machine 1 is not in the high probability mode at present (S61: NO), it is determined whether a winning combination determined in the step S22 can be a trigger for the transition state to the high probability mode or not (S62). In the slot machine 1 of Embodiment 1, as explained previously, when the symbol of "WILD" is stopped in five on an activated winning line, the game proceeds to the high probability mode.

Then, when the above trigger is obtained (S62: YES), the game proceeds to the high probability mode in the S63. After proceeding to the high probability mode, the reel band which displays the symbols at the variable display window 21 are changed from the first reel band 111 to the sixth reel band 116 (refer to Figs. 13A and 13B), and the second reel band 112 through the sixth reel band 116 are used to vary, stop and control the symbols at the variable display windows 21 through 25 from the next game. In this instance, as shown in Fig. 14, since the sixth reel band 116 contains the symbol (alphabetic letters) "WILD" and the symbol (sardine) of "SARDINE" in a greater number than the first reel band 111, there is an increased probability to obtain a combination of any one of the winning symbols shown in Fig. 12. Therefore, transition to the high probability mode enables the player to obtain a greater number of payouts with the same number of bets (increase in the payout ratio).

Thereafter, in the S64, it is determined on the basis of the determination result in the step S14 whether any one of the figures 13A through 13C is placed on the authentication unit 7 or not. Then, when it is determined that none of the figures 13A through 13C is placed (S64: NO), the high probability mode change-over process is completed.

On the other hand, when it is determined that any one of the figures 13A through 13C is placed (S64: YES), the high probability mode notification effect process is conducted to notify the player of the fact that the game has been shifted to the high probability mode (S65). In the bonus game notification effect process, the placed figure is specified among the figures 13A through 13C by referring to data of the IC tag 93 read in the figure reading process of the S16 to provide effects corresponding to an appearance of each character of these figures for a predetermined period of time (three seconds in Embodiment 1).

To be more specific, when it is determined that the figure 13A is placed, as shown in Fig. 28, the effect image 132 using letters of "Special Time!!" and the character of "warrior man" is displayed on the lower liquid crystal display 4, and at the same time, a male voice is generated from the speakers 5L and 5R, saying "psyche yourself up!"

When it is determined that the figure 13B is placed, as shown in Fig. 29, the effect image 133 using letters of "Special Time!!" and the character of "witch" is displayed on the lower liquid crystal display 4, and at the same time, a female voice is generated from the speakers 5L and 5R, saying that "I will rooting for you!"

Further, when it is determined that the figure 13C is placed, the effect image (not illustrated here) using letters of "Special Time!!" and the character of "female fortune teller" is displayed on the lower liquid crystal display 4, and at the same time, a female voice is generated from the speakers 5L and 5R, saying that "I wish you good luck..."

Therefore, providing the above effect notifies the player who is playing the game of the transition state to the high probability mode, and also the player feels a sense as if he or she had obtained the bonus game at this time owing to placing one of the figures 13A through 13C. Further, providing various effects corresponding to figures 13A through 13C will prevent the player from being bored. It is also possible to provide a new effect as if the character of the thus placed figure among the figures 13A through 13C actually spoke to the player by providing a sound corresponding to each of these characters.

When the slot machine 1 is at present in the high probability mode (S61: YES), it is determined whether the conditions of completing the high probability mode are met or not (S66). In the slot machine 1 of Embodiment 1, as explained previously, such completion conditions are set that the number of games after the transition to the high probability mode exceeds 20.

Then, when the CPU 50 determines that the above conditions are met (S66: YES), the high probability mode is completed (S67). On completion of the high probability mode, a reel band which displays the symbol at the variable display window 21 is returned from the sixth reel band 116 to the first reel band 111, and the first reel band 111 through the fifth reel band 115 are used from the next game to vary, stop and control the symbols at the variable display windows 21 through 25.

On the other hand, when it is determined that the completion conditions are not met (S66: NO), the high probability mode is continued and the high probability mode change-over process is completed.

As explained above, in the slot machine 1 of Embodiment 1, the player plays the game, with one of the figures 13A through 13C placed on the slot machine 1 (S14: YES), thereby making it possible to read a type of figure from the IC tag 93 built in the figures 13A through 13C respectively (S15). At the same time, thus read type of figure is used to specify an effect pattern corresponding to an appearance of the character of the figure (S16) and when the game is shifted to the bonus game and the high probability mode, such an effect is provided so that the player is notified of being shifted to the bonus game or the high probability mode (S42, S65). Therefore, the player feels a sense as if he or she had obtained the bonus game this time owing to placing one of the figures 13A through 13C. Further, the player is not bored due to various effects corresponding to the figures 13A through 13C.

It is possible to provide a new effect as if a character of the thus placed figure of the figures 13A through 13C actually spoke to the player by providing a sound corresponding to the character. It is also possible to select the effect to be provided by changing the figure used by the player, thereby providing a highly enjoyable game which can satisfy the desires of various players.

In the bonus game, a sound corresponding to the character of any one of the figures 13A through 13C notifies the player of an option to which the highest payout is allocated among the touch button areas 123 through 125 (S46) so that the player playing the bonus game is able to recognize which option is allocated with the highest payout among the touch button areas 123 through 125. Therefore, the player is more likely to have a greater number of payouts than a case where he or she does not use any one of the figures 13A through 13C in the bonus game, thereby providing to the player an increased opportunity to use the object to be read. The player is also given a greater sense of expectation to the game and increased desire to play the game.

(Embodiment 2)

Then, an explanation will be made for the slot machine of Embodiment 2 by referring to Figs. 30 through 32. Here, the same symbol used for the same elements of the slot machine 1 of Embodiment 1 shown in the Figs. 1 through 29 will be used in the following explanation to indicate the same or equivalent elements of the slot machine 1 and the like of Embodiment 1.

The overall configuration of the slot machine of Embodiment 2 is similar to that of the slot machine 1 of Embodiment 1. Each control process is also similar to that of the slot machine 1 of Embodiment 1.

In the slot machine 1 of Embodiment 1, in stopping and controlling a symbol at the variable display windows 21 through 25, five random number values corresponding to each of the variable display windows 21 through 25 are sampled by the random number sampling circuit 56, and the thus obtained random number values, code numbers determined by the symbol lottery table 51A as well as the first reel band 111 through the fifth reel band 115 (the second reel band 112 through the sixth reel band 116 in the high probability mode) are used to determine stop symbols (S21), and symbols to be stopped and displayed and the payout table 51B of Fig. 12 are used to determine a winning combination and its payout (S22). However, in the slot machine of Embodiment 2, random number values are used to directly decide the winning combination, which is different from the slot machine 1 of Embodiment 1.

Further, with regard to the high probability mode, in the slot machine 1 of Embodiment 1, a symbol to be varied, stopped and displayed at the variable display window 21 is changed from the first reel band 111 to the sixth reel band 116, thereby allowing a probability of obtaining the winning combination to change (the payout ratio is also changed as a result), whereas in the slot machine of Embodiment 2, a table which is used in deciding the winning combination is changed based on the random number values, which is different from the slot machine 1 of Embodiment 1. Therefore, the slot machine of Embodiment 2 is not necessary to change the symbol of the reel for changing the probability of obtaining the winning combination, and can be used not only as a slot machine in which a video reel is used (an example to be explained later) but also as a slot machine in which a mechanical reel is used.

First, an explanation will be made for the lottery process conducted in the S2 for the main processing program in the slot machine of Embodiment 2 by referring to Fig. 30. Fig. 30 is a flow chart of the lottery process program in the slot machine of embodiment 2. Each of programs of the flow chart in Fig. 30 is stored in the ROM 51 and the RAM 52 provided in the slot machine of embodiment 2 and executed by the CPU 50.

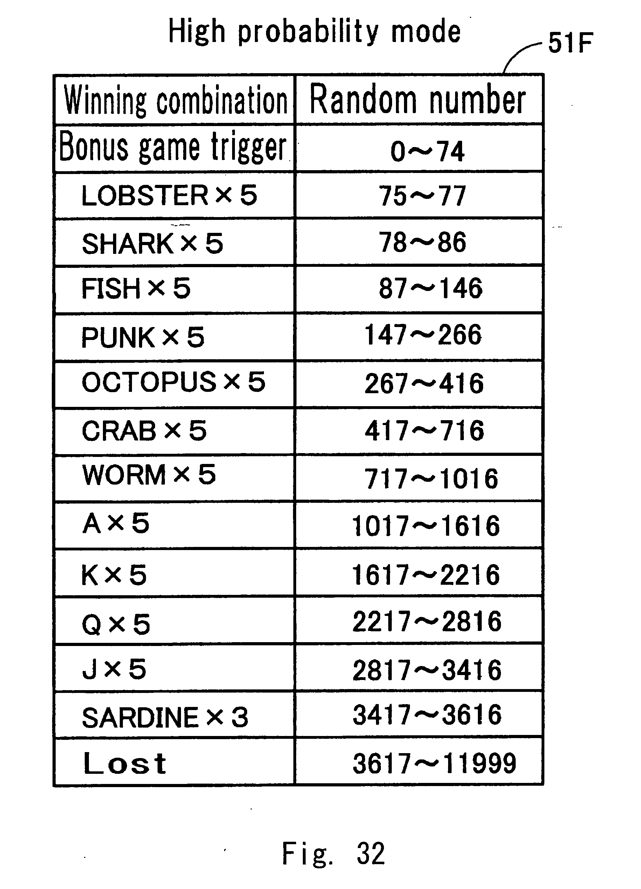

In the lottery process, first, a winning combination lottery process is conducted in the S71. In this instance, the CPU 50 uses winning combination lottery tables 51E and 51F to draw a winning combination of symbols to be stopped and controlled at the variable display windows 21 through 25 in a base game (refer to Figs. 31 and 32). Then, when the winning combination is determined, the process returns to the main processing program and proceeds to the base game process in the S3. In the base game process, the symbols are stopped and controlled on the basis of the determined winning combination.

Next, an explanation will be made for winning combination lottery tables 51E and 51F used in the winning combination lottery process of the S71.

In the slot machine 1 of Embodiment 2, the ROM 51 stores respectively the base winning combination lottery table 51E used in drawing a winning combination in a base mode and the high probability winning combination lottery table 51F used in drawing a winning combination in the high probability mode. In the base mode, the base-use winning combination lottery table 51E is used to determine the winning combination. In the high probability mode, the high probability winning combination lottery table 51F is used to determine the winning combination.

First, an explanation will be made for the base winning combination lottery table 51E used in the base mode by referring to Fig. 31. Fig. 31 is a drawing showing the base winning combination lottery table in Embodiment 2.

As shown in Fig. 31, random number values used in the base winning combination lottery table 51E are in a range from 0 to 11999, and when random number values sampled via the random number sampling circuit 56 are in a range from 0 to 49, a trigger of the bonus game is obtained. In this instance, irrespective of a winning line, the symbol of "SARDINE" is stopped and displayed in four or more places at the same time to shift the game state to the bonus game. Further, when random number values sampled via the random number sampling circuit 56 are in a range from 50 to 51, a winning combination of "LOBSTER" is obtained. Then, the symbol of "LOBSTER" is stopped and displayed in five places on the activated winning line. When random number values sampled via the random number sampling circuit 56 are in a range from 52 to 57, a winning combination of "SHARK" is obtained. Then, the symbol of "SHARK" is stopped and displayed in five places on the activated winning line. Hereinafter, in a similar way, when random number values are in a range from 58 to 97, a winning combination of "FISH" is obtained. When they are from 98 to 177, that of "PUNK" is obtained, when from 178 to 277, that of "OCTOPUS" is obtained, when from 278 to 477, that of "CRAB" is obtained, when from 478 to 777, that of "WORM" is obtained, when from 778 to 1177, that of "A" is obtained, when from 1178 to 1577, that of "K" is obtained, when from 1578 to 1977, that of "Q" is obtained, and when from 1978 to 2377, that of "J" is obtained. When from 2378 to 2577, the symbol of "SARDINE" is stopped and displayed in three irrespective of the winning line. Further, when from 2578 to 2877, a trigger which transits to the high probability mode is obtained and the symbol of "WILD" is stopped in five places along the winning line.

On the other hand, when random number values sampled via the random number sampling circuit 56 are in a range from 2878 to 11999, the game is lost and losing symbol combination which does not become winning combinations is stopped and displayed.

Next, an explanation will be made for the high probability winning combination lottery table 51F used in the high probability mode by referring to Fig. 32. Fig. 32 is a drawing showing the high probability winning combination lottery table in Embodiment 2.

As shown in Fig. 32, random number values used in the high probability winning combination lottery table 51F are in a range from 0 to 11999, same as the base winning combination lottery table 51E and, when random number values sampled via the random number sampling circuit 56 are from 0 to 74, a trigger of the bonus game is obtained. In this instance, the symbol of "SARDINE" is stopped and displayed in four or more places at the same time, irrespective of the winning line, and the game shifts to the bonus game. When random number values sampled via the random number sampling circuit 56 are from 75 to 77, a winning combination of "LOBSTER" is obtained. Then, the symbol of "LOBSTER" is stopped and displayed in five places on the activated winning line. When random number values sampled via the random number sampling circuit 56 are from 78 to 86, a winning combination of "SHARK" is obtained. Then, the symbol of "SHARK" is stopped and displayed in five places on the activated winning line. Hereinafter, in a similar way, when random number values are in a range from 87 to 146, a winning combination of "FISH" is obtained. When they are from 147 to 266, that of "PUNK" is obtained, when from 267 to 416, that of "OCTOPUS" is obtained, when from 417 to 716, that of "CRAB" is obtained, when from 717 to 1016, that of "WORM" is obtained, when from 1017 to 1616, that of "A" is obtained, when from 1617 to 2216, that of "K"is obtained, when from 2217 to 2816, that of "Q" is obtained, and when from 2817 to 3416, that of "J" is obtained. Further, when from 3417 to 3616, the symbol of "SARDINE" is stopped and displayed in three places, irrespective of the winning line.

On the other hand, when random number values sampled via the random number sampling circuit 56 are in a range from 3617 to 11999, a game is lost and losing symbol combination which does not become winning combinations is stopped and displayed.

In this instance, for example, the probability that the bonus trigger is obtained and the symbol of "SARDINE" is stopped and displayed in four or more places at the same time is 50/12000 in the base mode and 75/12000 in the high probability mode. Further, the probability that the winning combination of "LOBSTER" is obtained and the symbol of "LOBSTER" is stopped and displayed in five places along the activated winning line is 2/12000 in the base mode and 3/12000 in the high probability mode. In a similar way, in other winning combinations, the probability of obtaining the winning combination is higher in the high probability mode than in the base mode. Therefore, transition to the high probability mode enables the player to obtain a greater number of payouts with the same number of bets than in the base mode (increase in payout ratio).

As explained above, in the slot machine 1 of Embodiment 2, the player plays the game, with one of the figures 13A through 13C placed on the slot machine 1, thereby making it possible to read a type of figure from the IC tag 93 respectively built in the figures 13A through 13C. The thus read type of figure is used to specify an effect pattern corresponding to an appearance of the character of the figure and when the game is shifted to the bonus game and the high probability mode, such effect that the player is notified of the shift is provided. Therefore, the player feels a sense as if he or she had obtained the bonus game this time owing to placing one of the figures 13A through 13C, thereby increasing a sense of expectation to the game. Further, the player is not bored due to various effects corresponding to the figures 13A through 13C. It is also possible to provide a new effect as if the character of the thus placed figure of the figures 13A through 13C actually spoke to the player by providing a voice corresponding to these characters.

It should be understood that the present invention shall not be limited to the foregoing embodiments and, as a matter of course, it may be improved or modified in various ways within the scope of the present invention.

For example, in Embodiments 1 and 2, figures 13A through 13C imitating characters ("warrior man," "witch" and "female fortune teller") (refer to Figs. 4A and 4B) are used to conduct the game in the slot machine when an IC tag 93 storing various data is built in the base portion 90 of the figure. An IC card may be used in which an IC tag is built in place of the figure. A character corresponding to an ID stored in the IC tag (for example 0001 is "warrior man," 0002 is "witch" and 0003 is "female fortune teller") is printed on the IC card, by which the player is able to play the game following various effect patterns corresponding to the used IC card.

Further, in Embodiments 1 and 2, effects are provided by an image and a sound corresponding to the placed character of the figures 13A through 13C ("warrior man," "witch" and "female fortune teller"). However, effects may be provided by using BGM and sound effects corresponding to the characters. Further, help information on the game may be provided by outputting a sound and an image corresponding to the characters, by which the player can play the game more comfortably.

The play history of each figure stored in the play history storage areas 93B of figures 13A through 13C may be used to change effects thereof. For example, a figure that has been used many times may be used to provide more diversified effects. Further, the play history may be stored so as to correspond to each ID of the figures in the storage area inside the slot machine.

In Embodiments 1 and 2, an explanation has been made for the slot machine 1 as a gaming machine of the present invention. However, in addition to the slot machine 1, for example, the present invention may be applicable to a card game machine with which a poker game, blackjack and others can be played. In this instance, besides effects, for example, hints related to the cards and others may be outputted by using images and sounds corresponding to placed characters of the figures 13A through 13C ("warrior man," "witch" and "female fortune teller").

In the following, Embodiments 3 and 4 will be explained. The common explanation of Embodiments 3 and 4 to that of Embodiments 1 and 2 will be omitted.

In Embodiments 3 and 4, five of the respective stop-and-display areas as shown in Fig. 2 are employed. In this slot game (the base game and the bonus game), there are provided 20 winning lines which are formed with five of the respective stop-and-display areas of 211 through 213, 221 through 223, 231 through 233, 241 through 243 and 251 through 253. In these winning lines, if activated, a payout is made when the symbols are respectively stopped and displayed and when predetermined symbols are arranged. Here, an explanation will be made for each winning line.

In the same way of Embodiment 1 as shown in Figs. 4A and 4B, the figures 13A and 13B of Embodiment 3 is basically composed of a base portion 90 and a figure main body 91.

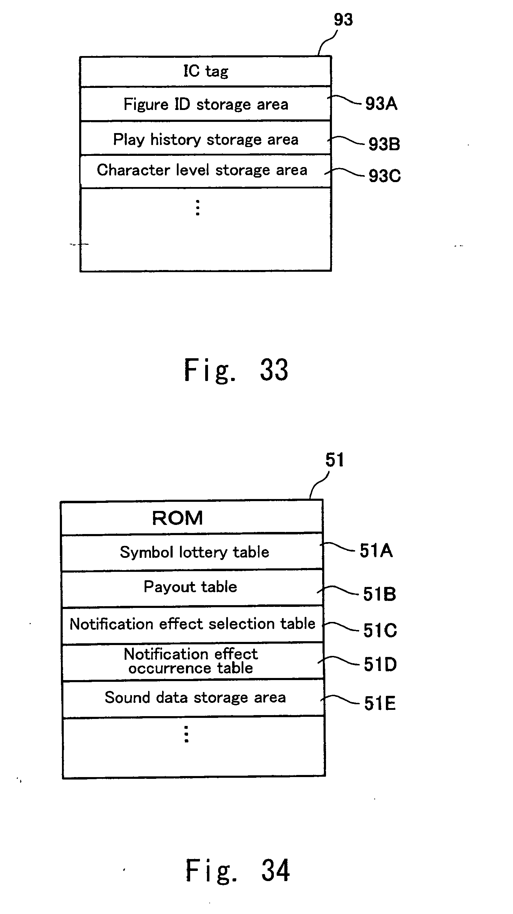

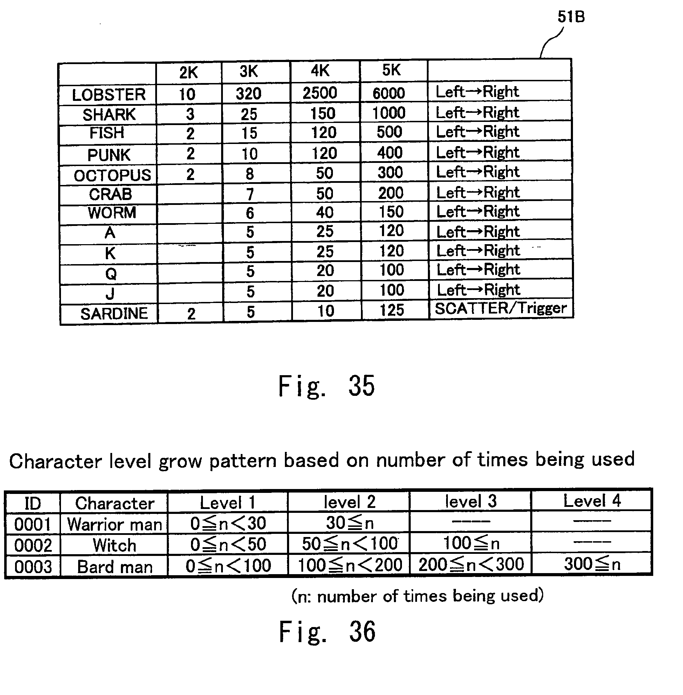

The IC tag 93 stores a figure ID unique to the character, the number of times that the figures 13A and 13B have been used with the slot machine 1, the character level gradually growing according to the number of times being used (refer to Fig. 36), and the like (refer to Fig. 33).

The figure main body 91 is formed with synthetic resin or the like in a shape of a doll depicting a specific character. In this instance, the figure 13 used in the slot machine 1 of Embodiment 1 is available in three types of characters, namely, figures 13A through 13C, which are "warrior man," "witch" and "bard man". The figure main body 91 for each of these figures 13A through 13C is fixed upright in relation to the base portion 90. In the figure 13A of warrior man, a doll depicting a male warrior is fixed to the base portion 90 as a figure main body 91 (refer to Fig. 4A). Further, in the figure 13B of witch, a doll depicting a witch is fixed to the base portion 90 as a figure main body 91 (refer to Fig. 4B). In addition, in the figure 13C of bard man, a doll depicting a bard man is fixed to the base portion 90 as a figure main body 91 (not illustrated). Figs. 4A and 4B illustrate only figures of the warrior man 13A and the witch 13B among these three types of figures.

Each of these figures 13A through 13C is put in a capsule with a predetermined size and distributed by a special vending machine installed separately from the slot machine 1.

Then, the player is able to distinguish these figures 13A through 13C by referring to the figure main body 91, and the slot machine 1 is able to distinguish these figures 13A through 13C by reading the figure ID which is stored in the IC tag 93 of each figure.

Here, an explanation will be made for each storage area provided in the IC tag 93 built in each of the figures 13A to 13C. Fig. 33 is a schematic diagram showing each storage area of the IC tag.

As shown in Fig. 33, the IC tag 93 is provided with a figure ID storage area 93A in which a figure ID or a unique value for each of the figures 13A through 13C (for example, 0001 for the figure 13A (warrior man), 0002 for the figure 13B (witch) and 0003 for the figure 13C (bard man)) is stored in advance and a play history storage area 93B in which information is stored and renewed for each game wherein the information comprises about how many times the IC tag 93 built-in figure 13 is used in the slot machine 1 to play the game (in this instance, one game is composed of a series of actions in which bet operations are performed on the basis of the presently available credits so that symbols are moved (or varied) and stopped to appear in the variable display windows, and other various operations (bonus game process, payout process, etc.) are conducted according to the combination of the appearing symbols). Further, a character level storage area 93C is also provided, in which the character level growing gradually on the basis of the play history (growing from level 1 to level 2 and further to level 3 and further to a higher level as the number of usage is increased) is stored. Then, in the slot machine 1 of Embodiment 3, as will be explained later, a notification effect of winning the bonus game performed in the game (displaying contents on the display and emitting sounds from the speakers) can be varied to the figure ID (types of the figure) and the character level.

Now, since an explanation for the authentication unit 7 provided on the slot machine 1 is the same as that of Embodiment 1 as shown in Figs. 6 and 7, it will be omitted here.

In the slot machine 1 of Embodiment 3 in which the above configured authentication unit 7 is installed, the CPU 50 determines using the IC tag reader / writer 107 about whether any one of the figures 13A through 13C is placed on the authentication unit 7 or not, when the player inserts coins through the coin insertion part 9 to complete the acceptance of bets thereafter. As a result, when any one of the figures 13A through 13C is determined to be placed, a notification effect to notify that a bonus game may be won on the lower liquid display 4 at a predetermined probability during the variable display of the symbols at the variable display windows 21 to 25 based on the current character level which has been read from the IC tag 93. Here, the details of the notification effects will be explained later.

Since an explanation of symbol examples to be varyingly displayed in each variable display window 21 to 25 is the same as described with Embodiment 1, it is omitted here.

Next, an explanation will be made for a mechanism related to the control system of the slot machine 1 according to Embodiment 3 by referring to Fig. 9. Fig. 9 is a block diagram showing the control system of the slot machine.

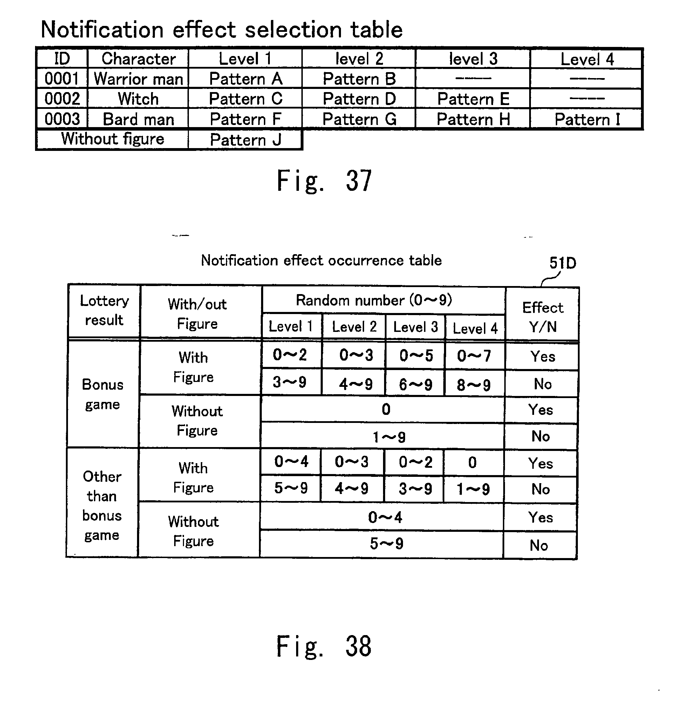

In Fig. 9, the control system of the slot machine 1 is basically composed of the CPU 50 which is a core component, and the CPU 50 is connected with a ROM 51 and a RAM 52. The ROM 51 stores a main processing program to be explained later, a base game processing program, a bonus game processing program, a symbol lottery table for drawing stopped-and-displayed symbols, a winning combination based on the combinations of stopped-and-displayed symbols, a payout table for setting credits paid based on the winning combination (refer to Fig. 35), a notification' effect selection table for selecting a notification effect provided during a period of time that symbols are varyingly displayed with the slot machine 1 based on the type of the figure and the character level (refer to Fig. 37), a notification effect generation table for determining whether the notification effect is to be generated or not based on the lottery result and the character level and the random number (refer to Fig. 38), and other various programs and data tables necessary for controlling the slot machine 1. Further, the RAM 52 is a memory for temporarily storing various data calculated by the CPU 50.

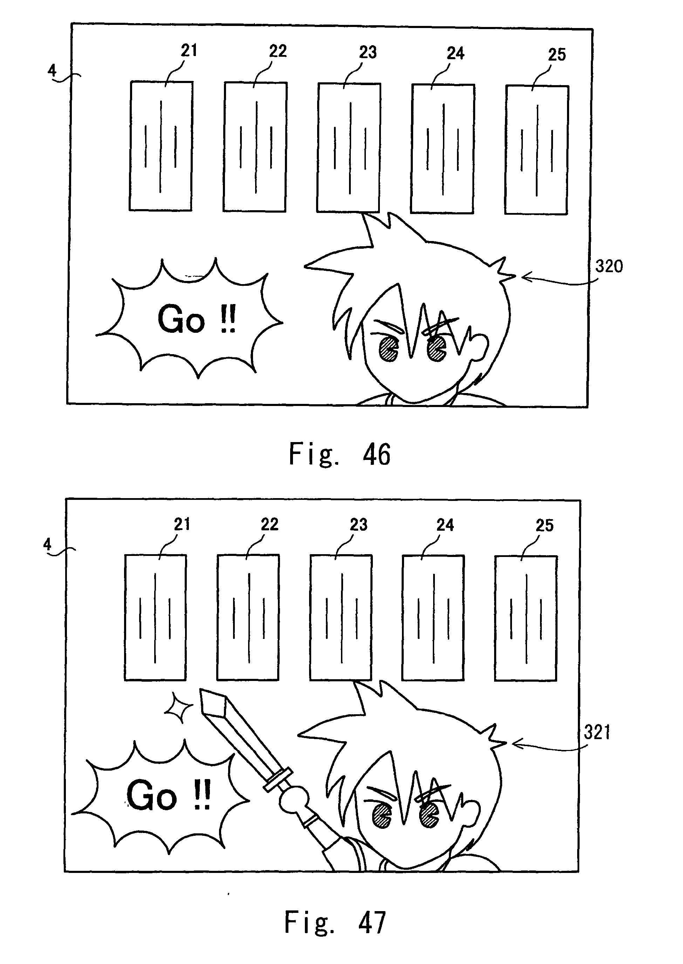

In this instance, as shown in Fig. 10, the liquid crystal driving circuit 74 is composed of a program ROM 81, an image ROM 82, an image controlling CPU 83, a work RAM 84, a VDP (video/display/processor) 85, a video RAM 86 and others. Then, the program ROM 81 stores an image controlling program about displaying of the upper liquid crystal display 3 and the lower liquid crystal display 4, together with other various selection tables. The image ROM 82 also stores, for example, image-forming dot data such as effect images (refer to Figs. 46 to 51) respectively corresponding to figures 13A through 13C, symbol examples of the reel bands from the first reel band 111 to the fifth reel band 115 in Figs. 8A to 8E, an array of symbols on the sixth reel band 116 in Fig. 14, which are displayed on the lower liquid crystal display 4 (or the variable display windows 21 through 25).

The image controlling CPU 83 determines an image to be displayed on the upper liquid crystal display 3 or the lower liquid crystal display 4 from the dot data previously stored in the image ROM 82 based on parameters set by the CPU 50 according to the image controlling program previously stored inside the program ROM 81. Further, the work RAM 84 is configured as a temporary storage means when the image controlling program is executed by the image controlling CPU 83. The VDP 85 forms an image corresponding to display contents determined by the image controlling CPU 83 and outputs it on the upper liquid crystal display 3 and the lower liquid crystal display 4. Therefore, for example, arrays of symbols displayed in the reel bands 111 through 115 are scrolled and displayed on the lower liquid crystal display 4 (or the variable display windows 21 through 25). Further, the video RAM 86 is configured as a temporary storage means when an image is formed by the VDP 85.

An LED 78 is also connected to the CPU 50 via a LED driving circuit 77. The LED 78 is provided in front of the slot machine 1 and controlled in lighting by the LED driving circuit 77 on the basis of driving signals from the CPU 50, when various effects are rendered. In the slot machine 1 of Embodiment 1 in particular, the LED 78 is turned on to improve the effects in the bonus game to be explained later.

Further, a sound output circuit 79 and speakers 5L and 5R are connected to the CPU 50, and the speakers 5L and 5R produce various sound effects when various effects are rendered on the basis of output signals from the sound output circuit 79. In the slot machine 1 of Embodiment 3 in particular, with any one of the figures 13A through 13C being placed on the authentication unit 7, when a notification effect with a predetermined probability during the period of time that symbols are varyingly displayed, a sound corresponding to each character of the figures 13A through 13C (warrior man, witch, and bard man) can provide a new effect as if the figure placed on the gaming machine among the figures 13A through 13C spoke to the player.

As shown in Fig. 34, the ROM 51 stores a symbol lottery table 51A to determine the symbols to be stopped and displayed on the respective stop-and-display areas 211 through 213, 221 through 223, 231 through 233, 241 through 243 and, 251 through 253 at variable display windows 21 through 25 (refer to Fig. 2) on the basis of random number values, a payout table 51B of storing winning combinations of the stopped and displayed symbols at each of the stop-and-display areas and payouts, a notification effect selection table 51C (refer to Fig. 37) to be used to select a notification effect rendered during a period of time that the symbols are varyingly displayed with the slot machine 1 based on the type of the figure and the character level, a notification effect generation table 51D (refer to Fig. 38) to be used to determine whether the notification effect is to be generated during the selection based on the lottery result and the character level and the random number, and a voice data storage area 51E including a sound data for each character to be outputted from the speakers 5L and 5R when the notification effect is rendered. Here, the notification effect rendered during the period of time that the symbols are varyingly displayed will be explained in detail later.

Next, an explanation will be made for a symbol lottery table 51A which is stored in the ROM 51 and used in determining the symbols stopped and displayed on each of the stop-and-display areas 211 through 213, 221 through 223, 231 through 233, 241 through 243 and 251 through 253 (refer to Fig. 2), when five variable display windows 21 through 25 are used in the slot machine 1 to conduct the base game and the bonus game.

The symbol lottery table 51A is a lottery table in which the symbols stopped along the first activated winning line L1 corresponding to the second stop-and-display areas 212, 222, 232, 242 and 252 are determined on the basis of random number values sampled by the random number sampling circuit 56. Then, the symbols are stopped and displayed on the first stop-and-display areas 211, 221, 231, 241 and 251, and the third stop-and-display areas, 213, 223, 233, 243, and 253 are determined based on the results of the symbols in the second stop-and-display areas because the order of symbols in each array of at each reel band is fixed (refer to Fig. 8). To be more specific, each symbol having each code number smaller by one than the code number determined by the random number value is stopped and displayed on the first stop-and-display area 211, 221, 231, 241 and 251, whereas each symbol having each code number greater by one than the code number determined by the random number value is stopped and displayed on the third stop-and-display area 213, 223, 233, 243 and 253.

In the slot machine 1 of Embodiment 3, symbols stopped and displayed along the first winning line L1 are determined for each of the variable display windows 21 through 25. The symbol lottery table 51A allocates the code numbers of "00" through "29" in sequence from the top of the array of symbols displayed in each of the reel bands from the first reel band 111 to the fifth reel band 115 of Fig. 8, and the lottery table 51A also sets random number values corresponding to each code number.

Then, the CPU 50 samples five random number values via the random number sampling circuit 56 so as to correspond to each of the variable display windows 21 through 25 at the time of starting a game, and determines a symbol which stops on the second stop-and-display areas 212, 222, 232, 242 and 252 at each of the variable display windows 21 through 25 (for example, in a case where the sampled random number value is "9," a symbol of "FISH" allocated to the code number of "09" is stopped and displayed at the second stop-and-display area).

Next, an explanation will be made for a winning combination and its payout when five variable display windows 21 through 25 are used in the slot machine 1 to conduct the base game and the bonus game by referring to Fig. 35. Fig. 35 is a payout table 51B' showing a winning combination and its payout when five variable display windows are used to conduct the game, and showing the payout when the number of bets is "1." Therefore, when the number of bets is "1," values of the payout shown in Fig. 35 are added to the credits. However, when the number of bets is "2" or more, values shown in Fig. 35 are multiplied by the number of bets to obtain the values of the payout and the payout values are added to the credits.

In this instance, a concrete explanation will be made for a winning combination and its payout when the base game is conducted. As shown in Fig. 35, when a symbol of "LOBSTER" is stopped and displayed in a row on an activated winning line at the variable display windows 21 through 22 (in the case of "2K" in which the symbol appears in two consecutive places from the left end), a payout of "10" is obtained. When the symbol is stopped and displayed in a row on an activated winning line at the variable display windows 21 through 23 (in the case of "3K" in which the symbol appears in three consecutive places from the left end), a payout of "320" is obtained. Further, when the symbol is stopped and displayed in a row on an activated winning line at the variable display windows 21 through 24 (in the case of "4K" in which the symbol appears in four consecutive places from the left end), a payout of "2500" is obtained. In addition, when the symbol is stopped and displayed in a row on an activated winning line at the variable display windows 21 through 25 and at the variable display windows 21 through 25 (in the case of "5K" in which the symbol appears in five consecutive places from the left end), a payout of "6000" is obtained.

When the symbol of "SHARK" is also stopped and displayed in a row on an activated winning line at the variable display windows 21 through 22 (in the case of "2K" in which the symbol appears in two places from the left end), a payout of "3" is obtained. When the symbol is stopped and displayed in a row on an activated winning line at the variable display windows 21 through 23 (in the case of "3K" in which the symbol appears in three consecutive places from the left end), a payout of "25" is obtained. Further, when the symbol is stopped and displayed in a row on an activated winning line at the variable display windows 21 through 24 (in the case of "4K" in which the symbol appears in four consecutive places from the left end), a payout of "150" is obtained. In addition, when the symbol is stopped and displayed in a row on an activated winning line at the variable display windows 21 through 25 (in the case of "5K" in which the symbol appears in five consecutive places from the left end), a payout of "1000" is obtained.

Hereinafter, similar payouts are given respectively to the symbol (fish) of "FISH," the symbol (man with guitar) of "PUNK," the symbol (octopus) of "OCTOPUS," the symbol (crab) of "CRAB," the symbol (worm) of "WORM," the symbol (alphabetic letter A) of "A," the symbol (alphabetic letter K) of "K," the symbol (alphabetic letter Q) of "Q" and the symbol (alphabetic letter J) of "J" as shown in Fig. 35.

When these symbols appear on the activated winning lines, the total number of the payouts is added to the credits.

On the other hand, as to the symbol (sardine) of "SARDINE", it is a scatter symbol. In the case of "2K" in which the symbol appears (or is stopped and displayed) in two places in the variable display windows 21 through 25, a payout of "2" is obtained, irrespective of the activated winning line. In the case of "3K" in which the symbol appears (or is stopped and displayed) in three places, a payout of "5" is obtained. In the case of "4K" in which the symbol appears (or is stopped and displayed) in four places, a payout of "10" is obtained. In the case of "5K" in which the symbol appears (or is stopped and displayed) in five places, a payout of "125" is obtained.

Only for the payout by the symbol of "SARDINE," the number obtained by multiplying the value of the payouts shown in Fig. 35 with the total number of bets (product of the number of bets with the number of activated winning lines) is added to the credits. When there is any payout other than that caused by the symbol of "SARDINE," such payout is also added to the credits.

Further, the symbol of "SARDINE" is a trigger symbol to shift the game state to the bonus game and the player can move to the bonus game as well as obtain the above payout when the symbol appears (or is stopped and displayed) in four or more places at the same time in the variable display windows 21 through 25, irrespective of the activated winning line.

Now, an explanation will be made for the bonus game. The bonus game is generally referred to as a game to be started when a special condition is met during the base game. In general, the bonus game is often advantageous to the player. Here, when the game is shifted to the bonus game, the player can automatically play 15 to 25 games continuously without bets on the basis of the lottery result at the time of shifting to the bonus game (so-called free game).

Here, in the bonus game, the number of the bets and the number of the activated winning lines at the bonus shift are kept and used. Also, the winning combination and the payout thereof are the same as in the base game, but the symbol (shark) of "SHARK" is treated as the symbol (lobster) of "LOBSTER" and if the symbol (sardine) of "SARDINE" appears (stopped and displayed) in four places, the game can be shifted back to the bonus game again. Here, higher payouts are assigned to the symbol (lobster) of "LOBSTER" than to the symbol (shark) of "SHARK" if it is won as shown in Fig. 35. Therefore, it is likely for the player to obtain a lot of credits without consuming the credits.

Next, a notification effect generated at a predetermined probability during the period that the symbols are varyingly displayed will be explained in reference to Figs. 36 to 39 as the base game is played with the five variable display windows 21 through 25 in the slot machine 1. Here, in the slot machine 1 according to Embodiment 3, the notification effect is generated to notify the probability to win the bonus game (the symbol of "SARDINE" appears (stopped and displayed) in four or more places) with the gaming machine during the period that the symbols are varyingly displayed. In particular, when any one of the figures 13A to 13C (refer to Figs. 4A and 4B) is placed in the slot machine, the notification effect using an image and a sound (voice) corresponding to the type and the character level of the figure of the figures 13A through 13C is performed.

First, various kinds of notification effects changing based on the type and the character level of the figures 13A through 13C are explained. Here, the character level is a parameter set based on the number of times that each of the figures has been used in the game. In the following, a growing pattern of the character level based on the number of times that the figure has been used in reference to Fig. 36.

As shown in Fig. 36, three kinds of figures 13A through 13C have the character levels growing (increasing) in a stepwise manner as the number (n) of times that the figures are used is increased. However, the growing patterns of the figures differ from each other among the figures 13A through 13C. If the figure 13A (warrior man) is used, the character level is set as "Level 1" with the number less than 30 while the character level is set as "Level 2" with the number thereof equal to or more than 30.

Also, if the figure 13B (witch) is used, the character level thereof is set as "Level 1" with the number (n) of times being used less than 50 and the character level is set as "Level 2" with the number (n) of times equal to or more than 50 but less than 100.

Also, if the figure 13C (bard man) is used, the character level is set as "Level 1 with the number (n) less than 100, is set as "Level 2" with the number (n) equal or more than 100 but less than 200, is set as "Level 3" with the number (n) equal or more than 200 but less than 300, and is set as "Level 4" with the number (n) equal or more than 400.

As described above, the figure 13A has a relatively higher growing rate of the character level if compared to the others, but the maximum character level is set lower. On the other hand, the figure 13C has the character level with a slower growing rate, but the character level thereof has the high upper limit. And the figure 13B has the character level with a medium growing rate and the upper limit of the character level is set medium. Therefore, the player can put one of the figures 13A through 13C in the slot machine 1 such that the player may enjoy different games with different figures having different character levels with various growing patterns. In particular, if the player would like to increase the character level for a short period of time, it is possible to do so by playing the game with the figure 13A placed in the slot machine. And if the player would like to grow the character level higher for a long period of time, the player can do so by playing the game with the figure 13C. Therefore, the player can play the game with a variety of game states so as to change the effect contents whenever the player plays the game so that the player may not be bored. Thus, the player can choose some of the variety of growing patterns of the character level so that it is possible to provide the game which may satisfy desires of various players.

Therefore, the contents of the notification effect as shown in Fig. 37 are determined by the character lever of the figures 13A through 13C.

For example, a case where the figure 13A is placed is explained. If the notification effect using the character of "warrior" is performed in the lower liquid crystal display 4 and if the character level is "Level 1", a pattern A of the notification effect is performed. Also, if the character level is "Level 2", a pattern B of the notification effect is performed. And, in the pattern A of notification effect, a warrior image 320 in a regular clothes is displayed (refer to Fig. 46) and a male voice saying "Good!" is outputted from the speakers 5L and 5R. Also, in the pattern B notification effect, a warrior image 321 in an armor and with a sword is displayed (refer to Fig. 47) and a male voice saying "Go for it!" is outputted from the speakers 5L and 5R.

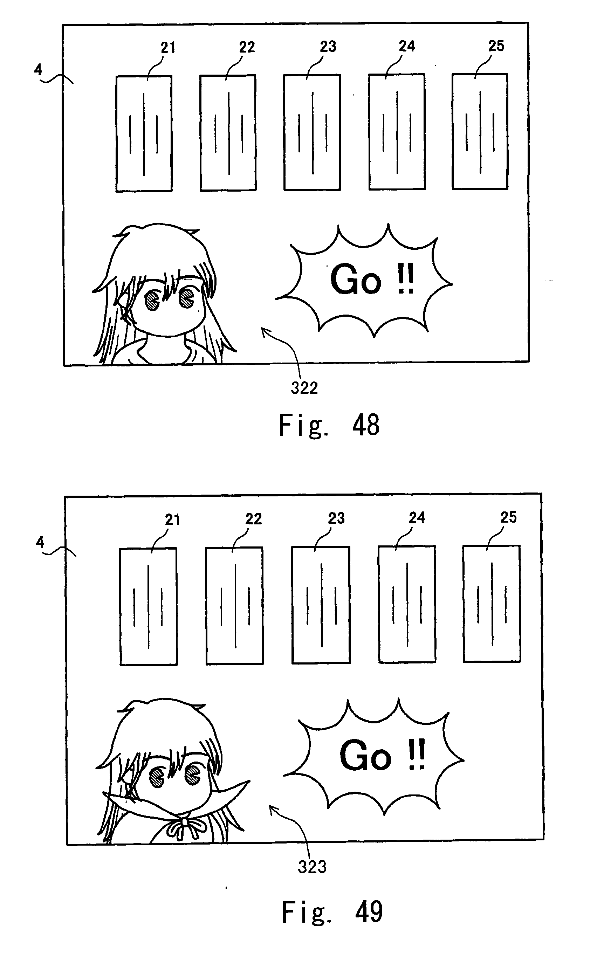

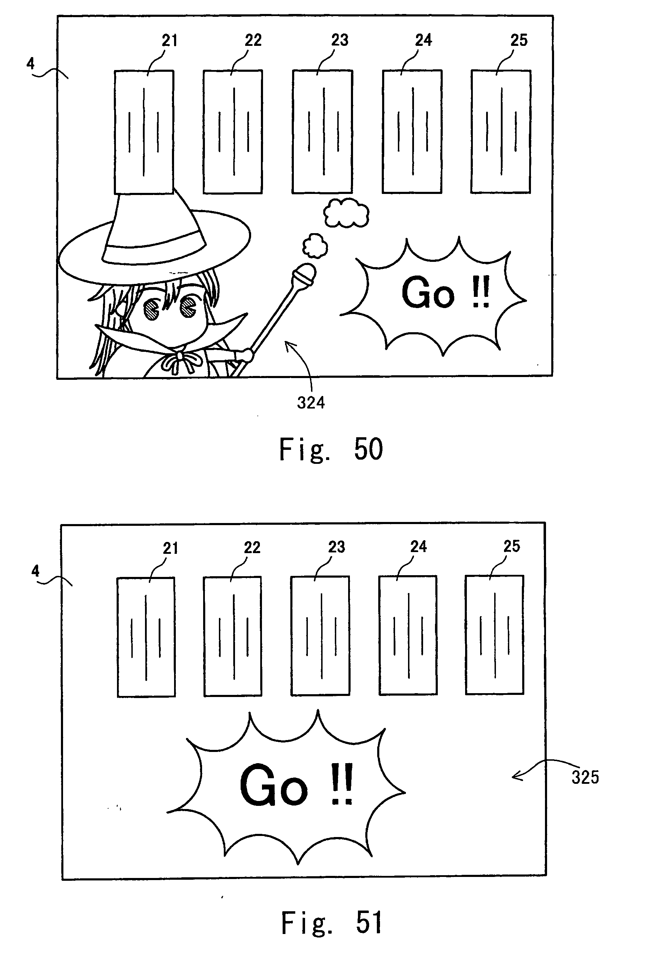

Next, there is explained a case where the figure 13B is placed. If the notification effect using the character of "witch" is performed in the lower liquid crystal display 4 and if the character level is "Level 1", the pattern C notification effect is performed. Also, if the character level is "Level 2", the pattern D of the notification effect is performed. And if the character level is "Level 3", the pattern E of the notification effect is performed. And in the pattern C of notification effect, a witch image 322 in a regular clothes is displayed (refer to Fig. 48), and a female voice saying "Ei!" is outputted from the speakers 5L and 5R. Also, in the pattern D of notification effect, a witch image 323 in a cloak is displayed (refer to Fig. 49) and a female voice saying "You can do it!" is outputted from the speakers 5L and 5R. Further, in the pattern E of notification effect, a witch image 324 in a cloak and a hat with a wand is displayed (refer to Fig. 50) and a female voice saying "Now, make it!" is outputted from the speakers 5L and 5R.

Next, a case where the figure 13C is placed is explained. If a notification effect using the character of "bard man" is performed and the character level is "Level 1", the pattern F of the notification effect is performed. Also, if the character level is "Level 2", the pattern G of the notification effect is performed. Also, if the character level is "Level 3", the pattern H of the notification effect is performed. Also, if the character level is "Level 4", the pattern I of the notification effect is performed. And in the pattern F of the notification effect, a bard man image (not shown) in a regular clothes is displayed and a male voice singing "La-a-" is outputted from the speakers 5L and 5R. Also, in the pattern G of the notification effect, a bard man image (not shown) in a turban is displayed and a male voice singing "La-a- La-" is outputted from the speakers 5L and 5R. Also, in the pattern H of notification effect, a bard man image (not shown) playing the flute is displayed and a sound of the flute sounding "pea, pea" is outputted from the speakers 5L and 5R. Also, in the pattern I of notification effect, a bard man image (not shown) play the harp is displayed and a sound of the harp sounding "poron, poron" is outputted from the speakers 5L and 5R.

On the other hand, if none of the figures 13A through 13C is placed, a pattern J of notification effect is made. In the pattern J of notification effect, an image 325 consisting of the letters: "Go!!" is displayed (refer to Fig.51).

Therefore, the player can realize the character level of the figure currently used based on the contents of the voice or the sound outputted from the speakers 5L and 5R and displayed image on the lower liquid crystal display 4. And the player can play the game with various notification effects set for each character level and the type of the figures. Also, the player can feel the expectation that the symbols to be stopped and displayed this time may be a combination of symbols advantageous to the player by the notification effect to be displayed so that the player may feel more desire to play the game.

Next, a notification effect generation table 51D for determining whether the notification effect is to be generated or not in this game during a period of varyingly displaying the symbols in reference to Fig. 38.

As shown in Fig. 38, whether the notification effect is generated or not is determined by a lottery result with random values from 0 to 9 having been sampled via the random number sampling circuit 56, the character level, whether the figure exists or not, and a lottery result of stopped symbols.

For example, if the bonus game is internally won in the internal lottery, and if the character with the character level 1 is used, the notification effect is generated as the random numbers sampled are within a range from 0 to 2.

On the other hand, if the bonus game is not internally won in the internal lottery, and if the figure with the character level 1 is used in the same way, the notification effect is generated as the random numbers sampled are within a range from 0 to 4.

If the bonus game is internally won in the internal lottery, and if the figure with the character level 2 is used, the notification effect is generated as the random numbers sampled are within a range from 0 to 3.

On the other hand, if the bonus game is not internally won in the internal lottery, and the figure with the character level 2 is used, the notification effect is generated as the random numbers sampled are within a range from 0 to 3.

Also, if the bonus game is internally won in the internal lottery, and if the figure with the character level 3 is used, the notification effect is generated as the random numbers sampled are within a range from 0 to 5.

On the other hand, if the bonus game is not internally won in the internal lottery, and if the character with the character level 3 is used, the notification effect is generated as the random numbers sampled are within a range from 0 to 2

Also if the bonus game is internally won in the internal lottery, and the figure with the character level 4 is used, the notification effect is generated as the random numbers sampled are within a range from 0 to 7.

On the other hand, the bonus game is not internally won in the internal lottery, and the character with the character level 4 is similarly used, the notification effect is generated as the random numbers sampled are 0.

Also, the bonus game is internally won in the internal lottery, and if the figure is not used, the notification effect is generated as the random numbers sampled are 0.

On the other hand, if the bonus game is not internally won in the internal lottery, and if the figure is likewise not used, the notification effect is generated as the random numbers sampled are within a range from 0 to 4.

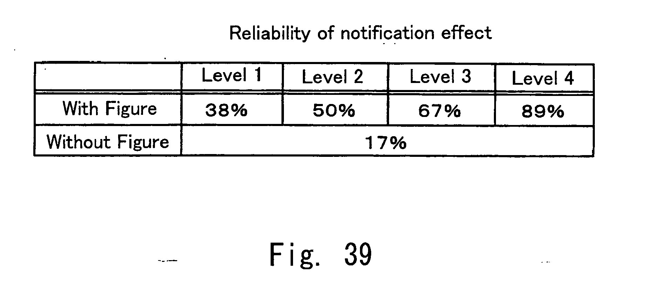

Next, the reliability of notification effect to the winning of the bonus game is explained in reference to Fig. 39 if the notification effect is generated in each condition. Here, the reliability is presented in a calculated value in a predetermined formula to compare the probabilities to obtain a combination of symbols stopped and displayed so that the bonus game is actually won when the effect is generated. More specifically, the index value of the reliability may be calculated by dividing "the percentage to generate the notification effect when the bonus game is won" by the sum of "the percentage to generate the notification effect when the bonus game is won" and "the percentage to generate the notification effect if the bonus game is not won".

For example, if the figures 13A through 13C with the character level 1 are used, and as the random numbers are defined in the notification effect generation table 51D in Fig. 38, the reliability of the generated notification effect may be given by:

$$(3/10) \, / \, (3/10 + 5/10) = 3/8 = 38\%.$$

Similarly, if the figures 13A through 13C with the character level 2 are used, the reliability of the notification effect is calculated to be 50%. If the figures 13A through 13C with the character level 3 are used, the reliability of the notification effect is 67 %. And if the figures 13A through 13C with the character level 4 are used, the reliability of the notification effect is 89 %. On the other hand, if none of the figures 13A through 13C is used, the reliability of the notification effect may be 17%.

Therefore, the reliability of the notification effect is higher when the figure is used than when none of the figures is used, therefore, the player may feel more expectation to the bonus game winning. Also, in the case of using the figure, the reliability of the notification effect is higher if the character with higher character level is used, therefore, the player may feels more expectation to the bonus game winning.

Also, the player, can play the game based on more and more reliable notification effect by playing the game over and over again with the figures 13A through 13C placed in the slot machine 1. Therefore, it is possible to make the player buy the figures 13A through 13C and make the player use them more often and the player may have more expectation to the game such that the player may have more desire to play the game.

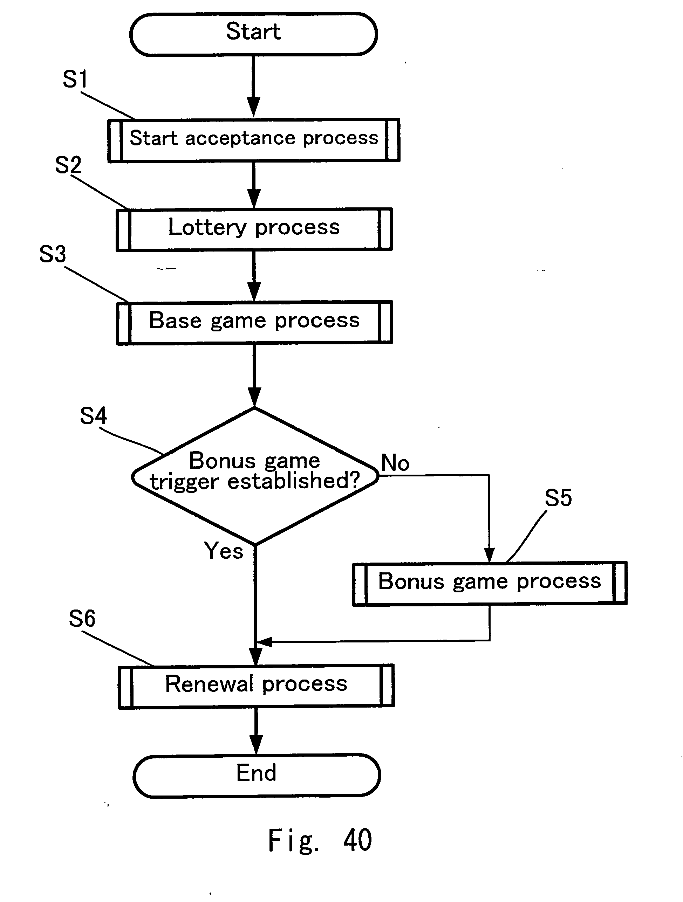

Next, an explanation will be made for the main processing program in the slot machine 1 of Embodiment 3 having the above constitution by referring to Fig. 40. Fig. 40 is a flow chart of the main processing program in the slot machine of Embodiment 1. Programs shown in the following flow charts of Figs. 40 through 45 are stored in the ROM 51 and the RAM 52 provided in the slot machine 1 and executed by the CPU 50.

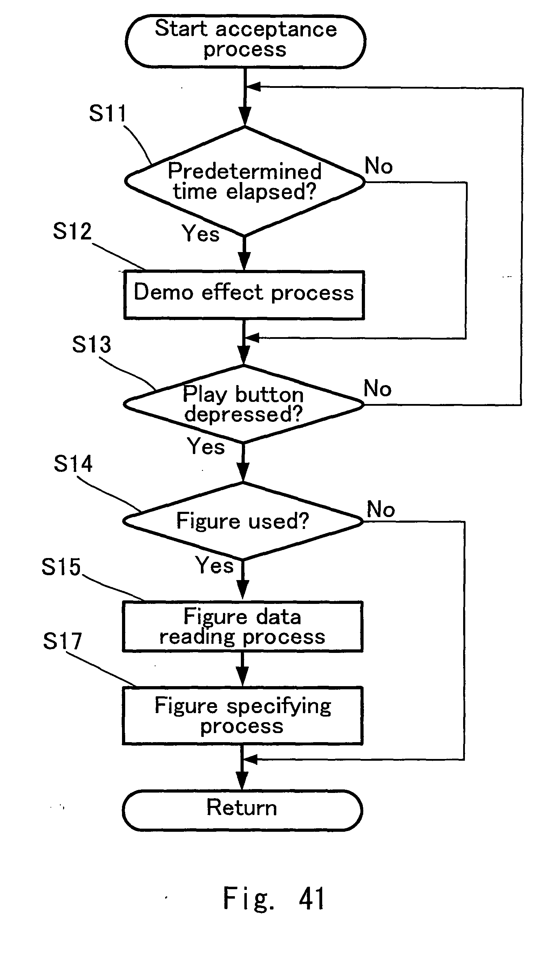

In Fig. 40, first, a start acceptance process of Fig. 41 to be explained later is conducted in the step (hereinafter abbreviated as "S") 1. This is a process of accepting switch signals outputted from 1-BET switch 57, 3-BET switch 58, 5-BET switch 59, 1-LINE switch 60, 5-LINES switch 61 and 20-LINES switch 62 on the basis of the operation of BET 1 PER LINE button 33, that of BET 3 PER LINE button 34, that of BET 5 PER LINE button 35, that of PLAY 1 LINE button 37, that of PLAY 5 LINES button 38 and that of PLAY 20 LINES button 39. The game will be started at the time of accepting the switch signals outputted from these switches.

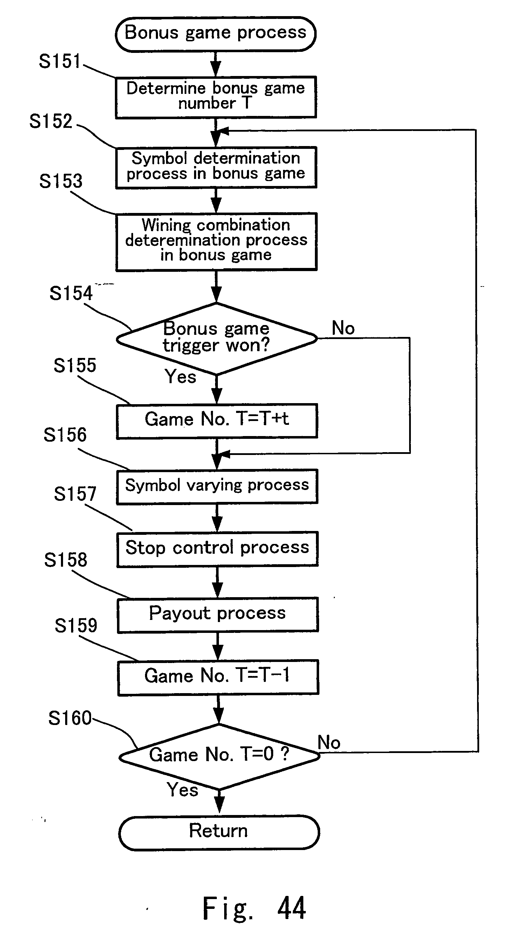

Then, the lottery process of Fig. 22 to be explained later is conducted in the S2 on the basis of the switch signals output from the 1-LINE switch 60, the 5-LINES switch 61 and the 20-LINES switch 62. In this instance, when the bonus game is obtained (the symbol of "SARDINE" is stopped and displayed in four places at the same time, irrespective of the activated winning line in the variable display windows 21 through 25), the bonus game is conducted after completion of the base game.(refer to Fig. 44).

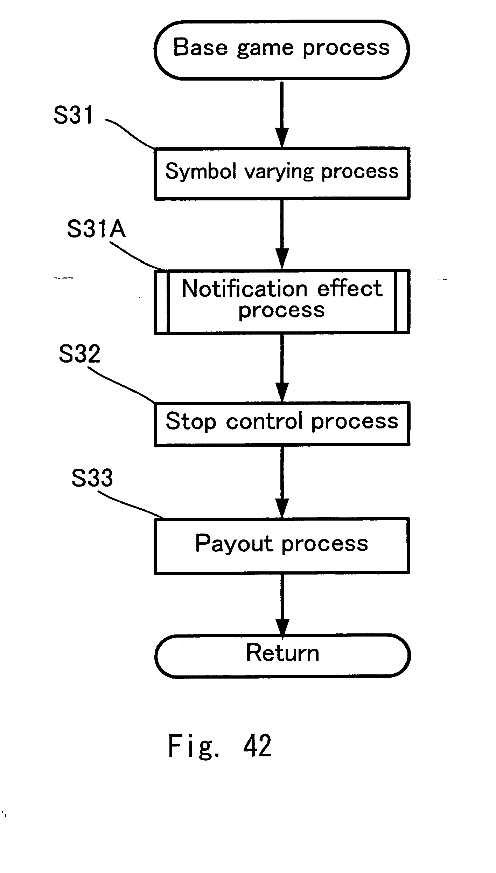

In the S3, the base game process of Fig. 42 to be explained later is conducted. Thereafter, the game proceeds to the S4, when it is determined whether the bonus game is won or not. To be more specific, when in the S2 lottery process, the symbol of "SARDINE" is stopped and displayed in four or more places in total, irrespective of the activated winning line in the variable display windows 21 through 25, the bonus game is obtained (S4 :YES). Therefore, the game proceeds to the S5 to conduct the bonus game process of Fig. 22 to be explained later, and the game proceeds to a renewal processing to be described later (S6).

In contrast, in the S2 lottery process, when the symbol of "SARDINE" is not stopped and displayed in four or more places in total, irrespective of the activated winning line in the variable display windows 21 through 25, the bonus game is not obtained (S4: NO) and the renewal process is conducted with the current condition (S6). In the renewal process, the play history of the figure 13 and the character level are renewed. Then, the main processing program is completed.

Next, an explanation will be made for the start acceptance process conducted at the S1 in the slot machine 1 of Embodiment 3 by referring to Fig. 41. Fig. 41 is a flow chart of the start acceptance processing program in the slot machine of Embodiment 3.

In the start acceptance process, first, the CPU 50 determines whether a predetermined time (for example, 15 seconds) has elapsed in the S11 or not. When it is determined that the predetermined time has not passed (S11: NO), the game proceeds to the S13, with no action taken. When it is determined that the predetermined time has elapsed (S11 :YES), the game proceeds to the S13 after a demonstration effect is provided on the upper liquid crystal display 3 or the lower liquid crystal display 4 in the S12.

Then, it is determined in the S13 whether the operation of the PLAY 1 LINE button 37, the PLAY 5 LINES button 38 or the PLAY 20 LINES button 39 is conducted or not. In this instance, when it is determined that the operation of the PLAY 1 LINE button 37 or the others are not conducted (S13: NO), the game returns to the S11 and repeats the above-described processes. In contrast, when it is determined that the operation of the PLAY 1 LINE button 37 or others is conducted (S13: YES), the game proceeds to the S14, a figure placement determination process, even when the demonstration effect is in progress.

The determination in the S13 may be made by referring to other input signals, in addition to these operation signals.

It is determined in the S14 whether the figures 13A through 13C (refer to Figs. 4A and 4B) are placed on the authentication unit 7 or not. To be more specific, an IC tag reader / writer 107 is used to determine whether data communications can be made with the IC tag 93 built in the base portion 90 of each of the figures 13A through 13C. When it is determined that none of the figures 13A through 13C is placed (S14: NO), the game completes the start acceptance process and proceeds to the lottery process (S2).

In contrast, when it is determined that any one of the figures 13A through 13C is placed on the authentication unit 7 (S14: YES), the IC tag reader / writer 107 is used to read data of the IC tag 93 built in the thus placed figure (S15). Data read in this instance includes the figure ID unique to each of the figures 13A through 13C, a present character level (level 1 or higher) of the used figure, and the number (n) of games having been conducted with the placed figure in the slot machine 1. In this instance, one game is a series of actions in which a bet operation is performed on the basis of the presently available credits so that the symbols are varyingly displayed and stopped to appear in the variable display windows, and various processes (bonus game process, payout process, etc.) according to a combination of the stopped and displayed symbols are conducted.

Then, in the S17, the RAM 52 stores information of the specified type of the figure 13A, 13B, or 13C, the number (n) of times that the figure has been used by now, and the specified character level based on the figure ID and the number (n) of times the figure has been used before which are read in the previous step S15. After the process, the start acceptance process is completed and it proceeds to the lottery process (S2).

Next, an explanation will be made for the lottery process conducted in the S2 with the slot machine 1 of Embodiment 3 in referring to Fig. 22. Fig. 22 is also a flow chart of the lottery process program in the slot machine of Embodiment 3.

In the lottery process, first, a symbol determination process is conducted in the S21. In this instance, the symbol stopped and displayed on the first winning line L1 in the base game is determined for each of the variable display windows 21 through 25. More particularly, as explained previously, five random number values corresponding to each of the variable display windows 21 through 25 are sampled by the random number sampling circuit 56 to determine the code numbers from the symbol lottery table 51A. Further, based on the code numbers and the first reel band 111 through the sixth reel band 116, symbols to be stopped and displayed are determined for each of the variable display windows 21 through 25.

When the symbols to be stopped and displayed on the activated winning line are determined, a winning combination determining process is conducted in the S22, and then the process returns to the main processing program, proceeding to the base game process in the S3. Further, in the combination determining process, to be more specific, a combination and a payout thereof are determined, for example, on the basis of the symbol determined in the S21 and the payout table 51B of Fig. 12.

Next, an explanation will be made for the base game process conducted at the S3 in the slot machine 1 of Embodiment 3 by referring to Fig. 42. Fig. 42 is a flow chart of the base game processing program of the slot machine of Embodiment 3.

In the base game process, first, in the S31, each of the symbols are scrolled in the variable display windows 21 through 25 on the basis of switch signals outputted from the 1-LINE switch 60, the 5-LINES switch 61, and the 20-LINES switch 62 accepted in the start acceptance process (S1).

Then, in S31A, a notification effect processing is conducted to generate a notification effect to notify the player of the bonus game when a predetermined condition is met at a varying state before the symbols are stopped in the variable display windows 21' through 25. Here, the notification effect processing will be explained in detail later.

After that, the scrolling of the symbols being displayed varyingly in the variable display windows 21 through 25 is stopped (S32).

Further in the S33, the credit and the like equivalent to the payouts determined based on the payout table 51B of Fig. 37 are paid out according to the winning symbol combination displayed in the variable display windows 21 through 25 in the step S32. Thus, after the payout process, the process returns to the main processing program and proceeds to the determination process of the step S4.

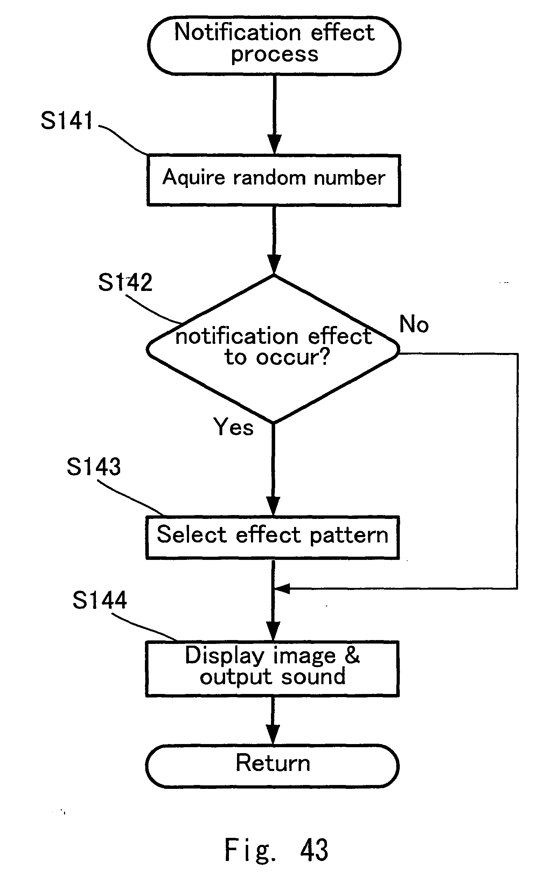

Next, the notification effect processing executed in the step S31A in the slot machine 1 of Embodiment 3 is explained in reference to Fig. 43. Fig. 43 is a flow chart of the notification effect processing program with the slot machine according to Embodiment 3.

In the notification effect processing, first in the step S141, random numbers generated by the random number sampling circuit 56 are sampled in a range from 0 to 9. And it is determined in the step S142 whether the notification effect is generated or not.

The determination whether the notification effect is generated or not is made by (1) whether the figures exist or not based on the determination result in the step S14, (2) whether the bonus game is won or not based on the determination result in the step S22, (3) the current character level of the figure specified in the step S17, and the random number obtained in the step S141 in reference to the notification effect generation table 51D (refer to Fig. 38).

For example, if the bonus game is won and the figure with the character level 2 is placed, it is determined that the notification effect is generated if the obtained random number is "3". Also, if the bonus game is not won and the character with the character level 1 is placed, it is determined that the notification effect is not generated if the obtained random number is "3".

And, if it is determined that the notification effect is not generated (S142: No)', the notification effect processing is terminated without generating the notification effect.

Then, if it is determined that the notification effect is to be generated (S142: Yes), in the subsequent step S143, the concrete effect pattern of the notification effect is selected. The selection of the effect pattern is made based on the type of the figures 13A through 13C and the current character level in reference to the notification effect selection table 51C (refer to Fig. 37).

For example, if the figure 13A (warrior man) with the character level 2 is placed, the pattern B of the effect pattern is selected. And if none of the figures 13A through 13C is placed, then the pattern J of the effect pattern is selected.

After that, the notification effect using the lower liquid crystal display 4 and the speakers 5L and 5R based on the effect pattern of the notification effect pattern selected in the step S143 is performed in the step S144.

For example, a case where the figure 13A is placed is explained. If the character level is "Level 1", a warrior image 320 in a regular clothes (refer to Fig. 46) is displayed and a male voice saying "Good!" is outputted from the speaker 5L and 5R for about two second. Also, if the character level is "Level 2", a warrior image 321 (refer to Fig. 47) in an armor and with a sword is displayed and a male voice saying "You can do it" is outputted from the speakers 5L and 5R.

A case where the figure 13B is placed is explained. If the character level is "Level 1", a witch image 322 in a regular clothes is displayed (refer to Fig. 48), and a female voice saying "Ei!" is outputted from the speakers 5L and 5R. And if the character level is "Level 2", a witch image 323 in a cloak is displayed (refer to Fig. 49) and a female voice saying "You can do it!" is outputted from the speakers 5L and 5R. If the character level is "Level 3", a witch image 324 in a cloak and a hat with a wand is displayed (refer to Fig. 50) and a female voice saying "Now, make it!" is outputted from the speakers 5L and 5R.

Also, if none of the figures 13A through 13C is placed, an image 325 consisting of the letters: "Go!!" is displayed (refer to Fig. 51).

The place where the figure 13C is placed is explained here, in a similar manner, different images for respective character levels are displayed on the lower liquid crystal display for about two second, and predetermined voice and sound are outputted from the speakers 5L and 5R. Then, the notification effect processing is completed after the image display is completed.

Subsequently, in the slot machine 1 of Embodiment 3, a bonus game processing is explained in reference to Fig. 44. Fig. 44 is a flow chart to show a bonus game processing program.

In the bonus game processing, first the number (T) of the games is set in the step S151. The number of bonus games is chosen from the numbers of 10 to 25 by the lottery based on the random values sampled by the random number sampling circuit. The set number (T) of the bonus games is stored in RAM 52.

Here, in the step s152, the symbol determination processing in the bonus game is conducted. Here, the symbols stopped and displayed along the first winning line L1 are determined for respective variable display windows 21 to 25. More specifically, five random number values corresponding to the respective variable display windows 21 to 25 are sampled via random number sampling circuit and the code number is determined' from the symbol selection table 51A. Further, the symbols stopped and displayed in the respective variable display windows 21 to 25 are determined based on the code numbers and the first reel 111 through the fifth reel 115.

And, when the symbols stopped and displayed along the activated winning lines are determined, in the step S153, the winning combination and the payout are determined based on the symbols in the step S152 and the payout table 51B. Here, in the bonus game, the symbol (shark) of "SHARK" is treated as the symbol (lobster) of "LOBSTER".

Further, in the step S153 of winning processing, it is determined whether the trigger winning combination (the case that the symbol (sardine) of "SARDINE" appears at the same time in four or more places in the variable display windows 21 through 25 irrespective of the activated winning lines) is made or not (S154). And if the trigger winning combination is won (S154: Yes), the repetition number (t) of the bonus games is determined by a lottery and the repetition number (t) is added to the current number (T) of bonus games (S155). Thus, if the bonus game is won in the bonus game, the remaining number of the bonus games to be played is increased. More specifically, for example, if the game shifts to the bonus game for the first time where the player can play 20 bonus games, and if another bonus game is won in the 12th bonus game to obtain 17 bonus games, 25 bonus games (20-12+17) may be played after that. If the trigger winning combination is not made (S154: No), the process proceeds to the step S156.

Thus, each symbol is scrolled automatically in the variable display windows 21 through 25 in the symbol varying processing of the step S156.

Then, each symbol scroll is stopped in the variable display windows 21 through 25 in the stop control processing of the step S157.

And, according to the symbol combination of the winning combination as stopped and displayed in the variable display windows 21 through 25 in the step S157, the credits and the like are paid out in the payout processing of the step S158 wherein the credits and the like are equivalent to the determined payouts based on the payout table 51B in Fig. 35 (here, the symbol (shark) of "SHARK" is treated as the symbol (lobster) of "LOBSTER" in the bonus game).

After that, in the step S159, the CPU 50 reads the game number (T) of the bonus games stored in RAM 52, and the game number (T) is reduced by one. Then, the reduced game number (T) is stored in the RAM 52 again.

Next, in the step S160, the CPU 50 determines whether the number (T) of the bonus games reaches the number determined in the step S151. More specifically, it is determined whether the game number (T) stored in the RAM 52 becomes "0" or not, if the game number (T) is not "0", that is, the number of the played bonus games does not reach the number determined in the step S151 (S160: No), the process returns to the step S152 and repeat the above-described processing. On the other hand, if the game number (T) is "0", that is, if it is determined that the number determined in the step S151 is reached (S160: Yes), the bonus game processing program is terminated.

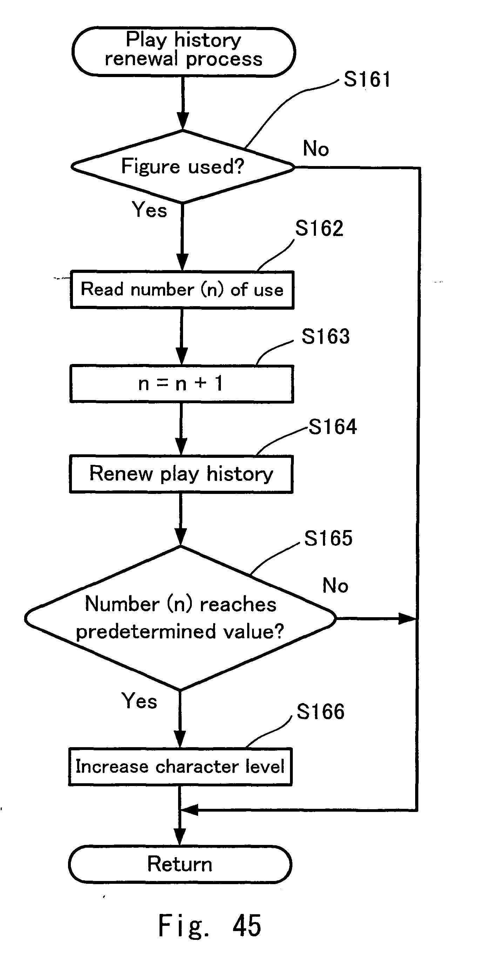

Next, the play history renewal processing in the step S6 is explained in reference to Fig. 45. Fig. 45 is a flow chart showing the play history renewal processing program according to the slot machine of Embodiment 3.

In the play history renewal processing, first it is determined in the step S161' whether the figures 13A through 13C are placed or not based on the determination result in the step S14. And if it is determined that none of the figures 13A through 13C is placed (S161: No), the play history renewal processing is terminated.

On the other hand, if it is determined that any one of the figures 13A through 13C is placed (S161: Yes), the number (n) of times that the figure has been used is read (S162) by the IC tag reader / writer 107 from the play history storage area 93B (refer to Fig. 5) of the IC tag 93 built in the placed figure.

Subsequently, in the step S163, the CPU 50 adds "one" to the used number (n) having been read. And the added number of being used is again stored back to the RAM 52 to renew the play history (S164).

Further, it is determined whether the used number (n) that is renewed in the step S164 reaches a predetermined number in the step S165. In the slot machine 1 of Embodiment 3, the character level is set according to the used number (n) as described before, as shown in Fig. 36, the character levels of the three kinds of figures 13A through 13C may grow (increase) in a stepwise way as the number of being used is increased. For example, in a case that the figure 13A (warrior man) is used, if the use number (n) is less than 30, the character level is set as "Level 1", and if the use number (n) is 30 or more, the character level is set as "Level 2".

Then, when it is determined that the number (n) of times that the figure has been used reaches a predetermined value, that is, when the number (n) of times being used set as the next level has been reached, the present character level is elevated by one and values at the character level storage area are renewed. Thereafter, the history renewal process is completed.

On the other hand, when it is determined that the number (n) of times being used has not reached the predetermined value, the history renewal process is completed with the state as it is.

As explained above, in the slot machine 1 of Embodiment 3, the player plays the game, with one of the figures 13A through 13C placed on the slot machine 1 (S14: YES), thereby making it possible to read a type and a play history of the figure from the IC tag 93 built in the figures 13A through 13C respectively (S15), and specify the character level determined based on the read type and play history of the figure (S17) such that the notification effect of the bonus game with a predetermined probability set on the basis of the specified type and the number of times being used (S144). Therefore, the player can play the game according to a variety of effect patterns corresponding to the used figures 13A through 13C. And it is possible to provide a variety of game which will prevent the player from being bored.

Also, the growing pattern of the character level based on the type of figure and the play history may be different from each other so that it is possible to provide a game with a variety of game states with changing contents of the game effect at every time that the game is played. Thus, it is possible to prevent the player from being bored. Also since it is possible for the player to choose various growing patterns of the character level so as to provide the game with high gaming excitement which can satisfy various players.

Since it is set that the notification effect in the game with the figure used has higher reliability as compared to the game without using the figure, the player feels more expectation to obtain the bonus game during the transition state. Further, the player can use the figures 13A through 13C with the slot machine 1 over and over again so that the player can play the game based on a notification effect with gradually higher reliability as the player plays the game with the figures. Therefore, it is possible to let the player buy and used the figures 13A through 13C in the game and the player may feel more expectation and more desire to the game.

(Embodiment 4)

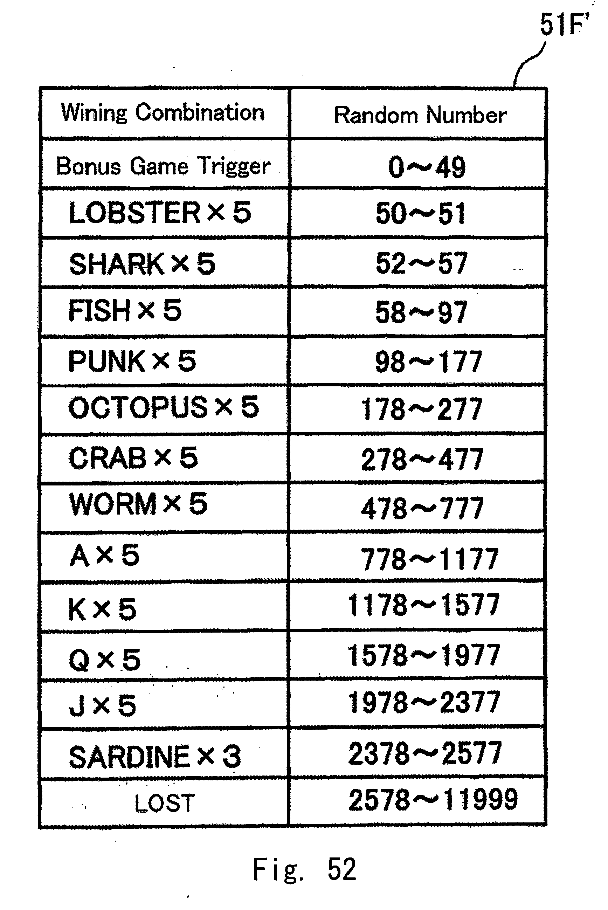

Then, an explanation will be made for the slot machine of Embodiment 4 by referring to Figs. 30 and 52. Here, the same symbol used for the same elements of the slot machine 1 of Embodiments 1 to 3 shown in the Figs. 1 through 29 will be used in the following explanation to indicate the same or equivalent elements of the slot machine 1 and the like of Embodiments 1 to 3.

The overall configuration of the slot machine of Embodiment 4 is similar to that of the slot machine 1 of Embodiment 3. Each control process is also similar to that of the slot machine 1 of Embodiment 3.

In the slot machine 1 of Embodiment 3, in stopping and controlling symbols at the variable display windows 21 through 25, five random number values corresponding to each of the variable display windows 21 through 25 are sampled by the random number sampling circuit 56, and the thus obtained random number values, code numbers determined by the symbol lottery table 51A as well as the first reel band 111 through the fifth reel band 115 (the second reel band 112 through the sixth reel band 116 in the high probability mode) are used to determine stop symbols (S21), and symbols to be stopped and displayed and the payout table 51B of Fig. 35 are used to determine a winning combination and a payout thereof (S22). However, in the slot machine of Embodiment 4, random number values are used to directly determine the winning combination, which is different from the slot machine 1 of Embodiment 3.

First, an explanation will be made for the lottery process conducted in the S2 for the main processing program in the slot machine of Embodiment 4 by referring to Fig. 30. Fig. 30 is a flow chart of the lottery process program in the slot machine of embodiment 2. Each of the programs of the flow chart in Fig. 30 is stored in the ROM 51 and the RAM 52 provided in the slot machine of embodiment 2 and executed by the CPU 50.

In the lottery process, first, a winning combination lottery process is conducted in the S71. In this instance, the CPU 50 uses winning combination lottery tables 51E and 51F' to draw a winning combination of symbols to be stopped and controlled at the variable display windows 21 through 25 in a-base game. Then, when the winning combination is determined, the process returns to the main processing program and proceeds to the base game process in the S3. In the base game process, the symbols are stopped and controlled on the basis of the determined winning combination.

Next, an explanation will be made for the winning combination lottery table 51F' used in the winning lottery process in the step S71. Fig. 52 is a drawing showing the high probability winning combination lottery table in Embodiment 2.

As shown in Fig. 52, a random number value used in the winning combination lottery table 51F' is in a range from 0 to 11999, when a random number value sampled via the random number sampling circuit 56 is from 0 to 49, a trigger of the bonus game is obtained. In this instance, the symbol of "SARDINE" is stopped and displayed in four or more places at the same time, irrespective of the winning line, and the game shifts to the bonus game. When the random number value sampled via the random number sampling circuit 56 is from 50 to 51, a winning combination of "LOBSTER" is obtained. Then, the symbol of "LOBSTER" is stopped and displayed in five places on the activated winning line. When the random number value sampled via the random number sampling circuit 56 is from 52 to 57, a winning combination of "SHARK" is obtained. Then, the symbol of "SHARK" is stopped and displayed in five places on the activated winning line. Hereinafter, in a similar way, when the random number value is in a range from 58 to 97, a winning combination of "FISH" is obtained. When it is from 98 to 177, that of "PUNK" is obtained, when it is from 178 to 277, that of "OCTOPUS" is obtained, when it is from 278 to 477, that of "CRAB" is obtained, when it is from 478 to 777, that of "WORM" is obtained, when it is from 778 to 1177, that of "A" is obtained, when it is from 1178 to 1577, that of "K" is obtained, when it is from 1578 to 1977, that of "Q" is obtained, and when it is from 1978 to 2377, that of "J" is obtained. Further, when it is from 2378 to 2577, the symbol of "SARDINE" is stopped and displayed in three places, irrespective of the winning line.

On the other hand, when the random number value sampled via the random number sampling circuit 56 is in a range from 2578 to 11999, a game is lost and losing symbol combination which does not become winning combinations is stopped and displayed.

As explained above, in the slot machine 1 of Embodiment 4, the player plays the game, with one of the figures 13A through 13C placed on the slot machine 1, thereby making it possible to read a type and a play history of the figure from the IC tag 93 respectively built in the figures 13A through 13C. The thus read type of the figure and the read number of times that the figure has been used are used to specify the character level and the notification effect of the bonus game with a predetermined probability set based on the specified type of the figure and the character level of the figure is generated. Therefore, the player can play the game with a variety of effect patterns corresponding to the used figure among the figures 13A through 13C. It is also possible to realize a variety of game, which may prevent the player from being bored.

It should be understood that the present invention shall not be limited to the foregoing embodiments and, as a matter of course, it may be improved or modified in various ways within the scope of the present invention.

For example, in Embodiments 3 and 4, figures 13A through 13C imitating characters ("warrior man," "witch" and "bard man") (refer to Figs. 4A and 4B) are used to conduct the game in the slot machine when an IC tag 93 storing various data is built in the base portion 90 of the figure. An IC card may be used in which an IC tag is built in place of the figure. A character corresponding to an ID stored in the IC tag (for example 0001 is "warrior man," 0002 is "witch" and 0003 is "bard man") is printed on the IC card, by which the player is able to play the game following various effect patterns corresponding to the used IC card.

Also, in Embodiments 3 and 4, although the play history and the character level of each figure stored are stored in the IC tae of each figure, they may be stored in the storage area in associated with each figure ID.

In Embodiments 3 and 4, the notification effect of the bonus game is changed or modified depending on the types of figures 13A through 13C and the character levels thereof. However, effects other than notification of the bonus game may be changed or modified.

**Claims**

1. A gaming machine comprising:

    image display means for displaying an image;
    game control means for conducting a game with a plurality of game states including a base game state and a special game state in which more advantageous conditions are provided to a player than in the base game state;
    display control means for controlling the image displayed on the image display means depending on one of the game states in which the game is conducted by the game control means;
    an object to be read which stores predetermined identification information; and
    reading means for reading the identification information stored in the object to be read,
    wherein the display control means controls the image display means to display the image corresponding to the object to be read based on the identification information read by the reading means as the game state is shifted from the base game state to the special game state.

2. The gaming machine according to claim 1, further comprising:

    image storing means for storing a plurality of images corresponding to respective types of objects wherein the object to be read comprises the respective types of objects,
    image information selection means for selecting image information from other image information stored in the image storing means wherein the selected image information corresponds to the object to be read which stores the identification information having been read by the reading means,
    wherein the display control means controls the image display means to display the image based on the image information having been selected by the image information selection means.

3. The gaming machine according to claim 1 or 2, further comprising:

    variable display means for displaying variably a plurality of symbols in a plurality of arrays;
    stop control means for controlling the variable display means to display stopped symbols in the arrays; and
    awarding means for providing an award to the player when the symbols stopped and appearing in the arrays of the variable display means by the stop control means are in a predetermined winning combination;
    wherein a probability for the predetermined winning combination to be stopped by the stop control means and appear in the arrays is higher in the special game state than in the base game state.

4. A gaming machine comprising:

    image display means for displaying an image;
    display control means for controlling the image display means based on a game state;
    an object to be read which stores predetermined identification information,
    reading means for reading the identification information stored in the object to be read;
    history storing means for storing a play history of the object to be read;
    renewal means for renewing the play history stored in the history storing means based on a game progress;
    parameter storing means for storing a variable parameter corresponding to the object to be read; and
    parameter-varying means for varying the variable parameter in response to each of a plurality of levels based on the play history renewed by the renewal means,
    wherein the display control means controls the image display means to display the image corresponding to the object to be read and the variable parameter stored in the variable parameter storing means at a predetermined timing based on the identification information read by the reading means.

5. The gaming machine according to claim 4,
   wherein the object to be read comprises a plurality of types of objects;
   wherein the image corresponding to the object to be read and the variable parameter comprises a plurality of different kinds of images corresponding to each of the plurality of types of objects; and
   wherein the display control means controls the image display means to display the image corresponding to the object to be read which stores the identification information read by the reading mean, the image being selected from the plurality of different kinds of images.

6. The gaming machine according to claim 4 or 5, wherein the variable parameter to vary based on the play history has a different varying pattern for each type of object.

7. The gaming machine according to claim 4 or 5, further comprising: lottery means for drawing a lottery of the game, wherein the display control means controls the image display means to display the image corresponding to the object to be read and the variable parameter in a plurality of ways on a basis of a predetermined probability for each kind of image with a condition based on a level of the variable parameter and a lottery result of the lottery means.

8. The gaming machine according to claim 7, further comprising:

   variable display means for displaying variably a plurality of symbols in a plurality of arrays,
   stop control means for controlling the variable display means to display the symbols stopped in response to a lottery result of the lottery means; and
   awarding means for providing an award to the player when the symbols stopped by the stop control means and appearing in the plurality of arrays of the variable display means are in a predetermined winning combination,
   wherein the display control means controls the image display means to display the image corresponding to the object to be read and the variable parameter while the symbols are varyingly displayed in the plurality of arrays.

9. A gaming machine comprising:

   sound output means for outputting a sound;
   sound output control means for controlling the sound output means based on a game state;
   an object to be read which stores predetermined identification information;
   reading means for reading the identification information stored in the object to be read;
   history storing means for storing the play history of the object to be read;
   renewal means for renewing the play history stored in the history storing means based a game progress;
   parameter storing means for storing a variable parameter corresponding to the object to be read; and
   parameter varying means for varying the variable parameter in a plurality of levels based on the play history renewed by the renewal means,
   wherein the sound output control means controls the sound output means to output the sound corresponding to the object to be read and the variable parameter at a predetermined timing based on the identification information read by the reading means and the variable parameter stored in the variable parameter storing means.

10. The gaming machine according to claim 9,
    wherein the object to be read comprises a plurality of types of objects,
    wherein the sound corresponding to the object to be read and the variable parameter comprises a plurality of different sorts of sounds corresponding to the plurality of types of objects, and
    wherein the sound output control means controls the sound output means to output the sound corresponding to the object to be read which stores the identification information read by the reading means, the sound being selected from the plurality of different sorts of sounds.

11. The gaming machine according to claim 9 or 10, wherein the variable parameter to vary based on the play history has a different varying pattern for each type of object.

12. The gaming machine according to claim 9 or 10, further comprising: lottery means for drawing a lottery of the game, wherein the sound output control means controls the sound output means to output the sound corresponding to the object to be read and the variable parameter in a plurality of ways on a basis of a predetermined probability for each sort of sound with a condition based on a level of the variable parameter and a lottery result of the lottery means.

**13.** The gaming machine according to claim 9 or 10, further comprising:

variable display means for displaying variably a plurality of symbols in a plurality of arrays;
stop control means for controlling the variable display means to display the symbols stopped in response to a lottery result of the lottery means;
awarding means for providing an award to the player when the symbols stopped by the stop control means and appearing in the plurality of arrays of the variable display means are in a predetermined winning combination,
wherein the sound output control means controls the sound output means to output the sound corresponding to the object to be read and the variable parameter while the symbols are varyingly displayed in the plurality of arrays.

**14.** A gaming machine comprising:

sound storing means for storing sound information;
sound output means for outputting a sound for a player at a predetermined timing based on the sound information stored in the sound storing means;
sound control means for controlling the sound output means to output the sound based on a game state;
an object to be read which stores predetermined identification information; and
reading means for reading the identification information stored in the object to be read,
wherein the sound control means controls the sound output means to output the sound corresponding to the object to be read based on the identification information read by the reading means.

**15.** The gaming machine according to claim 14,
wherein the object to be read comprises a plurality of types of objects,
wherein the sound storing means stores sound information corresponding to each of the plurality of types of objects; and
wherein the sound control means selects the sound information form other sound information stored in the sound storing means wherein the selected sound information corresponds to the object to be read which stores the identification information having been read by the reading means.

**16.** The gaming machine according to claim 14 or 15, further comprising:

lottery means for drawing a lottery of the game,
wherein the sound control means controls the sound output means to output the sound corresponding to the object to be read based on a lottery result of the lottery means.

**17.** The gaming machine according to any one of claims 14 to 15,
wherein the object to be read comprises a storage medium attached to a member expressing a predetermined character and
wherein the sound corresponding to the object to be read is a sound associated with an appearance of the character.

**18.** The gaming machine according to claim 17, wherein the sound control means controls the sound output means to output the sound providing help information to assist the player with the game.

**19.** A gaming machine performing a game with a base game state and a special game state in which more advantageous condition is provided to a player based on identification information, the gaming machine comprising:

a reading device for reading the identification information from an object to be read which stores the identification information
a display device for displaying an image concerning the game,
wherein the image corresponding to the identification information is displayed on the display device at a predetermined timing.

**20.** The gaming machine according to claim 19, wherein the predetermined timing is just before the base game state is shifted to the special game state.

**21.** The gaming machine according to claim 19, wherein the predetermined timing is during a transient state from the base game state to the special game state.

22. The gaming machine according to claim 19, wherein the predetermined timing is just after the base game state is shifted to the special game state.

23. The gaming machine according to claim 19, further comprising:

a storage device for storing image information corresponding to the identification information,
wherein the identification information corresponds to an appearance of the object to be read; and
wherein the image of the image information is displayed as the image information is extracted from the storage device in association with the identification information.

24. The gaming machine according to claim 19,
wherein the display device comprises a variable display device including a plurality of arrays,
wherein an award is provided to the player based on a combination of symbols being stopped and appearing in the arrays in the base game state and in the special game state,
wherein the game is controlled such that a probability to provide the award in the special game state is higher than in the base state.

25. The gaming machine according to claim 19, further comprising:

a sound output device,
wherein the sound output device outputs a sound, the sound corresponding to the identification information.

26. The gaming machine according to claim 25,
wherein the outputted sound is associated with an appearance of the object to be read and includes help information to assist the player in the game.

27. The gaming machine according to claim 19,
wherein the object to be read stores a variable parameter,
wherein the reading device reads the variable parameter,
wherein the image display device displays the image corresponding to the identification information and the variable parameter, and
wherein the variable parameter varies independently from the appearance of the object to be read.

28. The gaming machine according to claim 27,
wherein the variable parameter is renewed as the game is terminated, and
wherein the reading device writes the renewed variable parameter on the object to be read.

29. The gaming machine according to claim 19,
wherein the reading device reads different identification information than the identification information corresponding to the object to be read from a different type of object to be read and
wherein the game is performed in a different manner based on the different identification information.

30. The gaming machine according to claim 28,
wherein the reading device reads the identification information having been unchanged by renewal and a changed variable parameter having been renewed in a previously performed game from the object to be read which stores the identification information and the changed variable parameter by renewal, and
wherein the game is performed in a different way based on the identification information and the changed variable parameter.

31. The gaming machine according to claim 30,
wherein a varying pattern of the variable parameter is formed by using the object to be read for the game for a plurality of times, and
wherein the varying pattern differs from a varying pattern of a different type of object to be read which stores different identification information.

32. The gaming machine according to claim 19,
wherein the display device displays a plurality of kinds of images corresponding to the identification information and having been determined by a lottery result at predetermined probabilities for the plurality of kinds of images, respectively.

33. The gaming machine according to claim 25,
wherein the sound output device outputs a plurality of sorts of sounds corresponding to the identification information and having been determined by a lottery result at predetermined probabilities for the plurality of sorts of sounds, respectively.

34. A gaming system comprising: a gaming machine performing a game with a base game state and a special state in which more advantageous condition is provided to a player; and an object to be read which provides predetermined condition to the game,
wherein the object to be read is set on the gaming machine,
wherein the object to be read stores identification information corresponding to an appearance of the object to be read,
wherein the gaming machine comprising:

   a reading device for reading the identification information from the object to be read; and
   a display device for displaying an image concerning the game,

wherein the image corresponding to the identification information is displayed on the display device at a predetermined timing.

35. The gaming system according to claim 34,
wherein the gaming machine comprises a sound generating device for generating a sound concerning the game;
wherein the sound corresponding to the identification information is generated from the sound generating device in synchronization with the displayed image.

36. The gaming system according to claim 34,
wherein the display device comprises a variable display device including a plurality of arrays,
wherein an award is provided to the player based on a combination of symbols being stopped and appearing in the arrays in the base game state and in the special game state,
wherein the game is controlled such that a probability to provide the award in the special game state is higher than in the base state.

37. The gaming system according to claim 36,
wherein the object to be read stores a variable parameter,
wherein the reading device reads the variable parameter from the object to be read;
wherein the variable parameter is renewed at an end of the game,
wherein the reading device operates as a writing device to write the renewed variable parameter on the object to be read; and
wherein the image displayed on the image display device at the predetermined timing corresponds to the variable parameter.

38. The gaming system according to claim 37,
wherein the variable parameter stored in the object to be read is renewed by being used with the gaming system; and
wherein the variable parameter shows a variable pattern corresponding to the identification information through the renewal.

39. The gaming system according to claim 38,
wherein the variable parameter comprises play history with a previous game;
wherein the play history is renewed independently from an appearance of the object to be read;
wherein the predetermined timing is when the game state is changed.

Fig. 1

| 211 | 221 | 231 | 241 | 251 |
| 212 | 222 | 232 | 242 | 252 |
| 213 | 223 | 233 | 243 | 253 |

21    22    23    24    25

Fig. 2

6

31    32    33

| COLLECT | GAME RULES |

34    35    36

| BET 1 PER LINE | BET 3 PER LINE | BET 5 PER LINE | WIN START FEATURE |
| PLAY 1 LINE | PLAY 5 LINES | PLAY 20 LINES | GAMBLE RESERVE |

37    38    39    40

Fig. 3

Fig. 4A

13B

91

92

90

93

Fig. 4B

93

| IC tag |
|---|
| Figure ID storage area |
| Play history storage area |
| ⋮ |

93A

93B

Fig. 5

Fig. 6

Fig. 7

# Fig. 8A　　　Fig. 8B　　　Fig. 8C

| 1st reel band /111 | |
|---|---|
| Code No. | Symbol |
| 00 | J |
| 01 | Q |
| 02 | LOBSTER |
| 03 | J |
| 04 | Q |
| 05 | CRAB |
| 06 | A |
| 07 | WORM |
| 08 | K |
| 09 | FISH |
| 10 | PUNK |
| 11 | Q |
| 12 | SHARK |
| 13 | WILD |
| 14 | K |
| 15 | A |
| 16 | OCTOPUS |
| 17 | J |
| 18 | Q |
| 19 | FISH |
| 20 | K |
| 21 | J |
| 22 | SARDINE |
| 23 | CRAB |
| 24 | WILD |
| 25 | WORM |
| 26 | Q |
| 27 | CRAB |
| 28 | A |
| 29 | FISH |

| 2nd reel band /112 | |
|---|---|
| Code No. | Symbol |
| 00 | OCTOPUS |
| 01 | A |
| 02 | LOBSTER |
| 03 | OCTOPUS |
| 04 | K |
| 05 | WILD |
| 06 | FISH |
| 07 | WORM |
| 08 | J |
| 09 | CRAB |
| 10 | OCTOPUS |
| 11 | A |
| 12 | SARDINE |
| 13 | WORM |
| 14 | J |
| 15 | OCTOPUS |
| 16 | SHARK |
| 17 | J |
| 18 | OCTOPUS |
| 19 | CRAB |
| 20 | Q |
| 21 | PUNK |
| 22 | CRAB |
| 23 | WILD |
| 24 | J |
| 25 | WORM |
| 26 | CRAB |
| 27 | K |
| 28 | OCTOPUS |
| 29 | WORM |

| 3rd reel band /113 | |
|---|---|
| Code No. | Symbol |
| 00 | A |
| 01 | K |
| 02 | LOBSTER |
| 03 | WORM |
| 04 | Q |
| 05 | LOBSTER |
| 06 | PUNK |
| 07 | A |
| 08 | J |
| 09 | SARDINE |
| 10 | WILD |
| 11 | Q |
| 12 | WORM |
| 13 | K |
| 14 | FISH |
| 15 | Q |
| 16 | CRAB |
| 17 | A |
| 18 | WILD |
| 19 | SHARK |
| 20 | Q |
| 21 | K |
| 22 | OCTOPUS |
| 23 | Q |
| 24 | A |
| 25 | WORM |
| 26 | J |
| 27 | Q |
| 28 | PUNK |
| 29 | K |

# Fig. 8D

## 4th reel band /114

| Code No. | Symbol |
|---|---|
| 00 | Q |
| 01 | J |
| 02 | LOBSTER |
| 03 | Q |
| 04 | WILD |
| 05 | LOBSTER |
| 06 | A |
| 07 | K |
| 08 | SARDINE |
| 09 | A |
| 10 | K |
| 11 | CRAB |
| 12 | PUNK |
| 13 | K |
| 14 | SHARK |
| 15 | WORM |
| 16 | A |
| 17 | OCTOPUS |
| 18 | FISH |
| 19 | K |
| 20 | WILD |
| 21 | PUNK |
| 22 | A |
| 23 | FISH |
| 24 | CRAB |
| 25 | K |
| 26 | Q |
| 27 | OCTOPUS |
| 28 | WORM |
| 29 | Q |

# Fig. 8E

## 5th reel band /115

| Code No. | Symbol |
|---|---|
| 00 | J |
| 01 | A |
| 02 | LOBSTER |
| 03 | J |
| 04 | A |
| 05 | FISH |
| 06 | CRAB |
| 07 | PUNK |
| 08 | K |
| 09 | SARDINE |
| 10 | Q |
| 11 | CRAB |
| 12 | K |
| 13 | WORM |
| 14 | FISH |
| 15 | WILD |
| 16 | OCTOPUS |
| 17 | Q |
| 18 | WORM |
| 19 | J |
| 20 | Q |
| 21 | OCTOPUS |
| 22 | A |
| 23 | PUNK |
| 24 | WORM |
| 25 | Q |
| 26 | CRAB |
| 27 | WILD |
| 28 | K |
| 29 | OCTOPUS |

Fig. 9

74

Liquid crystal display driving circuit

81
Program ROM

82
Image ROM

86
Video RAM

From CPU 50

83
Image control CPU

85
VDP

To Upper liquid crystal display 3

To Lower liquid crystal display 4

84
Work RAM

Fig. 10

51

| | ROM | |
|---|---|---|
| | Symbol lottery table | ~51A |
| | Payout table | ~51B |
| | Sound data storage area | ~51C |
| | ⋮ | |

Fig. 11

51B

| | 2K | 3K | 4K | 5K | |
|---|---|---|---|---|---|
| LOBSTER | 10 | 320 | 2500 | 6000 | Left→Right |
| SHARK | 3 | 25 | 150 | 1000 | Left→Right |
| FISH | 2 | 15 | 120 | 500 | Left→Right |
| PUNK | 2 | 10 | 120 | 400 | Left→Right |
| OCTOPUS | 2 | 8 | 50 | 300 | Left→Right |
| CRAB | | 7 | 50 | 200 | Left→Right |
| WORM | | 6 | 40 | 150 | Left→Right |
| A | | 5 | 25 | 120 | Left→Right |
| K | | 5 | 25 | 120 | Left→Right |
| Q | | 5 | 20 | 100 | Left→Right |
| J | | 5 | 20 | 100 | Left→Right |
| SARDINE | 2 | 5 | 10 | 125 | SCATTER/Trigger |

∗ If "WILD" is in 5K, shifted to high probability mode.

Fig. 12

Base mode

116    111  112  113  114  115

21  22  23  24  25

4

Fig. 13A

High probability mode

116    111  112  113  114  115

21  22  23  24  25

4

Fig. 13B

/116

| 6th reel band | |
|---|---|
| Code No. | Symbol |
| 00 | J |
| 01 | Q |
| 02 | LOBSTER |
| 03 | WILD |
| 04 | Q |
| 05 | CRAB |
| 06 | A |
| 07 | WORM |
| 08 | K |
| 09 | FISH |
| 10 | PUNK |
| 11 | Q |
| 12 | SHARK |
| 13 | WILD |
| 14 | K |
| 15 | A |
| 16 | OCTOPUS |
| 17 | SARDINE |
| 18 | Q |
| 19 | WILD |
| 20 | K |
| 21 | J |
| 22 | SARDINE |
| 23 | CRAB |
| 24 | WILD |
| 25 | WORM |
| 26 | Q |
| 27 | SARDINE |
| 28 | A |
| 29 | FISH |

Fig. 14

Fig. 15A

Fig. 15B

| Payout |
|--------|
| 100 |
| 50 |
| 30 |
| 20 |
| 10 |
| — ☠ (Terminate bonus game) |

# Fig. 16

Examples of voice output in bonus game

| ID | Character | Contents of generated voice |
|------|-----------|------------------------------|
| 0001 | Warrior man | "Smell of treasures comes from the treasure box on the right." |
| 0002 | Witch | "It may be good to select the box on the right." |
| 0003 | Female fortune teller | "I Feel some strong force from the right side." |

# Fig. 17

Notification effect at timing of shifting to high probability mode

| ID | Character | Effect image | Contents of generated voice |
|------|-----------|--------------|------------------------------|
| 0001 | Warrior man | Pattern A | "Now is the chance. Go!" |
| 0002 | Witch | Pattern B | "Now is the chance. Do your best!" |
| 0003 | Female fortune teller | Pattern C | "It is time to show your power!" |

# Fig. 18

Notification effect at timing of shifting to bonus game

| ID | Character | Effect image | Contents of generated voice |
|---|---|---|---|
| 0001 | Warrior man | Pattern D | "Psyche yourself up!" |
| 0002 | Witch | Pattern E | "I am rooting for you." |
| 0003 | Female fortune teller | Pattern F | "I wish you good luck." |

Fig. 19

Start

S1 Start acceptance process

S2 Lottery process

S3 Base game process

S4 Bonus game trigger established?

Yes → S5 Bonus game process

No

End

Fig. 20

Start acceptance
process

S11

Predetermined
time elapsed? — No

S12 — Yes

Demo effect process

S13

Play button etc.
depressed? — No

S14 — Yes

Figure
used? — No

S15 — Yes

Figure data
reading process

S16

Effect pattern
specification process

Return

Fig. 21

Lottery process

S21

Symbol determination process

S22

Winning combination determination process

Return

Fig. 22

```
         ╭─────────────────────────╮
         │   Base game process     │
         ╰─────────────────────────╯
                      │
                      ▼
S31  ┌─────────────────────────────────┐
     │     Symbol varying process      │
     └─────────────────────────────────┘
                      │
                      ▼
S32  ┌─────────────────────────────────┐
     │      Stop control process       │
     └─────────────────────────────────┘
                      │
                      ▼
S33  ┌─────────────────────────────────┐
     │        Payout process           │
     └─────────────────────────────────┘
                      │
                      ▼
S34  ┌─────────────────────────────────┐
     ║  High probability mode          ║
     ║    switching process            ║
     └─────────────────────────────────┘
                      │
                      ▼
         ╭─────────────────────────╮
         │        Return           │
         ╰─────────────────────────╯
```

Fig. 23

```
                    ┌─────────────────────┐
                    │  Bonus game process │
                    └──────────┬──────────┘
                               │
        S41                    ▼
                        ╱─────────────╲         No
                       ╱    Figure     ╲─────────────┐
                       ╲    used?      ╱              │
                        ╲─────────────╱               │
        S42            Yes  │                         │
                            ▼                         │
                  ┌──────────────────┐                │
                  │   Bonus game     │                │
                  │ notification     │                │
                  │ effect process   │                │
                  └────────┬─────────┘                │
        S43                │◄───────────────────────────┘
                           ▼
                  ┌──────────────────┐
                  │ Bonus game       │
                  │ lottery process  │
        S44       └────────┬─────────┘
                           ▼
                  ┌──────────────────┐
                  │ Display of bonus │
                  │ game image       │
                  └────────┬─────────┘
        S45                ▼
                    ╱─────────────╲      No
                   ╱    Figure     ╲──────────┐
                   ╲    used?      ╱          │
                    ╲─────────────╱           │
        S46        Yes  │                     │
                        ▼                     │
               ┌──────────────────┐           │
               │ Output hint voice│           │
               └──────────────────┘           │
```

```
                    ┌──────────────────────────┐
                    ▼                           │
              ╱─────────────╲    S47            │
             ╱  Select from  ╲─────── No ───────┼──►
             ╲   options?    ╱                  │
              ╲─────────────╱                   │
             Yes  │                             │
                  ▼          S48                │
         ┌──────────────────┐                   │
         │  Display payout  │                   │
         └────────┬─────────┘                   │
                  ▼          S49                 │
         ┌──────────────────┐                   │
         │  Payout process  │                   │
         └────────┬─────────┘                   │
                  ▼          S50                 │
            ╱─────────────╲         No           │
           ╱  Bonus game   ╲──────────────────────┘
           ╲  terminated?  ╱
            ╲─────────────╱
           Yes  │
                ▼          S51
       ┌──────────────────┐
       │ Display symbols  │
       │   in arrays      │
       └────────┬─────────┘
                ▼
         ┌─────────────┐
         │   Return    │
         └─────────────┘
```

Fig. 24

60

High probability mode
switching process

S61

High probability
mode?

No

Yes

S62

High probability
mode shift trigger
won?

No

Yes

S66

Terminating
condition met?

No

S63

Shift to high
probability mode

Yes

S64

Figure used?

No

S67

Terminate high
probability mode

Yes

S65

High probability
mode notification
effect process

Return

Fig. 25

Fig. 26

Fig. 27

Fig. 28

Fig. 29

Lottery process

S71

Winning combination
lottery process

Return

Fig. 30

Base mode

51E

| Winning combination | Random number |
|---|---|
| Bonus game trigger | 0~49 |
| LOBSTER × 5 | 50~51 |
| SHARK × 5 | 52~57 |
| FISH × 5 | 58~97 |
| PUNK × 5 | 98~177 |
| OCTOPUS × 5 | 178~277 |
| CRAB × 5 | 278~477 |
| WORM × 5 | 478~777 |
| A × 5 | 778~1177 |
| K × 5 | 1178~1577 |
| Q × 5 | 1578~1977 |
| J × 5 | 1978~2377 |
| SARDINE × 3 | 2378~2577 |
| High probability mode trigger | 2578~2877 |
| Lost | 2878~11999 |

Fig. 31

## High probability mode

51F

| Winning combination | Random number |
|---|---|
| Bonus game trigger | 0～74 |
| LOBSTER×5 | 75～77 |
| SHARK×5 | 78～86 |
| FISH×5 | 87～146 |
| PUNK×5 | 147～266 |
| OCTOPUS×5 | 267～416 |
| CRAB×5 | 417～716 |
| WORM×5 | 717～1016 |
| A×5 | 1017～1616 |
| K×5 | 1617～2216 |
| Q×5 | 2217～2816 |
| J×5 | 2817～3416 |
| SARDINE×3 | 3417～3616 |
| Lost | 3617～11999 |

Fig. 32

93

| IC tag | |
|---|---|
| Figure ID storage area | ~93A |
| Play history storage area | ~93B |
| Character level storage area | ~93C |
| ⋮ | |

Fig. 33

51

| ROM | |
|---|---|
| Symbol lottery table | ~51A |
| Payout table | ~51B |
| Notification effect selection table | ~51C |
| Notification effect occurrence table | ~51D |
| Sound data storage area | ~51E |
| ⋮ | |

Fig. 34

51B

| | 2K | 3K | 4K | 5K | |
|---|---|---|---|---|---|
| LOBSTER | 10 | 320 | 2500 | 6000 | Left→Right |
| SHARK | 3 | 25 | 150 | 1000 | Left→Right |
| FISH | 2 | 15 | 120 | 500 | Left→Right |
| PUNK | 2 | 10 | 120 | 400 | Left→Right |
| OCTOPUS | 2 | 8 | 50 | 300 | Left→Right |
| CRAB | | 7 | 50 | 200 | Left→Right |
| WORM | | 6 | 40 | 150 | Left→Right |
| A | | 5 | 25 | 120 | Left→Right |
| K | | 5 | 25 | 120 | Left→Right |
| Q | | 5 | 20 | 100 | Left→Right |
| J | | 5 | 20 | 100 | Left→Right |
| SARDINE | 2 | 5 | 10 | 125 | SCATTER/Trigger |

# Fig. 35

Character level grow pattern based on number of times being used

| ID | Character | Level 1 | level 2 | level 3 | Level 4 |
|---|---|---|---|---|---|
| 0001 | Warrior man | $0 \leqq n < 30$ | $30 \leqq n$ | ----- | ----- |
| 0002 | Witch | $0 \leqq n < 50$ | $50 \leqq n < 100$ | $100 \leqq n$ | ----- |
| 0003 | Bard man | $0 \leqq n < 100$ | $100 \leqq n < 200$ | $200 \leqq n < 300$ | $300 \leqq n$ |

(n: number of times being used)

# Fig. 36

## Notification effect selection table

| ID | Character | Level 1 | level 2 | level 3 | Level 4 |
|------|------------|-----------|-----------|-----------|-----------|
| 0001 | Warrior man | Pattern A | Pattern B | ——— | ——— |
| 0002 | Witch | Pattern C | Pattern D | Pattern E | ——— |
| 0003 | Bard man | Pattern F | Pattern G | Pattern H | Pattern I |
| Without figure | | Pattern J | | | |

Fig. 37

Notification effect occurrence table                51D

| Lottery result | With/out Figure | Random number (0~9) | | | | Effect Y/N |
|------|------|---------|---------|---------|---------|------|
| | | Level 1 | Level 2 | Level 3 | Level 4 | |
| Bonus game | With Figure | 0~2 | 0~3 | 0~5 | 0~7 | Yes |
| | | 3~9 | 4~9 | 6~9 | 8~9 | No |
| | Without Figure | 0 | | | | Yes |
| | | 1~9 | | | | No |
| Other than bonus game | With Figure | 0~4 | 0~3 | 0~2 | 0 | Yes |
| | | 5~9 | 4~9 | 3~9 | 1~9 | No |
| | Without Figure | 0~4 | | | | Yes |
| | | 5~9 | | | | No |

Fig. 38

Reliability of notification effect

| | Level 1 | Level 2 | Level 3 | Level 4 |
|---|---|---|---|---|
| With Figure | 38% | 50% | 67% | 89% |
| Without Figure | 17% | | | |

Fig. 39

Start

S1 → Start acceptance process

S2 → Lottery process

S3 → Base game process

S4 → Bonus game trigger established?

No → S5 → Bonus game process

Yes

S6 → Renewal process

End

Fig. 40

```
        ┌──────────────────────┐
        │   Start acceptance    │
        │      process          │
        └──────────────────────┘
                   │
                   ▼
S11              ◇
          Predetermined        No
          time elapsed?  ─────────┐
                 │                 │
               Yes                 │
S12              ▼                 │
        ┌──────────────────────┐  │
        │  Demo effect process │  │
        └──────────────────────┘  │
                   │               │
S13                ▼               │
                 ◇                 │
           Play button        No   │
           depressed?  ───────────┤
                 │                 │
               Yes                 │
S14              ▼                 │
                 ◇                 │
            Figure used?      No   │
                 │  ──────────┐    │
               Yes            │    │
S15              ▼            │    │
        ┌──────────────────┐ │    │
        │   Figure data    │ │    │
        │  reading process │ │    │
        └──────────────────┘ │    │
S17                │         │    │
                   ▼         │    │
        ┌──────────────────┐ │    │
        │ Figure specifying│ │    │
        │     process      │ │    │
        └──────────────────┘ │    │
                   │◄─────────┘    │
                   ▼               │
        ┌──────────────────┐       │
        │      Return      │       │
        └──────────────────┘       │
```

Fig. 41

Base game process

S31 — Symbol varying process

S31A — Notification effect process

S32 — Stop control process

S33 — Payout process

Return

Fig. 42

Notification effect
process

S141 ── Aquire random number

S142 ── notification effect
to occur?

No

Yes

S143 ── Select effect pattern

S144 ── Display image &
output sound

Return

Fig. 43

```
                    ┌─────────────────────────┐
                    │   Bonus game process    │
                    └─────────────────────────┘
                                 │
                                 ▼
S151 ──────────────┌─────────────────────────┐
                   │  Determine bonus game    │
                   │       number T           │
                   └─────────────────────────┘
                                 │
S152 ──────────────              ▼ ◀──────────────────────┐
                   ┌─────────────────────────┐            │
                   │  Symbol determination    │            │
                   │   process in bonus game  │            │
                   └─────────────────────────┘            │
S153 ──────────────              │                        │
                                 ▼                        │
                   ┌─────────────────────────┐            │
                   │  Wining combination      │            │
                   │  deteremination process  │            │
                   │      in bonus game       │            │
                   └─────────────────────────┘            │
S154 ──────────────              │                        │
                                 ▼                        │
                          ╱──────────────╲                │
                         ╱  Bonus game     ╲   No          │
                         ╲  trigger won?    ╱────────┐     │
                          ╲──────────────╱           │     │
S155 ──────────────           │ Yes                  │     │
                              ▼                       │     │
                   ┌─────────────────────────┐        │     │
                   │    Game No. T=T+t        │        │     │
                   └─────────────────────────┘        │     │
S156 ──────────────              │ ◀──────────────────┘     │
                                 ▼                          │
                   ┌─────────────────────────┐             │
                   │   Symbol varying process │             │
                   └─────────────────────────┘             │
S157 ──────────────              │                          │
                                 ▼                          │
                   ┌─────────────────────────┐             │
                   │   Stop control process   │             │
                   └─────────────────────────┘             │
S158 ──────────────              │                          │
                                 ▼                          │
                   ┌─────────────────────────┐             │
                   │      Payout process      │             │
                   └─────────────────────────┘             │
S159 ──────────────              │                          │
                                 ▼                          │
                   ┌─────────────────────────┐             │
                   │    Game No. T=T-1        │             │
                   └─────────────────────────┘             │
S160 ──────────────              │                          │
                                 ▼                          │
                          ╱──────────────╲    No            │
                         ╱  Game No. T=0 ? ╲────────────────┘
                          ╲──────────────╱
                              │ Yes
                              ▼
                    ┌─────────────────────────┐
                    │        Return           │
                    └─────────────────────────┘
```

Fig. 44

Play history
renewal process

S161

Figure used?    No

Yes

S162

Read number (n) of use

S163

n = n + 1

S164

Renew play history

S165

Number (n) reaches
predetermined value?    No

Yes

S166

Increase character level

Return

Fig. 45

Fig. 46

Fig. 47

Fig. 48

Fig. 49

Fig. 50

Fig. 51

51F'

| Wining Combination | Random Number |
|---|---|
| Bonus Game Trigger | 0~49 |
| LOBSTER×5 | 50~51 |
| SHARK×5 | 52~57 |
| FISH×5 | 58~97 |
| PUNK×5 | 98~177 |
| OCTOPUS×5 | 178~277 |
| CRAB×5 | 278~477 |
| WORM×5 | 478~777 |
| A×5 | 778~1177 |
| K×5 | 1178~1577 |
| Q×5 | 1578~1977 |
| J×5 | 1978~2377 |
| SARDINE×3 | 2378~2577 |
| LOST | 2578~11999 |

Fig. 52

**European Patent Office**

## EUROPEAN SEARCH REPORT

Application Number

EP 05 25 7272

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/025828 A (ACRES GAMING INCORPORATED) 27 March 2003 (2003-03-27)<br>* abstract *<br>* page 3, line 15 - line 22 *<br>* page 4, line 4 - line 18 *<br>* page 13, line 20 - line 28 *<br>----- | 1-39 | G07F17/32 |
| A | GB 2 334 456 A (* RARE LIMITED) 25 August 1999 (1999-08-25)<br>* abstract; figures 1-6 *<br>----- | 1-39 | |
| A | EP 1 367 551 A (ARUZE CO., LTD) 3 December 2003 (2003-12-03)<br>* abstract; figures 3a,3b *<br>* column 3, line 10 - line 15 *<br>* column 4, line 10 - line 18 *<br>----- | 1-39 | |
| | | | TECHNICAL FIELDS SEARCHED (IPC)<br><br>G07F |

The present search report has been drawn up for all claims

| Place of search | Date of completion of the search | Examiner |
|---|---|---|
| The Hague | 24 March 2006 | Verhoef, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 25 7272

This annex lists the patent family members relating to the patent documents cited in  the above-mentioned European search report.
The members are as contained in the European Patent Office EDP file on
The European Patent Office is in no way liable for these particulars which are merely  given for the purpose of information.

24-03-2006

| Patent document cited in search report | | Publication date | Patent family member(s) | | Publication date |
|---|---|---|---|---|---|
| WO 03025828 | A | 27-03-2003 | CA | 2428028 A1 | 27-03-2003 |
| | | | GB | 2397403 A | 21-07-2004 |
| | | | ZA | 200301780 A | 08-09-2004 |
| GB 2334456 | A | 25-08-1999 | GB | 2334457 A | 25-08-1999 |
| EP 1367551 | A | 03-12-2003 | AU | 2003204486 A1 | 18-12-2003 |
| | | | JP | 2003340152 A | 02-12-2003 |
| | | | US | 2003232646 A1 | 18-12-2003 |
| | | | ZA | 200304205 A | 02-03-2004 |

EPO FORM P0459

For more details about this annex : see Official Journal of the European Patent Office, No. 12/82